(19) Europäisches Patentamt
European Patent Office
Office européen des brevets

(11) EP 3 470 461 A1

(12) # EUROPEAN PATENT APPLICATION
published in accordance with Art. 153(4) EPC

(43) Date of publication:
**17.04.2019 Bulletin 2019/16**

(21) Application number: **17810389.1**

(22) Date of filing: **08.06.2017**

(51) Int Cl.:
***C08L 23/00*** *(2006.01)* ***B60R 21/215*** *(2011.01)*
***C08K 3/00*** *(2018.01)* ***C08L 23/08*** *(2006.01)*

(86) International application number:
**PCT/JP2017/021302**

(87) International publication number:
**WO 2017/213216 (14.12.2017 Gazette 2017/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.06.2016 JP 2016114758**
**22.07.2016 JP 2016144179**

(71) Applicant: **Mitsui Chemicals, Inc.**
**Minato-ku**
**Tokyo 105-7122 (JP)**

(72) Inventors:
- **SASAKI Masatoshi**
**Sodegaura-shi**
**Chiba 299-0265 (JP)**
- **KURITA Hayato**
**Sodegaura-shi**
**Chiba 299-0265 (JP)**
- **MATSUGI Tomoaki**
**Tokyo 105-7122 (JP)**
- **YANAGIMOTO Yasushi**
**Sodegaura-shi**
**Chiba 299-0265 (JP)**
- **NAKAMURA Tatsuya**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(54) **THERMOPLASTIC ELASTOMER COMPOSITION, METHOD FOR PRODUCING SAME AND MOLDED BODY**

(57) The present invention relates to a thermoplastic elastomer composition, a method for producing the same, and a molded article, the composition including: a crystalline olefin resin (A) having a melting point of 100°C or more; an olefin resin (B) satisfying requirements (B-1) to (B-3); and an ethylene/α-olefin copolymer (C), wherein the weight ratio of (A)/((B) + (C)) is from 70/30 to 30/70, and the weight ratio of (B) / (C) is from 100/0 to 1/99: (B-1) the resin (B) has a main chain composed of an ethylene copolymer and a side chain composed of an ethylene polymer or a propylene polymer, the ethylene copolymer includes repeating units derived from ethylene and repeating units derived from at least one α-olefin selected from α-olefins having from 3 to 20 carbon atoms, and the repeating units derived from the α-olefin are contained within the range of from 10 to 50 mol% with respect to the total repeating units contained in the main chain; (B-2) the melting point as measured by DSC is from 60°C to 170°C; and (B-3) Tg as measured by DSC is from -80°C to -30°C.

EP 3 470 461 A1

## Description

### Technical Field

The present invention relates to a thermoplastic elastomer composition, a method for producing the same, and a molded article.

### Background Art

Olefin thermoplastic elastomer compositions are used as materials having excellent moldability and appropriate flexibility/rubber elasticity in a variety of fields involving, for example, convenience goods, kitchenware, home appliances, machinery parts, electrical parts and automobile parts, and, for example, the raw material composition and the blending ratio are adjusted depending on required performance.

With the recent expanding applications, even the olefin thermoplastic elastomer composition is required to exhibit advanced properties as an elastomer in an environment with a wide range of temperatures. In particular, there is an increasing social demand for the olefin thermoplastic elastomer composition in applications requiring the strictly guaranteed operation in a low-temperature environment.

For example, an automobile interior material that is formed into a cover of an air bag system must be a material which is easily broken by the pressure of the airbag without being scattered in the form of debris which may hurt passengers and must allow the airbag to be expandable with certainty. Therefore, as an elastomer composition used in the airbag cover, a composition having improved elastomer properties such as impact resistance and elongation even at low temperatures is required.

For example, Patent Literature 1 and 2 disclose an airbag cover made of an olefin and/or a styrene thermoplastic elastomer.

In addition, Patent Literature 3 to 5 suggest an olefin thermoplastic elastomer having impact resistance at low temperatures for airbag covers.

### Citation List

#### Patent Literature

Patent Literature 1: JP-A No. H4-314648 A
Patent Literature 2: JP-A No. H6-156178 A
Patent Literature 3: JP-A No. H10-279745 A
Patent Literature 4: JP-A No. 2004-285237 A
Patent Literature 5: WO 2014/46139 A

### Summary of Invention

#### Technical Problem

However, it has been found that in the case of the formulation to ensure necessary rigidity for practical use, the airbag covers disclosed in Patent Literature 1 and 2 might be scattered in the form of debris when the airbag is activated because the impact resistance strength at low temperatures is low, which is problematic in terms of safety. In addition, in the case of reduced rigidity for the improvement of the texture and low-temperature impact resistance, the airbag covers wear easily and have poor scratch resistance. It was therefore found that it is necessary, for example, to apply a coating on the surface for the practical use.

The olefin thermoplastic elastomers disclosed in Patent Literature 3 to 5 are also disadvantageous in that they have poor elongation at low temperatures or impact resistance. It was found that airbag covers using such elastomers cannot completely prevent the covers from being scattered due to abnormal destruction within a wide range of temperatures ranging from low to high temperatures .

Airbag covers are designed to be broken and opened from the tear line (groove-like thin wall portion) when unfolded. In case where the elongation of the airbag cover is reduced particularly in a low-temperature environment, fragments of the airbag cover are likely to be scattered away from the body, which might hurt passengers. Therefore, it is desirable for the thermoplastic elastomer used in the airbag cover to have excellent elongation and impact resistance at low temperatures.

In one embodiment of the present invention, a thermoplastic elastomer composition and a molded article thereof, which have excellent elongation and impact resistance, and in particular, excellent elongation and impact resistance at low temperatures, are provided. In one embodiment of the present invention, a shatterproof airbag cover resistant to abnormal destruction within a wide range of temperatures ranging from low to high temperatures is provided by using the thermoplastic elastomer composition.

Solution to Problem

The present inventors have made intensive studies to solve the above mentioned problems. As a result, they have found that the problems can be solved by the following configuration examples. This has led to the completion of the present invention.

Configuration examples of the present invention are as follows.

[1] A thermoplastic elastomer composition, comprising:

a crystalline olefin resin (A) having a melting point of 100°C or more;
an olefin resin (B) satisfying the following requirements (B-1) to (B-3); and
an ethylene/α-olefin copolymer (C),
wherein the weight ratio of the resin (B)/the copolymer (C) is from 100/0 to 1/99, and
the weight ratio of the resin (A)/(the resin (B) + the copolymer (C)) is from 70/30 to 30/70:

(B-1) the resin (B) comprises a grafted polymer [GP] having a main chain (MC) composed of an ethylene copolymer and a side chain (SC) composed of an olefin polymer and satisfying the following requirements (i) and (ii):

(i) the ethylene copolymer constituting the main chain (MC) comprises repeating units derived from ethylene and repeating units derived from at least one α-olefin selected from α-olefins having from 3 to 20 carbon atoms, and the repeating units derived from the α-olefin are contained within the range of from 10 to 50 mol% with respect to the total repeating units contained in the main chain (MC), and
(ii) the side chain (SC) is at least one selected from a side chain (SE) composed of an ethylene polymer and a side chain (SP) composed of a propylene polymer;

(B-2) the melting point as measured by differential scanning calorimetry is within the range of from 60°C to 170°C; and
(B-3) the glass transition temperature as measured by differential scanning calorimetry is within the range of -80°C to -30°C.

[2] The thermoplastic elastomer composition according to [1], which has a flexural modulus of 650 MPa or less as measured in accordance with ASTM D790.
[3] The thermoplastic elastomer composition according to [1] or [2], which comprises 5 parts by weight or less of a filler (E) with respect to a total amount of 100 parts by weight of the crystalline olefin resin (A), the olefin resin (B), and the ethylene/α-olefin copolymer (C).
[4] The thermoplastic elastomer composition according to any one of [1] to [3], wherein the melt flow rate of the crystalline olefin resin (A) as measured at 230°C with a load of 2.16 kg in accordance with ISO1133 is from 0.1 to 500 g/10 min.
[5] The thermoplastic elastomer composition according to any one of [1] to [4], wherein the side chain (SC) of the grafted polymer [GP] is the side chain (SE) composed with an ethylene polymer,
the side chain (SE) comprises repeating units derived from ethylene and, as required, repeating units derived from at least one selected from α-olefins having from 3 to 20 carbon atoms, and the content of the units derived from ethylene is within the range of 95 to 100 mol% with respect to the total repeating units contained in the side chain (SE).
[6] The thermoplastic elastomer composition according to any one of [1] to [5], wherein the olefin resin (B) has a melting peak within the range of 60°C to 130°C as measured by differential scanning calorimetry and a heat of fusion ΔH of 5 to 100 J/g at the melting peak.
[7] The thermoplastic elastomer composition according to any one of [1] to [6], wherein the olefin resin (B) has an E value of 45 wt% or less which is a ratio of an orthodichlorobenzene-soluble component at 20°C or less as measured by cross fractionation chromatography.
[8] The thermoplastic elastomer composition according to any one of [1] to [7], wherein the olefin resin (B) has an intrinsic viscosity of 0.1 to 12 dl/g as measured in decalin at 135°C.

[9] The thermoplastic elastomer composition according to any one of [1] to [8], wherein the ethylene polymer constituting the side chain (SE) has a weight average molecular weight of 500 to 30000.

[10] The thermoplastic elastomer composition according to any one of [1] to [9], wherein side chains of the grafted polymer [GP] exist at an average frequency of 0.5 to 20 side chains per 1000 carbon atoms in the polymer molecular chain of the main chain.

[11] The thermoplastic elastomer composition according to any one of [1] to [10], wherein the olefin resin (B) satisfies the following requirement (B-7):

(B-7) when the melt flow rate of the olefin resin (B) as measured at 190°C with a load of 2.16 kg in accordance with ASTM D1238E is determined to be M (g/10 min) and the intrinsic viscosity of the olefin resin (B) as measured in decalin at 135°C is determined to be H (dl/g), a value A represented by the following relational equation (Eq-1) is within the range of 30 to 280:

$$A = M/\exp(-3.3H) \quad (Eq\text{-}1).$$

[12] The thermoplastic elastomer composition according to any one of [1] to [11], wherein the melt flow rate of the ethylene/α-olefin copolymer (C) as measured at 190°C with a load of 2.16 kg in accordance with ASTM D1238E is from 0.01 to 50 g/10 min.

[13] A method for producing the thermoplastic elastomer composition according to any one of [1] to [12], comprising a step of dynamically heat-treating a mixture comprising the resin (A), the resin (B), and the copolymer (C) such that the weight ratio of the resin (A) / (the resin (B) + the copolymer (C)) is from 70/30 to 30/70 in the absence of a cross-linking agent.

[14] A molded article, comprising the thermoplastic elastomer composition according to any one of [1] to [12].

[15] An automobile part, comprising the thermoplastic elastomer composition according to any one of [1] to [12].

[16] An automobile interior skin material, comprising the thermoplastic elastomer composition according to any one of [1] to [12] .

[17] An automobile airbag cover, comprising the thermoplastic elastomer composition according to any one of [1] to [12] .

[18] A thermoplastic elastomer composition, comprising:

a crystalline olefin resin (A) having a melting point of 100°C or more;
an olefin resin (B) having structural units derived from ethylene and structural units derived from at least one selected from α-olefins having from 3 to 20 carbon atoms, a glass transition temperature of -110°C to -20°C, and a melt flow rate as measured in accordance with ASTM D1238E at 190°C with a load of 2.16kg of 0.1 to 10 g/10 min; and
an ethylene/α-olefin copolymer (C),
wherein the weight ratio of the resin (B)/the copolymer (C) is from 100/0 to 1/99, and
the weight ratio of the resin (A)/(the resin (B) + the copolymer (C)) is from 70/30 to 30/70,and
wherein the thermoplastic elastomer composition has a flexural modulus as measured in accordance with ASTM D790 of 200 to 1000 MPa and a tensile elongation at break at -40°C as measured in accordance with JIS K6251 of 50% to 600%.

[19] An automobile interior skin material or an automobile airbag cover, comprising the thermoplastic elastomer composition according to [18].

## Advantageous Effects of Invention

According to the thermoplastic elastomer composition in one embodiment of the present invention, a molded article having excellent mechanical physical properties such as rigidity and excellent impact resistance and elongation at break at low temperatures can be obtained. Examples of the molded article include automobile parts used for interior or exterior of automobile, for example, automobile interior parts such as an automobile interior skin material and an automobile airbag cover and automobile exterior parts such as a mud guard, a spoiler lip, and a fender liner from the viewpoint that, for example, the above mentioned effects become more advantageous.

Description of Embodiments

<<Thermoplastic elastomer composition>>

The thermoplastic elastomer composition 1 according to one embodiment of the present invention (hereinafter also referred to as "composition 1") comprises:

(A) a crystalline olefin resin having a melting point of 100°C or more (hereinafter also referred to as "resin (A)");
(B) an olefin resin satisfying the following requirements (B-1) to (B-3) (hereinafter also referred to as "resin (B1)"); and
(C) an ethylene/α-olefin (having 3 or more carbon atoms) copolymer (hereinafter also referred to as "copolymer (C)"),
wherein the weight ratio of the resin (B1)/the copolymer (C) is from 100/0 to 1/99, and
the weight ratio of the resin (A)/(the resin (B1) + the copolymer (C)) is from 70/30 to 30/70.

The thermoplastic elastomer composition 2 according to one embodiment of the present invention (hereinafter also referred to as "composition 2") comprises:

the resin (A);
(B) an olefin resin having structural units derived from ethylene and structural units derived from at least one selected from α-olefins having from 3 to 20 carbon atoms, a glass transition temperature of -110°C to -20°C, and a melt flow rate (ASTM D1238E, 190°C, load of 2.16 kg) of 0.1 to 10 g/10 min (hereinafter also referred to as "resin (B2)"); and
the copolymer (C),
wherein the weight ratio of the resin (B2)/the copolymer (C) is from 100/0 to 1/99, and
the weight ratio of the resin (A)/(the resin (B2) + the copolymer (C)) is from 70/30 to 30/70, and
wherein the composition has a flexural modulus (ASTM D790) of 200 to 1000 MPa and a tensile elongation at break at -40°C (JIS K6251) of 50% to 600%.

Hereinafter, the composition 1 and the composition 2 are also collectively referred to as "the composition of the present invention," and the resin (B1) and the resin (B2) are also collectively referred to as "the resin (B)."

The weight ratio of the resin (A) and the total amount of the resin (B) and the copolymer (C) ((A)/[(B)+(C)]) in the composition of the present invention is from 70/30 to 30/70, preferably from 65/35 to 35/65, and more preferably from 60/40 to 40/60. As the weight ratio is within the above mentioned range, the composition of the present invention is in excellent in the balance of strength and flexibility and exerts suitable performance as a variety of products, which is especially, for example, an automobile interior material.

The weight ratio ((B)/(C)) of the resin (B) and the copolymer (C) in the composition of the present invention is from 100/0 to 1/99, preferably from 100/0 to 10/90, and more preferably from 90/10 to 30/70. As the weight ratio is within the above mentioned range, it is considered that the composition of the present invention exhibits suitable low temperature properties and mechanical properties derived from the resin (B), and thus, the composition of the present invention is excellent in elongation at low temperatures and impact resistance and especially impact resistance at low temperatures.

The flexural modulus of the composition 2 as measured in accordance with ASTM D790 is not limited to a particular value as long as it achieves the effects of the present invention. However, it is from 200 to 1000 MPa which is, for example, suitable for an airbag cover. The flexural modulus of the composition of the present invention is more preferably 650 MPa or less, still more preferably from 100 MPa to less than 600 MPa, and particularly preferably from 300 MPa to 500 MPa. As the flexural modulus is within the above mentioned range, a composition having suitable flexibility can be obtained, and such a composition can be suitably used for a variety of products and especially, for example, an automobile interior material.

Specifically, the flexural modulus can be measured by the method described in the Examples to be described later.

The tensile elongation at break of the composition 2 as measured at -40°C in accordance with JIS K6251 is from 50% to 600%, and the tensile elongation at break at -40°C of the composition of the present invention is more preferably from 50% to 550% and still more preferably 50% to 500%.

The composition having a tensile elongation at break at -40°C within the above mentioned range can be a composition having excellent elongation especially at low temperatures, and it can be suitably used for a shatterproof airbag cover resistant to abnormal destruction within a wide range of temperatures ranging from low to high temperatures.

Specifically, the tensile elongation at break at -40°C can be measured by the following method described in the Examples described later.

[Crystalline olefin resin (A)]

The composition of the present invention contains a resin (A). The composition of the present invention having excellent liquidity and heat resistance can be obtained as it contains the resin (A).

The resin (A) is not limited to a particular one as long as it is a crystalline polymer obtained from an olefin, and is preferably a crystalline high molecular weight solid product obtained by polymerizing one or more monoolefins either by a high-pressure method or a low-pressure method. Examples of such polymers include isotactic monoolefin polymers and syndiotactic monoolefin polymers.

The resin (A) may be obtained by synthesis by a conventionally known method or may be a commercially available product. The resin (A) may be used singly or two or more kinds thereof may be used.

Examples of monoolefins serving as raw materials of the resin (A) include ethylene, propylene, 1-butene, 1-pentene, 1-hexene, 1-octene, 1-decene, 2-methyl-1-propene, 3-methyl-1-pentene, 4-methyl-1-pentene and 5-methyl-1-hexene. These olefins may be used singly or two or more kinds thereof may be used. In addition, the polymerization manner may be a random type or a block type, and any polymerization manner may be adopted as long as a crystalline resinoid product is obtained.

The resin (A) has a melting point (Tm) of 100°C or more, preferably 105°C or more, as determined by differential scanning calorimetry (DSC). As the melting point (Tm) of resin (A) is 100°C or more, the resulting composition of the present invention has excellent mechanical properties and heat resistance.

Differential scanning calorimetry is carried out in the following manner, for example.

About 5 mg of sample is loaded into a dedicated aluminum pan, and, using DSC Pyris 1, Diamons DSC, or DSC 7 made by PerkinElmer Co., Ltd., it is heated from 30°C to 230°C at 320°C/min, held at 230°C for 10 minutes, cooled from 230°C to 30°C at 10°C/min, further held at 30°C for 5 minutes, and then heated at 10°C/min. The melting point is determined from the endothermic curve at the time of the second heating. If multiple peaks are detected during DSC measurement, the peak temperature detected on the highest temperature side is defined as a melting point (Tm).

The lower limit of the melt flow rate (MFR, ISO1133, 230°C, load of 2.16 kg) of the resin (A) is preferably 0.1 g/10 min, more preferably 1 g/10 min, and still more preferably 5 g/10 min, and the upper limit thereof is 500 g/10 min, more preferably 100 g/10 min, and still more preferably 80 g/10 min.

As the resin (A), the following propylene resin (A-1) is particularly preferable from the viewpoint that the composition of the present invention having better mechanical physical properties such as rigidity and hardness and economic efficiency can be easily obtained.

The propylene resin (A-1) is a homopolymer of propylene or a copolymer of propylene, and at least one selected from ethylene and α-olefins having from 4 to 20 carbon atoms.

When it is a propylene copolymer, the content of structural units derived from propylene in the copolymer is preferably 40 mol% or more and more preferably 50 mol% or more with respect to a total structural unit of 100 mol%. Such a copolymer may be a random copolymer or a block copolymer. The propylene resin (A-1) is usually polymerized by, for example, a Ziegler-Natta catalyst.

Specific examples of the α-olefins having from 4 to 20 carbon atoms include 1-butene, 2-methyl-1-propene, 2-methyl-1-butene, 3-methyl-1-butene, 1-hexene, 2-ethyl-1-butene, 2,3-dimethyl-1-butene, 1-pentene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene and 1-dodecene.

As ethylene and α-olefins having from 4 to 20 carbon atoms, ethylene, 1-butene, 1-pentene, 1-hexene, and 1-octene are preferably used. These may be used singly or two or more kinds thereof may be used.

As the propylene resin (A-1), commercially available propylene resins can be used without particular limitations. Examples of commercially available propylene resins include so-called homopolypropylene resins, random polypropylene resins, and block polypropylene resins.

Preferred embodiments of the propylene resin (A-1) will now be described.

The melt flow rate (MFR, ISO1133, 230°C, load of 2.16 kg) of the propylene resin (A-1) is preferably 0.1 to 500 g/10 min. The lower limit thereof is preferably 0.2 g/10 min, more preferably 0.3 g/10 min, and the upper limit thereof is preferably 300 g/10 min, more preferably 100 g/10 min, and particularly preferably 70 g/10 min. When MFR of the propylene resin (A-1) is less than 0.1 g/10 min, dispersibility of the propylene resin (A-1), and the resin (B) and the copolymer (C) in the composition of the present invention might deteriorate, which might cause reduction of mechanical strength of the composition of the present invention. When MFR of the propylene resin (A-1) is more than 500 g/10 min, strength of the propylene resin (A-1) itself might be decreased, which might cause reduction of mechanical strength of the composition of the present invention.

MFR is an index of the molecular weight of the propylene resin (A-1). The weight average molecular weight (Mw) in terms of polypropylene determined for the propylene resin (A-1) by gel permeation chromatography (GPC) is

preferably from 80000 to 900000, more preferably from 100000 to 700000, and particularly preferably from 150000 to 700000.

Although the tensile elastic modulus of the propylene resin (A-1) is not limited to a particular value as long as it achieves the effects of the present invention, it is preferably from 500 to 3000 MPa, more preferably from 600 to 2500 MPa, and still more preferably from 650 to 2200 MPa. The tensile elastic modulus is a value obtained by measurement of a pressed sheet having a thickness of 2 mm at 23°C in accordance with JIS K7113-2. The composition of the present invention containing the propylene resin (A-1) having a tensile elastic modulus within the above mentioned range has better rigidity and hardness.

[Olefin resin (B)]

The resin (B) satisfies the following requirements (B-1) to (B-3).

As the composition of the present invention contains the resin (B), the composition of the present invention which is excellent in elongation at low temperatures and also excellent in impact resistance at low temperatures (especially -45°C) can be obtained.

The resin (B) may be used singly or two or more kinds thereof may be used.

<Requirement (B-1)>

The resin (B) comprises a grafted polymer [GP]. The grafted polymer [GP] comprises a main chain (MC) composed of an ethylene copolymer and a side chain (SC) composed of an olefin polymer, and satisfies the following requirements (i) and (ii).

The term "grafted polymer" used in the present invention refers to a T-type polymer or a comb-shaped polymer having at least one side chain with respect to the main chain of the polymer.

[Requirement (i)]

The ethylene polymer constituting the main chain (MC) comprises repeating units derived from ethylene and repeating units derived from at least one α-olefin selected from α-olefins having from 3 to 20 carbon atoms. The ratio of the repeating units derived from the α-olefin is preferably within the range of from 10 to 50 mol% with respect to the total repeating units contained in the main chain (MC).

When the grafted polymer [GP] has such a main chain (MC), the composition of the present invention which is excellent in required mechanical physical properties such as flexibility and impact resistance at low temperatures can be easily obtained.

Specific examples of the α-olefins having from 3 to 20 carbon atoms include propylene, 1-butene, 2-methyl-1-propene, 2-methyl-1-butene, 3-methyl-1-butene, 1-hexene, 2-ethyl-1-butene, 2,3-dimethyl-1-butene, 1-pentene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene and 1-dodecene. These olefins may be used singly or two or more kinds thereof may be used.

Preferred is an α-olefin having from 3 to 10 carbon atoms, and more preferred is an α-olefin having from 3 to 8 carbon atoms. Specific examples thereof include: linear olefins such as propylene, 1-butene, 1-pentene, 1-hexene, 1-octene, and 1-decene; and branched olefins such as 4-methyl-1-pentene, 3-methyl-1-pentene, and 3-methyl-1-butene. Of these, propylene, 1-butene, 1-pentene, 1-hexene, and 1-octene are preferable, and 1-butene, 1-pentene, 1-hexene, and 1-octene are more preferable.

By using 1-butene, 1-pentene, 1-hexene, or 1-octene as the α-olefin having from 3 to 20 carbon atoms to be copolymerized with ethylene, it is possible to obtain the composition of the present invention which is most excellent in terms of low temperature properties and has a better balance of physical properties such as elongation and impact resistance at low temperature.

The ratio of the repeating units derived from ethylene in the main chain of the grafted polymer [GP] is preferably 50 to 90 mol%, more preferably 60 to 85 mol%, and still more preferably 65 to 78 mol% with respect to the total repeating units contained in the main chain. Further, the ratio of the repeating units derived from α-olefin is preferably within the range of from 10 to 50 mol%, more preferably from 15 to 40 mol%, and still more preferably 22 to 35 mol% with respect to the total repeating units contained in the main chain.

The expression "in the main chain" is used when the ratio of the total repeating units contained in the main chain is 100 mol%.

When the molar ratios of the ethylene-derived repeating units and the α-olefin-derived repeating units in the main chain are within the above mentioned ranges, as the resin (B) has sufficient flexibility and excellent low temperature

properties, the composition of the present invention comprising the resin (B) has better low temperature impact resistance. On the other hand, when the molar ratio of the α-olefin-derived repeating units is lower than the above mentioned range, as the resulting resin (B) might be a resin having poor flexibility or low temperature properties in some cases, the composition of the present invention comprising the resin tends to have poor low temperature impact resistance. Further, when the molar ratio of the α-olefin-derived repeating units is higher than the above mentioned range, it might be disadvantageous upon copolymerization of a macromonomer forming side chains to be described later. Therefore, the effect of the grafted polymer [GP] described later might be hardly exhibited, and the resulting composition tends to have a poor balance of impact resistance and other mechanical physical properties.

The molar ratios of repeating units derived from ethylene and repeating units derived from α-olefin contained in the main chain can be adjusted by controlling the ratio of the concentrations of ethylene and α-olefin to be present in the polymerization reaction system in the step of producing the main chain.

The molar ratio (mol%) of repeating units derived from α-olefin contained in the main chain, namely, the α-olefin composition in the main chain, can be obtained, for example: by obtaining, in a conventional manner, an α-olefin composition in an ethylene/α-olefin copolymer obtained under conditions where the polypropylene having terminal unsaturation or the polyethylene having terminal unsaturation to be described later is not contained; or by deducting the influence of the side chains (SCs) of the polypropylene having terminal unsaturation and the polyethylene having terminal unsaturation from the α-olefin composition of the resin (B).

<Requirement (ii)>

The side chain (SC) is at least one selected from the side chain (SE) composed of an ethylene polymer and the side chain (SP) composed of a propylene polymer and preferably the side chain (SE) composed of an ethylene polymer. As the resin (B) having the side chain (SC) that is the side chain (SE) and/or side chain (SP) has appropriate mechanical strength, the composition of the present invention comprising the resin (B) has a more favorable balance of physical properties. In addition, as the side chain (SC) of the resin (B) is the side chain (SE) and/or side chain (SP), stickiness is reduced, and therefore, the use of the resin (B) allows the achievement of excellent pellet handling ability and economic efficiency in a blending step. In particular, when the side chain (SC) is the side chain (SE), the above features are remarkably expressed.

- When the side chain (SC) is the side chain (SE)

When the side chain (SC) is the side chain (SE), it satisfies preferably at least one of the following requirements (iii) to (v) and more preferably all of the requirements (iii) to (v).

<Requirement (iii)>

The side chain (SC) is the side chain (SE) and comprises repeating units derived from ethylene and, as required, repeating units derived from at least one selected from α-olefins having from 3 to 20 carbon atoms and the content of the units derived from ethylene is within the range of preferably from 95 to 100 mol% with respect to 100 mol% of the total repeating units contained in the side chain (SE). The contents of the units derived from ethylene is more preferably from 98 to 100 mol% and still more preferably from 99.5 to 100 mol%.

Examples of the α-olefin having from 3 to 20 carbon atoms are the same as those exemplified in "Requirement (i)" above. As the content of the units derived from ethylene is within the above mentioned range, the side chain (SE) is in the form of a crystalline ethylene polymer chain. As the side chain (SE) exhibits crystallinity, the resin (B) becomes less sticky and more excellent in handling, and thus, the resin (B) is excellent in heat resistance as an adhesive resin and has an appropriate elastic modulus. Further, by mixing the resin (B) with the resin (A), it is possible to obtain the composition of the present invention which has an excellent balance of rigidity and low temperature impact resistance.

<Requirement (iv)>

The weight average molecular weight (Mw) of an ethylene polymer constituting the side chain (SE) is preferably from 500 to 30000 and more preferably 1000 to 10000.

When the Mw is lower than 500, the melting point derived from the side chain (SE) is decreased, and then, the physical crosslinking points formed by the crystalline component of the resin (B) are likely to be weakened, possibly resulting in reduction of mechanical physical properties of the composition of the present invention comprising the resin (B). On the other hand, when the Mw is higher than 30000, the relative amount of the non-crystalline or low-crystalline component composed of the ethylene copolymer moiety in the main chain (MC) tends to be reduced, possibly resulting in a failure to obtain the composition of the present invention having sufficient flexibility or impact resistance.

Mw of an ethylene polymer constituting the side chain (SE) can be determined by conducting GPC analysis of an ethylene polymer (macromonomer) corresponding to the side chains (SE), which is separated as an eluted component on the low molecular weight-side in GPC, or, a previously synthesized ethylene polymer (macromonomer) corresponding to the side chains (SE), which means by conducting GPC measurement of the weight average molecular weight of polyethylene having terminal unsaturation generated in the step (B) described below.

Mw of an ethylene polymer constituting the side chain (SE) can be adjusted by, for example, a method for changing the type of a transition metal compound used as a polyethylene having terminal unsaturation -producing catalyst to be described later, or a method for adjusting the polymerization conditions.

<Requirement (v)>

The side chains of the grafted polymer [GP] are present at an average frequency of preferably from 0.5 to 20, more preferably from 0.5 to 15, and still more preferably from 0.5 to 10 per 1000 carbon atoms in the main chain polymer molecular chain.

The composition of the present invention, which has high surface hardness and is more excellent in high impact resistance while maintaining rigidity, can be obtained by using the resin (B) in which the side chains are introduced to the main chain within the above mentioned range of the average frequency.

On the other hand, when the side chains are introduced to the main chain at an average frequency lower than the above mentioned range, the physical crosslinking points formed by the side chains tend to be decreased, possibly resulting in reduction of rigidity or hardness of the composition of the present invention comprising the resin. Further, when the side chains are introduced to the main chain at an average frequency higher than the above mentioned range, the relative amount of the crystalline component composed of the ethylene polymer moiety tends to be increased, possibly resulting in reduction of impact resistance of the composition of the present invention comprising the resin.

The average frequency of the side chains can be calculated, for example, by: [a] a method using carbon isotope nuclear magnetic resonance spectroscopy ($^{13}$C-NMR) described below; or [b] a method using gel permeation chromatography (GPC) described below.

[a] It is preferable that the main chain of the grafted polymer [GP] comprises repeating units derived from ethylene and repeating units derived from at least one α-olefin selected from α-olefins having from 3 to 20 carbon atoms, and that, in a carbon isotope nuclear magnetic resonance spectroscopy ($^{13}$C-NMR) measurement, a signal which can be assigned to a methine carbon at a binding site between the main chain and the side chain be observed in the range of from in 37.8 to 38.1 ppm, in addition to a signal assigned to the methine carbon derived from the α-olefin. When the signal is observed, the average frequency of the side chains can be obtained by the following equation:

$$[\text{Average frequency of side chains}] = 1000 \times [I_{PE\text{-}methine}]/\{[I_{all\text{-}C}] \times (100 - [R2'] - [M])/100\};$$

$[I_{PE\text{-}methine}]$: integrated value of methine carbon at binding site between side chain and main chain,
$[I_{all\text{-}C}]$: total carbon integrated value,
[R2']: weight ratio (wt%) of [R2] other than polymer by-produced in the production of grafted polymer [GP] with respect to resin (B), and
[M]: weight ratio (wt%) of macromonomer added or produced in the production of grafted polymer [GP] with respect to resin (B) .
[R2] other than the polymer by-produced in the production of the grafted polymer [GP] is a component derived from a scavenger/catalyst species to be added upon polymerization. Usually, as the amount of the grafted polymer [GP] produced is predominantly higher than the amount of the component [R2], the amount of [R2] can be regarded as zero.

[b] As described above, the peak on the low molecular weight side obtained by analyzing the resin (B) by gel permeation chromatography (GPC) is derived from the ethylene polymer (macromonomer) remaining without being copolymerized in the copolymerization reaction. Therefore, the weight ratio of the remaining macromonomer included in the resin (B) can be obtained from the area ratio of the peak relative to that of the ethylene polymer remaining without being copolymerized with the resin (B) . In cases where the weight composition of the macromonomer added or produced in the production of grafted polymer [GP] is known, the average frequency of the side chains can be obtained from the difference between the weight composition and the weight ratio of the remaining macromonomer. Specifically, the average frequency can be obtained by the following equation:

$$[\text{Average frequency of side chains}] = \{([M] - [M'])/(100-[M'])\} \times (1/[Mn_{-M}]) \times [14/\{1- ([M] - [M'])/(100-[M'])\}] \times (1/1000);$$

[M] : weight ratio (wt%) of macromonomer added or produced in the production of grafted polymer [GP] with respect to the total amount of resin (B) obtained in the production of grafted polymer [GP] .
[M']: weight ratio (wt%) of remaining macromonomer as measured by GPC to the total amount of resin (B) obtained in the production of grafted polymer [GP], and
$[Mn_{-M}]$ : number average molecular weight of macromonomer (Mn) .

When the by-produced ethylene/α-olefin copolymer other than the resin (B) is present, the average frequency obtained by the above mentioned method [a] or [b] is a value obtained by counting the number of the side chains in the polymer as 0.

The number of the side chains can be adjusted by controlling the molar concentration of the macromonomer in the polymerization system. For example, under certain polymerization conditions, when the weight to be charged or to be produced of the macromonomer is increased, provided that the molecular weight of the side chains is constant the mol concentration of the macromonomer is increased and the number of side chains in the grafted polymer [GP] to be produced is increased. In addition, when the weight to be charged or to be produced of the macromonomer is constant, as the mol concentration of the macromonomer is increased by decreasing the molecular weight of the side chain, the number of side chains in the grafted polymer [GP] to be produced can be increased.

In addition, the number of the side chains of the grafted polymer [GP] can also be adjusted by selecting the type of a transition metal compound (A) to be described later. For example, the number of the side chains can be increased by selecting an olefin polymerization catalyst containing a transition metal compound capable of exhibiting high copolimerizability at a high temperature and producing a high molecular weight polymer.

- When the side chain (SC) is the side chain (SP)

When the side chain (SC) is the side chain (SP) composed of a propylene polymer, it satisfies preferably at least one of the following requirements (vi) and (vii) and more preferably both the requirements (vi) and (vii).

<Requirement (vi)>

The side chain (SC) is the side chain (SP) composed of a propylene polymer and comprises repeating units derived from propylene and, as required, repeating units derived from at least one selected from ethylene and α-olefins having from 4 to 20 carbon atoms, and the content of the repeating units derived from propylene is within the range of preferably from 95 to 100 mol% with respect to 100 mol% of the total repeating units contained in the side chain (SP). The content of the repeating units derived from propylene is more preferably from 99.5 to 100 mol%.

As the content of the repeating units derived from propylene is within the above mentioned range, the side chain (SP) is in the form of a crystalline propylene polymer chain. As the side chain (SP) has crystallinity, the resin (B) is excellent in handling, and the composition of the present invention having a more excellent balance of rigidity and low temperature impact resistance can be obtained by using the resin (B).

A small amount of α-olefin other than ethylene and propylene may be copolymerized in the side chain (SP) to an extent that the role and features of the side chain (SP) are not impaired. Examples of α-olefin having from 3 to 20 carbon atoms are the same as those exemplified in "Requirement (i)" above.

<Requirement (vii)>

The weight average molecular weight (Mw) of a propylene polymer constituting the side chain (SP) is preferably within the range of from 5000 to 100000, more preferably from 5000 to 60000, and still more preferably from 5000 to 25000.

The composition of the present invention, in which the resin (B) having Mw of a propylene polymer constituting side chain (SP) within the above mentioned range is blended, has excellent impact resistance at low temperatures while maintaining hardness and rigidity. When Mw of a propylene polymer constituting the side chain (SP) is less than 5000, hardness or rigidity of the composition to be obtained might be decreased. When Mw of a propylene polymer constituting

the side chain (SP) is more than 100000, it might cause deterioration of liquidity or processability of the composition to be obtained during molding, and also, the relative amount of the non-crystalline or low-crystalline component is decreased, possibly resulting in reduction of flexibility, elongation, and impact resistance of the composition to be obtained.

Mw of a propylene polymer constituting the side chain (SP) can be obtained by measuring the weight average molecular weight of polypropylene having terminal unsaturation to be produced in the step (A) described below by a conventional method. For example, the weight average molecular weight in terms of polypropylene of polypropylene having terminal unsaturation obtained by GPC can be used as the weight average molecular weight of a propylene polymer constituting the side chain.

The weight average molecular weight of a propylene polymer constituting the side chain (SP) can be adjusted by, for example, controlling the polymerization temperature or the polymerization pressure in the step (A) to be described later.

<Requirement (B-2)>

The resin (B) has a melting point (Tm) as measured by differential scanning calorimetry (DSC) within the range of preferably from 60°C to 170°C. In other words, the resin (B) has a melting peak as measured by DSC within the range of from 60°C to 170°C.

The temperature at which a melting peak appears, which is the melting point (Tm), is obtained by melting a sample through a first temperature-increasing step by DSC, then allowing the melted sample to crystalize through a cooling step to 30°C, and then subjecting the resultant to a second temperature-increasing step (at a temperature rise rate of 10°C/min) and analyzing the endothermic peak observed at this second temperature-increasing step. For specific differential scanning calorimetry, the method described in the Examples can be referred to.

In the above mentioned preferred embodiment, when the side chain (SC) is the side chain (SE), the melting point derived from the side chain (SE) is observed within the range of usually from 60°C to 130°C. The resin (B) having a melting point derived from the side chain (SE) within the above mentioned range has high impact resistance at low temperatures while maintaining hardness and rigidity by the physical crosslinking points formed by the crystalline component thereof. In addition, when the melting point derived from the side chain (SE) is within the above mentioned range, the resin (B) having heat resistance and reduced stickiness can be obtained. Therefore, the use of the resin (B) allows the achievement of excellent pellet handling ability and economic efficiency in the blending step upon production of the composition of the present invention.

Examples of a method for adjusting the melting point derived from the side chain (SE) within the above mentioned range include a method for controlling the polymerization temperature or the polymerization pressure in the step (B) to be described later.

When the side chain (SC) is the side chain (SP), the melting point derived from the side chain (SP) is observed within the range of usually from 100°C to 170°C. The resin (B) having a melting point derived from the side chain (SP) within the above mentioned range has high impact resistance at low temperatures and excellent heat resistance while maintaining hardness and rigidity as in the case of the side chain (SE).

Examples of a method for adjusting the melting point derived from the side chain (SP) within the above mentioned range include a method for controlling the polymerization temperature or the polymerization pressure in the step (A) to be described later.

<Requirement (B-3)>

The glass transition temperature (Tg) of the resin (B1) as observed by DSC is within the range of from -80°C to -30°C, and Tg of the resin (B2) as observed by DSC is within the range of from -110°C to -20°C. Tg is mainly derived from properties of an ethylene polymer constituting the main chain (MC) of the grafted polymer [GP]. The composition of the present invention, in which the resin (B) having Tg within the above mentioned range is blended, exhibits favorable impact resistance at low temperatures.

Tg within the above mentioned range can be obtained by controlling the type and the composition of the $\alpha$-olefin structural unit contained in an ethylene polymer constituting the main chain (MC). For specific measurement methods, the Examples can be referred to.

Preferably, the resin (B) further satisfies the following requirement (B-4).

<Requirement (B-4)>

The intrinsic viscosity [$\eta$] of the resin (B) as measured in decalin at 135°C is within the range of preferably from 0.1 to 12 dl/g, more preferably from 0.2 to 10 dl/g, and still more preferably from 0.5 to 5 dl/g. The composition of the present invention, which contains the resin (B) having [$\eta$] within the above mentioned range, shows favorable rigidity

and mechanical strength and also achieves favorable molding processability.

In the above mentioned preferred embodiment, when the side chain (SC) is the side chain (SE), the resin (B) satisfies preferably any one of the following requirements (B-5) and (B-6), more preferably both the requirements (B-5) and (B-6), and particularly preferably the following requirement (B-5), (B-6) and (B-7).

<Requirement (B-5)>

The melting point (Tm) of the resin (B) as measured by DSC is preferably from 80°C to 130°C, more preferably from 80°C to 125°C, and still more preferably from 90°C to 120°C.

In addition, the heat of fusion ΔH calculated based on the melting peak area is preferably from 5 to 100 J/g, more preferably from 5 to 80 J/g, still more preferably 5 to 70 J/g, and particularly preferably from 8 to 60 J/g.

Tm and ΔH observed within the above mentioned ranges are mainly from the ethylene polymer as the side chain (SC) of the grafted polymer [GP] constituting the resin (B). The composition of the present invention, which is excellent in the balance of rigidity and low temperature impact resistance, can be easily obtained by using the resin (B) having Tm and ΔH within the above mentioned ranges. On the other hand, when Tm or ΔH is below the above mentioned range, rigidity of the obtained composition tends to be decreased. In addition, when ΔH exceeds the above mentioned range, impact resistance of the obtained composition tends to be decreased.

<Requirement (B-6)>

The ratio of an orthodichlorobenzene-soluble component (E value) at 20°C or less as measured by cross fractionation chromatography (CFC) of the resin (B) is preferably 45 wt% or less, more preferably 35 wt% or less, and still more preferably 30 wt% or less. Although the lower limit is not particularly limited, it is usually 5 wt%. For specific measurement methods, the Examples can be referred to.

Usually, commercially available ethylene/α-olefin copolymers, for example, ethylene/propylene copolymer, ethylene/1-butene copolymer, and ethylene/1-octene copolymer are a polymer for which the composition of α-olefin such as propylene, 1-butene, or 1-octene is adjusted to about from 10 to 50 mol%, and which is a non-crystalline or low-crystalline polymer that is favorably dissolved in a specific organic solvent even at temperatures below room temperature. For example, a commercially available ethylene/1-butene copolymer such as TAFMER A-5055S (Mitsui Chemicals, Inc.) is mostly soluble in orthodichlorobenzene at 20°C or less, and the E value thereof is usually 93% or more.

Meanwhile, the grafted polymer [GP] which has the side chains of a crystalline ethylene polymer while having the main chain of the ethylene copolymer (ethylene/α-olefin copolymer) as described above is hardly soluble in orthodichlorobenzene at room temperature or less. Therefore, the polymer [GP] is characterized by a small E value.

The fact that the resin (B) has a small E value is an indirect proof that the main chain structure and the side chain structure of the grafted polymer [GP] are chemically bound, and further indicates that the resin (B) contains a significant amount of the grafted polymer [GP]. Although the content of the grafted polymer [GP] in the resin (B) is not limited to a particular value as long as it achieves the effects of the present invention, the content is preferably from 10 to 100 wt% and more preferably from 20 to 90 wt%.

It is considered that the resin (B) contained in the composition of the present invention is dispersed in the resin (A) as with a commercially available ethylene/α-olefin copolymer that is usually used as a modifier so as to play a role of imparting impact resistance. When only a commercially available ethylene/α-olefin copolymer is used, impact resistance is improved depending on the amount of the copolymer added, while on the other hand, original rigidity or mechanical strength of the resin (A) is decreased. Meanwhile, when the resin (B1) is used, the side chain of the grafted polymer [GP] forms physical crosslinking points in a domain formed by an ethylene/α-olefin copolymer, and the domain itself has high rigidity, hardness, and mechanical strength. As a result, the composition of the present invention is assumed to have not only remarkably excellent impact resistance at low temperatures but also the excellent balance of impact resistance and rigidity. Therefore, the fact that the resin (B1) contains a significant amount of the grafted polymer [GP] is preferable in that the composition of the present invention exhibits a favorable balance of physical properties.

In addition, from the viewpoint that, for example, the composition of the present invention which is more excellent in the balance of impact resistance and rigidity can be easily obtained, it is preferable that the ΔH and the E value of the resin (B) satisfy any of the following relationships (a), (b), and (c) .

(a) When the ΔH is 5 J/g or more and less than 15 J/g, the E value is 45 wt% or less, preferably 40 wt% or less, and more preferably within the range of from 10 to 35 wt%.

(b) When the ΔH is 15 J/g or more and less than 30 J/g, the E value is 40 wt% or less, preferably 35 wt% or less, and more preferably within the range of from 5 to 30 wt%.

(c) When the ΔH is 30 J/g or more, the E value is 33 wt% or less and preferably 31 wt% or less.

When the relationship is satisfied, it indicates that the content of the grafted polymer [GP] in the resin (B) is sufficiently large. Therefore, the composition of the present invention having a more excellent balance of rigidity and low temperature impact resistance can be obtained by using the resin (B) .

When the relationship is not satisfied, which means that the E value is increased, the content of the grafted polymer [GP] in the resin (B) becomes insufficient. Accordingly, the composition of the present invention might have properties of, for example, a polymer blend of an ethylene/α-olefin copolymer and an ethylene polymer or a propylene polymer and might fail to exhibit the above described favorable balance of physical properties in some cases.

For example, as in the case where ΔH is 5 J/g or more and less than 15 J/g, when the amount of the side chain component, which is especially the amount of the ethylene polymer component, is small and the E value is more than 45 wt%, the composition of the present invention has capacity close to that obtained by using an existing ethylene/α-olefin copolymer. Accordingly, the use of the resin possibly results in the composition that has improved impact resistance but is not excellent in rigidity. In addition, as in the case where ΔH is 30 J/g or more, when the amount of side chain component, which is especially the amount of the ethylene polymer component, is relatively large and the E value is more than 33 wt%, the amount of the side chain component that is not incorporated into the main chain, which is especially the ethylene polymer component, is increased. Accordingly, the use of the resin possibly causes the obtained composition to have not only poor impact resistance but also extremely reduced rigidity.

As described above, the resin (B), which includes a significant amount of the component in which the crystalline ethylene polymer moiety is chemically bound to the ethylene/α-olefin copolymer, can satisfy the above mentioned requirements (B-5) and (B-6) simultaneously. Such a resin can be obtained by appropriately selecting a catalyst used in the step of copolymerizing ethylene, α-olefin, and a vinyl-terminated ethylene polymer. Such a catalyst is preferably a bridged metallocene compound [C] among transition metal compounds (C) to be described later.

<Requirement (B-7)>

When the melt flow rate (MFR) as measured at 190°C with a load of 2.16 kg in accordance with ASTM D1238E is determined to be M (g/10 min) and the intrinsic viscosity [η] as measured in decalin at 135°C is determined to be H (dl/g) for the resin (B), the value A represented by the following relational equation (Eq-1) is preferably from 30 to 280, more preferably from 60 to 250, and still more preferably from 70 to 200.

$$A = M/\exp(-3.3H) \quad \text{(Eq-1)}$$

When the resin (B) has the value A within the above mentioned range, it indicates that the rate of introduction of side chains (macromonomers) is high. The resin (B) satisfying the requirement (B-7) is preferable because even when it is blended with the resin (A), it is unlikely to cause reduction of physical properties such as rigidity due to remaining macromonomers or non-grafted polymers.

<Requirement (B-8)>

MFR of the resin (B) as measured at 190°C with a load of 2.16 kg in accordance with ASTM D1238E is preferably from 0.1 to 10 g/10 min, more preferably from 0.1 to 8.0 g/10 min, still more preferably from 0.1 to 6.0 g/10 min, and particularly preferably from 0.2 to 4.0 g/10 min.

When the MFR of the resin (B) is within the above mentioned range, excellent effects of tensile elongation and impact resistance tend to be exhibited. A composition having more excellent mechanical physical properties such as rigidity and molding processability can be obtained by using the resin (B).

[Other physical properties of olefin resin (B)]

• Elastic modulus

Although the elastic modulus of the resin (B) is not limited to a particular value as long as it achieves the effects of the present invention, it is preferably from 2 to 120 MPa, more preferably from 3 to 100 MPa, and still more preferably 5 to 90 MPa. The composition of the present invention comprising the resin (B) having an elastic modulus within the above mentioned range has a more excellent balance of rigidity and impact resistance.

Since the main chain structure of the grafted polymer [GP] in the resin (B) is formed by an ethylene/α-olefin copolymer, the resin (B) has excellent flexibility. In other words, the composition of the present invention comprising the resin (B) exhibits favorable impact resistance.

Here, the elastic modulus in the present invention is the tensile elastic modulus as measured in accordance with ASTM D638.

• Phase separation structure

In the resin (B), a phase representing the crystalline component observed by a transmission electron microscope (TEM) is preferably a micrometer order discontinuous phase. In order to confirm if the olefin resin has the above mentioned phase structure or not, the observation is carried out, for example, as follows.
First, using a hydraulic hot press molding machine controlled at 170°C, the resin (B) is heated for 5 minutes followed by molding under a pressure of 10 MPa for 1 minute. Then the resultant is cooled at 20°C for 3 minutes under a pressure of 10 MPa to produce a pressed sheet having a predetermined thickness, to be used as a test specimen. The test specimen is formed into a small piece of 0.5 mm square, and dyed with ruthenium acid ($RuO_4$). The resulting piece is then cut into an ultra-thin slice having a film thickness of about 100 nm, using an ultramicrotome with a diamond knife. Thereafter, carbon is deposited on the ultra-thin slice, and the resultant is observed by a transmission electron microscope (acceleration voltage: 100kV).
In the above mentioned observation method, the component of the side chain ethylene polymer of the grafted polymer [GP] is observed with a higher contrast, because an inter-crystal non-crystalline moiety in a lamellar structure formed by the component is selectively dyed with ruthenium acid.
In the resin (B), a phase representing the crystalline component comprising the side chain ethylene polymer of the grafted polymer [GP] as observed above is preferably a discontinuous phase of micrometer order.
The resin (B) mainly comprising the grafted polymer [GP], in which the non-crystalline or low-crystalline main chain and the crystalline side chains are covalently bound, has a significant effect of compatibilizing a non-crystalline component and a crystalline component, which results in the formation of the above described microphase-separated structure.
The discontinuous phase observed in the resin (B) is a physical crosslinking point composed of the side chain ethylene polymer. It is considered that such physical crosslinking points are formed also in the ethylene/α-olefin copolymer domain formed in the composition of the present invention. Therefore, it is considered that the composition of the present invention having a more excellent balance of rigidity and low temperature impact resistance can be easily obtained by using the resin (B) having the discontinuous phase.
Meanwhile, when a polymer blend of an ethylene/α-olefin copolymer and an ethylene polymer is used, the above mentioned microphase-separated structure is not formed but a rough crystalline phase is observed. Therefore, in the composition including the polymer blend, no physical crosslinking point is formed in the olefin copolymer domain, which tends to result in a failure to obtain a composition showing a favorable balance of physical properties.

<Method for producing olefin resin [B]>

The resin (B) is produced by a production method comprising the following step (A) and/or step (B), step (C), and, as required, step (D).
Step (A) : A step of polymerizing propylene in the presence of an olefin polymerization catalyst comprising a compound [A] of a transition metal of Group 4 in the periodic table containing a ligand having a dimethylsilylbisindenyl skeleton (hereinafter also referred to as "transition metal compound [A]"), to produce polypropylene having terminal unsaturation
Step (B): A step of polymerizing ethylene in the presence of an olefin polymerization catalyst comprising a compound [B] of a transition metal of Group 4 or 5 in the periodic table containing a phenoxyimine ligand (hereinafter also referred to as "transition metal compound [B]"), to produce polyethylene having terminal unsaturation
Step (C): A step of copolymerizing polypropylene having terminal unsaturation produced in the step (A) and/or polyethylene having terminal unsaturation produced in the step (B), ethylene, and at least one α-olefin selected from α-olefins having from 3 to 20 carbon atoms in the presence of an olefin polymerization catalyst comprising a transition metal compound [C] of Group 4 in the periodic table (hereinafter also referred to as "transition metal compound [C]"), to produce an olefin resin (B) comprising the grafted polymer [GP]
Step (D) : A step of collecting the polymer generated in the step (A), (B), or (C) after each step, as required
When the grafted polymer [GP] in which the side chain (SC) is the side chain (SE) is produced, the steps (B) and (C) may be carried out simultaneously. It is possible to carry out the steps (B) and (C) simultaneously because the olefin polymerization catalyst comprising the transition metal compound [B] can selectively polymerize ethylene to generate polyethylene having terminal unsaturation even in the coexistence of ethylene and a comonomer such as α-olefin. It is preferable to carry out the steps (B) and (C) simultaneously also in terms of simplification of production steps.

<Step (A)>

The step (A) is a step of producing polypropylene having terminal unsaturation as a material for the side chain (SP) composed of a propylene polymer in the grafted polymer [GP].

The term "polypropylene having terminal unsaturation" means polypropylene having an unsaturated terminal group represented by the following terminal structures (I) to (IV). The expression "Poly" in the terminal structures (I) to (IV) shows a site where the terminal structure is bound to a propylene polymer molecular chain other than the terminal structure.

[Chem 1]

Terminal structure (I)

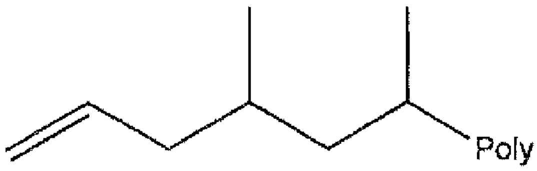

Terminal structure (II)

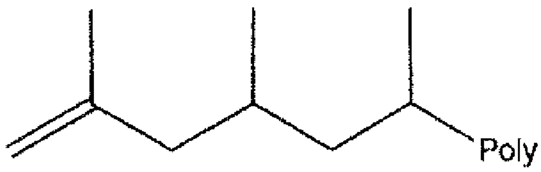

Terminal structure (III)

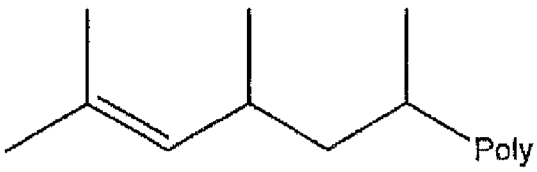

Terminal structure (IV)

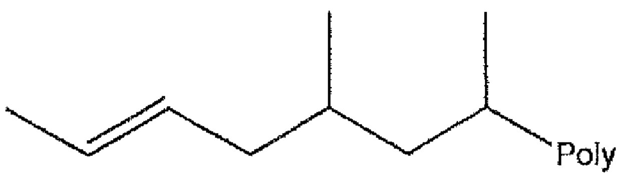

The ratio of unsaturated terminal groups in the polypropylene having terminal unsaturation is usually from 0.1 to 10 and more preferably from 0.4 to 5.0 per 1000 carbon atoms in total in the propylene polymer. Further, the ratio of an unsaturated terminal group represented by the terminal structure (I) that is usually called a terminal vinyl group, which is the so-called the amount of terminal vinyl groups, is usually from 0.1 to 2.0, preferably, from 0.2 to 2.0, and more preferably from 0.4 to 2.0 per 1000 carbon atoms in total in the propylene polymer. When the amount of terminal vinyl groups is small, the amount of polypropylene having terminal unsaturation introduced to the main chain in the step (C) is decreased, and thus, the amount of the grafted polymer [GP] generated is decreased, possibly resulting in a failure to obtain desired effects.

The amount of unsaturated terminal groups can be quantitatively determined by determining the terminal structure of polypropylene having terminal unsaturation by $^{1}$H-NMR. $^{1}$H-NMR measurement can be carried out by a conventional method. Attribution of the terminal structure can be determined in accordance with the method described in, for example, Macromolecular Rapid Communications 2000, 1103.

For example, given that an integrated value of $\delta$4.9 to 5.1 (2H) derived from the terminal structure (I) is determined to be A, and the total integrated value derived from the propylene polymer including the terminal structure is determined to be B, the ratio of the terminal structure (I) per 1000 carbon atoms can be obtained by the following formula: 1000 x [(A/2)/(B/2)]. Similarly, when the ratio of another terminal structure is obtained, the integrated value can be replaced by the integrated value of a peak attributed to each structure in consideration of the ratio of hydrogen. The ratio of unsaturated terminal groups represented by the terminal structure (I) is usually 30% or more, preferably 50% or more, more preferably 60% or more. The ratio of unsaturated terminal groups represented by the terminal structure (I) is a value expressed in percentage that is the ratio of the number of terminal structures (I) existing per 1000 carbon atoms with respect to the sum of the numbers of unsaturated terminal groups represented by the terminal structures (I) to (IV) existing per 1000 carbon atoms in polypropylene having terminal unsaturation.

Although the transition metal compound [A] functions as a polymerization catalyst for producing polypropylene having terminal unsaturation, when it is used as an olefin polymerization catalyst in the step (A), it is preferable to use the transition metal compound [A] in combination with the compound [D] to be described later.

As the olefin polymerization catalyst, one described in, for example, Resconi, L. JACS 1992, 114, 1025-1032 has been known for many years.

The side chain of the grafted polymer [GP] is preferably isotactic or syndiotactic polypropylene having terminal unsaturation and more preferably isotactic polypropylene having terminal unsaturation.

As the transition metal compound [A] used for producing such polypropylene with a high content of polypropylene having terminal unsaturation, which has high stereoregularity and a terminal structure (I), the compounds disclosed in, for example, JP H6-100579 A, JP 2001-525461 A, JP 2005-336091 A, JP 2009-299046 A, JP H11-130807 A or JP 2008-285443 A can be suitably used.

More specifically, preferred examples of the transition metal compound [A] include compounds selected from the group consisting of bridged bis(indenyl) zirconocenes and bridged bis(indenyl) hafnocenes. The transition metal compound [A] is more preferably dimethylsilyl-bridged bis(indenyl) zirconocene or hafnocene. More specifically, dimethylsilylbis(2-methyl-4-phenylindenyl)zirconium dichloride or dimethylsilylbis(2-methyl-4-phenylindenyl)zirconium dimethyl can be used as a suitable compound.

The transition metal compound [A] used in the step (A) may be used in singly or two or more kinds thereof may be used.

The step (A) can be carried out in any of gas phase polymerization, slurry polymerization, bulk polymerization, and solution (melt) polymerization methods, and the mode of polymerization is not particularly limited.

In cases where the step (A) is carried out using a solution polymerization method, examples of polymerization solvents include aliphatic hydrocarbons and aromatic hydrocarbons. Specific examples thereof include aliphatic hydrocarbons such as propane, butane, pentane, hexane, heptane, octane, decane, dodecane, and kerosene; alicyclic hydrocarbons such as cyclopentane, cyclohexane and methylcyclopentane; aromatic hydrocarbons such as benzene, toluene and xylene; and halogenated hydrocarbons such as ethylene chloride, chlorobenzene, and dichloromethane. These polymerization solvents may be used singly or two or more kinds thereof. Among these, hexane is preferred in terms of, for example, reducing the load in the post-treatment process such as the step (D).

The polymerization temperature in the step (A) is usually within the range of from 50°C to 200°C, preferably from 80°C to 150°C, and more preferably from 80°C to 130°C. By properly controlling the polymerization temperature, it is possible to obtain a polypropylene having terminal unsaturation which has a desired molecular weight and stereoregularity.

The polymerization in the step (A) is carried out usually at a polymerization pressure of from normal pressure to 10 MPa gauge pressure, preferably from normal pressure to 5 MPa gauge pressure, and the polymerization reaction can be carried out using any of a batch method, a semi-continuous method, and a continuous method. Among the above mentioned methods, it is preferable to employ a method in which monomers are continuously supplied to a reactor to carry out the copolymerization.

The reaction time (average residence time, in cases where the copolymerization is performed by a continuous method) varies depending on the conditions such as catalyst concentration and polymerization temperature, but it is usually from 0.5 minutes to 5 hours, and preferably from 5 minutes to 3 hours.

The polymer concentration in a reaction system in the step (A) is from 5 to 50 wt%, and preferably from 10 to 40 wt%, during the steady state operation. The polymer concentration is preferably from 15 to 50 wt%, in terms of, for example, the viscosity limitation corresponding to the polymerization capability, load in the post-treatment (solvent removal) process such as the step (D), and productivity.

The weight average molecular weight of polypropylene having terminal unsaturation produced in the step (A) is preferably within the range of from 5000 to 100000, more preferably from 5000 to 60000, and still more preferably from 5000 to 25000. When the polypropylene having terminal unsaturation having Mw within the above mentioned range

is used, it is possible to increase the mol concentration of polypropylene having terminal unsaturation relative to that of ethylene or $\alpha$-olefin in the step (C) to be described later, thereby increasing the efficiency of introducing polypropylene having terminal unsaturation to the main chain. On the other hand, when the Mw exceeds the above mentioned range, the mol concentration of polypropylene having terminal unsaturation is relatively decreased in the step (C) to be described later, which tends to cause reduction of the efficiency of introducing polypropylene having terminal unsaturation to the main chain. In addition, when the Mw is below the above mentioned range, it tends to cause reduction of the melting point of the obtained resin (B).

The molecular weight distribution (Mw/Mn) of the polypropylene having terminal unsaturation to be produced in the step (A) is usually from 1.5 to 3.0, and typically from about 1.7 to 2.5.

As polypropylene having terminal unsaturation used in the step (C) to be described later, a mixture of polypropylenes having different molecular weights may be used.

<Step (B)>

The step (B) is a step of producing polyethylene having terminal unsaturation as a material for the side chain (SE) composed of an ethylene polymer in the grafted polymer [GP].

Here, polyethylene having terminal unsaturation includes polyethylene having a vinyl group at one end of the polymer chain, and the polyethylene having terminal unsaturation comprises polyethylene having a vinyl group at one end at a rate of usually 60% or more, preferably 70% or more, still more preferably 80% or more, and particularly preferably 90% or more. Polyethylene having terminal unsaturation may include, in addition to polyethylene having a vinyl group at one end of the polymer chain, polyethylene having an unsaturated carbon-carbon bond such as one having a vinylene group or a vinylidene group or polyethylene having terminal saturation at both ends in some cases.

A terminal vinyl ratio (the ratio of the number of terminal vinyl groups with respect to the total number of unsaturated carbon-carbon bonds) is usually 60% or more, preferably 70%, more preferably 80% or more, and still more preferably 90% or more.

The ratio of terminal vinyl groups in polyethylene having terminal unsaturation is usually from 0.1 to 30, preferably from 0.5 to 20, and still more preferably from 1.0 to 10 per 1000 carbon atoms as the total carbon atoms in the ethylene polymer.

The terminal vinyl group ratio and the ratio of terminal vinyl groups in polyethylene having terminal unsaturation can be calculated in a conventional manner, through polymer structure analysis by $^1$H-NMR measurement.

[Transition metal compound [B]]

The transition metal compound (B) is preferably a specific compound having a structure represented by the following formula [B], and it is preferable to use, as an olefin polymerization catalyst used in the step (B), the transition metal compound [B] in combination with the compound [D] to be described later.

[Chem 2]

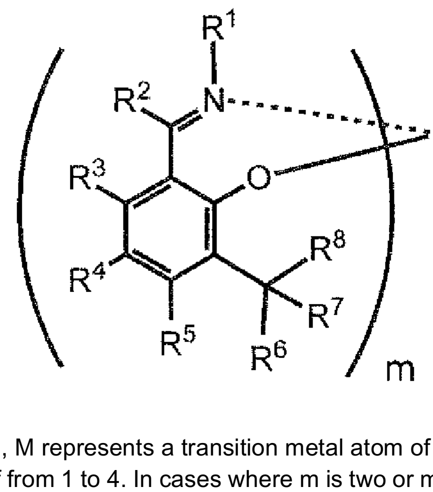
· · · [B]

In the formula [B], M represents a transition metal atom of Group 4 or 5 in the periodic table.

m is an integer of from 1 to 4. In cases where m is two or more, two of the groups represented by $R^2$ to $R^8$ are optionally bound to each other between structural units of the formula [B].

$R^1$ represents a hydrocarbon group having from 1 to 8 carbon atoms represented by the following formula: $C_{n'}H_{2n'+1}$ (n' is an integer of 1 to 8).

$R^2$ to $R^5$, which may be the same or different, each represents a hydrogen atom, a halogen atom, a hydrocarbon group, a group formed by partially substituting the hydrocarbon group with a substituent, a heterocyclic compound residue, an oxygen-containing group, a nitrogen-containing group, a boron-containing group, a sulfur-containing group, a phosphorus-containing group, a silicon-containing group, a germanium-containing group, or a tin-containing group, and two or more of these are optionally bound together to form a ring.

$R^6$ to $R^8$, each of which may be the same or different, are a hydrocarbon group or a group formed by partially substituting the hydrocarbon group with a halogen atom, and at least one of the groups is an aromatic hydrocarbon group or a group formed by partially substituting the aromatic hydrocarbon group with a halogen atom.

$R^6$ to $R^8$ may be the same as or different from each other.

n is a number satisfying the valence of M; X represents a hydrogen atom, a halogen atom, a hydrocarbon group, a group formed by partially substituting the hydrocarbon group with a substituent, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group, or a tin-containing group; and in cases where n is an integer of two or more, a plurality of Xs may be the same or different, and the plurality of groups represented by X are optionally bound together to form a ring.

The olefin polymerization catalyst including the transition metal compound [B] has characteristics that it mainly polymerizes ethylene to produce an ethylene polymer having a vinyl group at one end with a high selection rate. Further, the olefin polymerization catalyst including the transition metal compound [B] has characteristics that it can produce an ethylene polymer having a relatively small molecular weight (Mw within the range of 500 to 10000) . As the olefin polymerization catalyst including the transition metal compound [B] has such characteristics, side chains are efficiently introduced to the grafted polymer [GP] for which the obtained ethylene polymer is used, and the composition of the present invention having an excellent balance of physical properties such as impact resistance at low temperatures and rigidity can be easily obtained by using the grafted polymer [GP] .

Further, the olefin polymerization catalyst including the transition metal compound [B] has characteristics that ethylene can be highly selectively polymerized even under conditions that allow the coexistence of ethylene and $\alpha$-olefin or a vinyl-terminated macromonomer. The grafted polymer [GP] having side chains favorably maintaining mechanical properties and thermal properties as an ethylene polymer can be obtained by using the olefin polymerization catalyst having such characteristics, and the composition of the present invention having an excellent balance of physical properties such as impact resistance at low temperatures and rigidity can be easily obtained by using the grafted polymer [GP]. The above mentioned characteristics are preferable also from the viewpoint that a method comprising carrying out the steps (B) and (C) simultaneously is employed from among the above described production methods.

In addition, the olefin polymerization catalyst including the transition metal compound [B] preferably has a capability to produce substantially no olefin structure within the polymer chain, which is so-called internal olefin, from the viewpoints of, for example, light resistance, and coloring resistance of the resulting resin (B).

A description will now be given regarding the characteristics of the chemical structure of the transition metal compound [B] to be used in the present invention.

In the formula [B], although N......M generally represents coordination, they may or may not be coordinated in the present invention.

In the formula [B], M represents a transition metal atom of Group 4 or 5 in the periodic table, specifically, titanium, zirconium, hafnium, vanadium, niobium, or tantalum. M is preferably a metal atom of Group 4 in the periodic table, specifically, titanium, zirconium or hafnium, and more preferably, zirconium.

m represents an integer of from 1 to 4, preferably from 1 to 2, and particularly preferably 2.

$R^1$ is a hydrocarbon group having from 1 to 8 carbon atoms represented by the following formula: $C_{n'}H_{2n'+1}$ (n' is an integer of 1 to 8). Specific examples thereof include: non-cyclic hydrocarbon groups such as a methyl group, an ethyl group, an n-propyl group, an n-butyl group, an iso-propyl group, an iso-butyl group, a tert-butyl group, a neopentyl group, and an n-hexyl group; and cyclic hydrocarbon groups such as a cyclopropyl group, a cyclobutyl group, a cyclopentyl group, and a cyclohexyl group. Preferably, $R^1$ is a straight-chain hydrocarbon group, and specific examples thereof include a methyl group, an ethyl group, an n-propyl group, and an n-butyl group. Among these, preferred is a methyl group, an ethyl group, or an n-propyl group. Still more preferred is a methyl group or an ethyl group. An ethylene polymer having a relatively low molecular weight, for example, Mw of 500 to 10000, can be easily produced by selecting the hydrocarbon group, and as described above, the composition of the present invention having an excellent balance of physical properties can be easily obtained by using an ethylene polymer having such Mw.

$R^2$ to $R^5$, which may be the same or different, each represents a hydrogen atom, a halogen atom, a hydrocarbon group, a group formed by partially substituting the hydrocarbon group with a substituent, a heterocyclic compound residue, an oxygen-containing group, a nitrogen-containing group, a boron-containing group, a sulfur-containing group, a phosphorus-containing group, a silicon-containing group, a germanium-containing group, or a tin-containing group,

and two or more of these are optionally bound together to form a ring.

In cases where m is two or more, two of the groups represented by $R^2$ to $R^8$ are optionally bound to each other between structural units of the formula [B].

Examples of the halogen atom include fluorine, chlorine, bromine and iodine.

Specific examples of the hydrocarbon group include:
straight-chain and branched alkyl groups having from 1 to 30 carbon atoms, and preferably from 1 to 20 carbon atoms, such as a methyl group, an ethyl group, a n-propyl group, an isopropyl group, a n-butyl group, an isobutyl group, a sec-butyl group, a t-butyl group, a neopentyl group, and a n-hexyl group; straight-chain or branched alkenyl groups having from 2 to 30 carbon atoms, and preferably from 2 to 20 carbon atoms, such as a vinyl group, an allyl group, and an isopropenyl group; straight-chain or branched alkynyl groups having from 2 to 30 carbon atoms, and preferably from 2 to 20 carbon atoms, such as an ethynyl group, and a propargyl group; cyclic saturated hydrocarbon groups having from 3 to 30 carbon atoms, and preferably from 3 to 20 carbon atoms, such as a cyclopropyl group, a cyclobutyl group, a cyclopentyl group, a cyclohexyl group, and an adamantyl group; cyclic unsaturated hydrocarbon groups having from 5 to 30 carbon atoms such as a cyclopentadienyl group, an indenyl group, and a fluorenyl group; aryl groups having from 6 to 30 carbon atoms, and preferably from 6 to 20 carbon atoms, such as a phenyl group, a naphthyl group, a biphenyl group, a terphenyl group, a phenanthryl group, and an anthracenyl group; and alkyl-substituted aryl groups such as a tolyl group, an isopropylphenyl group, a t-butylphenyl group, a dimethylphenyl group, and a di-t-butylphenyl group.

Further, the hydrocarbon groups are optionally substituted with other hydrocarbon groups, and examples of such substituted groups include aryl-substituted alkyl groups such as a benzyl group and a cumyl group.

The group formed by partially substituting the hydrocarbon group with a substituent is a group in which a hydrogen atom in the hydrocarbon group is optionally substituted with halogen. Examples thereof include halogenated hydrocarbon groups having from 1 to 30 carbon atoms, and preferably from 1 to 20 carbon atoms, such as a trifluoromethyl group, a pentafluorophenyl group, and a chlorophenyl group.

Still further, the above mentioned group formed by partially substituting the hydrocarbon group with a substituent may include: a heterocyclic compound residue; an oxygen-containing group such as an alkoxy group, an aryloxy group, an ester group, an ether group, an acyl group, a carboxyl group, a carbonate group, a hydroxy group, a peroxy group, or a carboxylic anhydride group; a nitrogen-containing group such as an amino group, an imino group, an amide group, an imide group, a hydrazino group, a hydrazono group, a nitro group, a nitroso group, a cyano group, an isocyano group, a cyanate group, an amidino group, a diazo group, or an ammonium salt of an amino group; a boron-containing group such as a boranediyl group, a boranetriyl group, or a diboranyl group; a sulfur-containing group such as a mercapto group, a thioester group, a dithioester group, an alkylthio group, an arylthio group, a thioacyl group, a thioether group, a thiocyanate group, an isothiocyanate group, a sulfone ester group, a sulfonamide group, a thiocarboxyl group, a dithiocarboxyl group, a sulfo group, a sulfonyl group, a sulfinyl group, or a sulphenyl group; a phosphorus-containing group such as a phosphide group, a phosphoryl group, a thiophosphoryl group, or a phosphate group; a silicon-containing group, a germanium-containing group, or a tin-containing group.

Among these, particularly preferred are straight-chain and branched alkyl groups having from 1 to 30 carbon atoms, and preferably from 1 to 20 carbon atoms, such as a methyl group, an ethyl group, a n-propyl group, an isopropyl group, a n-butyl group, an isobutyl group, a sec-butyl group, a t-butyl group, a neopentyl group, and a n-hexyl group; aryl groups having from 6 to 30 carbon atoms, and preferably from 6 to 20 carbon atoms, such as a phenyl group, a naphthyl group, a biphenyl group, a terphenyl group, a phenanthryl group, and an anthracenyl group; and substituted aryl groups obtained by substituting the above mentioned aryl groups with 1 to 5 substituents, such as a halogen atom, an alkyl group or alkoxy group having from 1 to 30 carbon atoms and preferably from 1 to 20 carbon atoms, or an aryl group and an aryloxy group having from 6 to 30 carbon atoms and preferably from 6 to 20 carbon atoms.

Examples of the oxygen-containing group, nitrogen-containing group, boron-containing group, sulfur-containing group, and phosphorus-containing group in $R^2$ to $R^5$ include the same groups as those exemplified as the above mentioned substituents.

Examples of the heterocyclic compound residue include residues of nitrogen-containing compounds such as pyrrol, pyridine, pyrimidine, quinoline, and triazine; residues of oxygen-containing compounds such as furan and pyran; residues of sulfur-containing compounds such as thiophene; and these heterocyclic compound residues further substituted with a substituent such as an alkyl group or alkoxy group having from 1 to 30 carbon atoms, and preferably from 1 to 20 carbon atoms.

Examples of the silicon-containing group include silyl groups, siloxy groups, hydrocarbon-substituted silyl groups, and hydrocarbon-substituted siloxy groups. Specific examples thereof include a methylsilyl group, a dimethylsilyl group, a trimethylsilyl group, an ethylsilyl group, a diethylsilyl group, a triethylsilyl group, a diphenylmethylsilyl group, a triphenylsilyl group, a dimethylphenylsilyl group, a dimethyl-t-butylsilyl group, and a dimethyl(pentafluorophenyl)silyl group. Among these, preferred is a methylsilyl group, a dimethylsilyl group, a trimethylsilyl group, an ethylsilyl group, a diethylsilyl group, a triethylsilyl group, a dimethylphenylsilyl group, or a triphenylsilyl group. Particularly preferred is a trimethylsilyl group, a triethylsilyl group, a triphenylsilyl group, or a dimethylphenylsilyl group. Specific examples of the

hydrocarbon-substituted siloxy group include a trimethylsiloxy group.

Examples of the germanium-containing group include the above mentioned silicon-containing groups in which silicon is replaced by germanium, or examples of the tin-containing group include the silicon-containing groups in which silicon is replaced by tin.

Specific examples of the alkoxy group include a methoxy group, an ethoxy group, a n-propoxy group, an isopropoxy group, a n-butoxy group, an isobutoxy group, and a t-butoxy group.

Specific examples of the alkylthio group include a methylthio group and an ethylthio group.

Specific examples of the aryloxy group include a phenoxy group, a 2,6-dimethylphenoxy group, and a 2,4,6-trimethylphenoxy group.

Specific examples of the arylthio group include a phenylthio group, a methylphenylthio group, and a naphthylthio group.

Specific examples of the acyl group include a formyl group, an acetyl group, a benzoyl group, a p-chlorobenzoyl group, and a p-methoxybenzoyl group.

Specific examples of the ester group include an acetyloxy group, a benzoyloxy group, a methoxycarbonyl group, a phenoxycarbonyl group, and a p-chlorophenoxycarbonyl group.

Specific examples of the thioester group include an acetylthio group, a benzoylthio group, a methylthiocarbonyl group, and a phenylthiocarbonyl group.

Specific examples of the amide group include an acetamide group, a N-methylacetamide group, and a N-methylbenzamide group.

Specific examples of the imide group include an acetimide group and a benzimide group.

Specific examples of the amino group include a dimethylamino group, an ethylmethylamino group, and a diphenylamino group.

Specific examples of the imino group include a methylimino group, an ethylimino group, a propylimino group, a butylimino group, and a phenylimino group.

Specific examples of the sulfone ester group include a methyl sulfonate group, an ethyl sulfonate group, and a phenyl sulfonate group.

Specific examples of the sulfonamide group include a phenylsulfonamide group, a N-methylsulfonamide group, and a N-methyl-p-toluenesulfonamide group.

Two or more of the groups represented by $R^2$ to $R^5$, preferably groups adjacent, are optionally bound together to form an aliphatic ring, an aromatic ring, or a hetero ring including a heteroatom such as a nitrogen atom; and these rings may further include a substituent.

n is a number satisfying the valence of M, specifically, an integer of from 0 to 5, preferably from 1 to 4, and more preferably from 1 to 3.

X represents a hydrogen atom, a halogen atom, a hydrocarbon group, a group formed by partially substituting the hydrocarbon group with a substituent, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group, or a tin-containing group. In cases where n is two or more, Xs may be the same as or different from each other.

Examples of the halogen atom include fluorine, chlorine, bromine, and iodine.

Examples of the hydrocarbon group and the group formed by partially substituting the hydrocarbon group with a substituent include the same groups as those exemplified in the description of $R^2$ to $R^5$. Specific examples thereof include: alkyl groups such as a methyl group, an ethyl group, a propyl group, a butyl group, a hexyl group, an octyl group, a nonyl group, a dodecyl group, and an icosyl group; cycloalkyl groups having from 3 to 30 carbon atoms such as a cyclopentyl group, a cyclohexyl group, a norbornyl group, and an adamantyl group; alkenyl groups such as a vinyl group, a propenyl group, and a cyclohexenyl group; arylalkyl groups such as a benzyl group, a phenylethyl group, and a phenylpropyl group; and aryl groups such as a phenyl group, a tolyl group, a dimethylphenyl group, a trimethylphenyl group, an ethylphenyl group, a propylphenyl group, a biphenyl group, a naphthyl group, a methylnaphthyl group, an anthryl group, and a phenanthryl group; but not limited thereto.

The hydrocarbon group and the group formed by partially substituting the hydrocarbon group with a substituent also include halogenated hydrocarbon, specifically, hydrocarbon groups having from 1 to 20 carbon atoms in which at least one hydrogen atom is substituted with a halogen atom. Among these, those having from 1 to 20 carbon atoms are preferred.

Examples of the heterocyclic compound residue include the same groups as the groups exemplified in the description of $R^2$ to $R^5$.

Examples of the oxygen-containing group include the same groups as those exemplified in the description of $R^2$ to $R^5$. Specific examples thereof include a hydroxy group; alkoxy groups such as a methoxy group, an ethoxy group, a propoxy group, and a butoxy group; aryloxy groups such as a phenoxy group, a methylphenoxy group, a dimethylphenoxy group, and a naphthoxy group; arylalkoxy groups such as a phenylmethoxy group and a phenylethoxy group;

an acetoxy group; and a carbonyl group, but not limited thereto.

Examples of the sulfur-containing group include the same groups as those exemplified in the description of $R^2$ to $R^5$. Specific examples thereof include: sulfonate groups such as a methylsulfonate group, a trifluoromethanesulfonate group, a phenylsulfonate group, a benzylsulfonate group, a p-toluenesulfonate group, a trimethylbenzenesulfonate group, a triisobutylbenzenesulfonate group, a p-chlorobenzenesulfonate group, and a pentafluorobenzenesulfonate group; sulfinate groups such as a methylsulfinate group, a phenylsulfinate group, a benzylsulfinate group, a p-toluenesulfinate group, a trimethylbenzenesulfinate group, and a pentafluorobenzenesulfinate group; alkylthio groups; and arylthio groups, but not limited thereto.

Examples of the nitrogen-containing group include the same groups as the groups exemplified in the description of $R^2$ to $R^5$. Specific examples thereof include: amino groups; alkylamino groups such as a methylamino group, a dimethylamino group, a diethylamino group, a dipropylamino group, a dibutylamino group, and a dicyclohexylamino group; arylamino groups and alkylarylamino groups such as a phenylamino group, a diphenylamino group, a ditolylamino group, a dinaphthylamino group, and a methylphenylamino group, but not limited thereto.

Specific examples of the boron-containing group include, but are not limited to, $BR_4$ (wherein R represents, for example, a hydrogen atom, an alkyl group, an aryl group optionally containing a substituent or a halogen atom).

Specific examples of the phosphorus-containing group include: trialkylphosphine groups such as a trimethylphosphine group, a tributylphosphine group, and a tricyclohexylphosphine group; triarylphosphine groups such as a triphenylphosphine group, and a tritolylphosphine group; phosphite groups (phosphide groups) such as a methyl phosphite group, an ethyl phosphite group, and a phenyl phosphite group; phosphonic acid groups; and phosphinic acid groups, but not limited thereto.

Specific examples of the silicon-containing group include, but are not limited to, the same groups as the groups exemplified in the description of $R^2$ to $R^5$. Specific examples thereof include: hydrocarbon-substituted silyl groups such as a phenylsilyl group, a diphenylsilyl group, a trimethylsilyl group, a triethylsilyl group, a tripropylsilyl group, a tricyclohexylsilyl group, a triphenylsilyl group, a methyldiphenylsilyl group, a tritolylsilyl group, and a trinaphthylsilyl group; hydrocarbon-substituted silyl ether groups such as a trimethylsilyl ether group; silicon-substituted alkyl groups such as a trimethylsilylmethyl group; and silicon-substituted aryl groups such as a trimethylsilylphenyl group, but not limited thereto.

Specific examples of the germanium-containing group include the same groups as the groups exemplified in the description of $R^2$ to $R^5$. Specific examples thereof include, but are not limited to, the above mentioned silicon-containing groups in which silicon is replaced by germanium.

Specific examples of the tin-containing group include the same groups as the groups exemplified in the description of $R^2$ to $R^5$. More specific examples thereof include, but are not limited to, the above mentioned silicon-containing groups in which silicon is replaced by tin.

Specific examples of the halogen-containing group include fluorine-containing groups such as $PF_6$ and $BF_4$; chlorine-containing groups such as $ClO_4$ and $SbCl_6$; and iodine-containing groups such as $IO_4$, but not limited thereto.

Specific examples of the aluminum-containing group include $AlR_4$ (wherein R represents, for example, a hydrogen atom, an alkyl group, an aryl group optionally containing a substituent or a halogen atom), but not limited thereto.

$R^6$ to $R^8$ is a hydrocarbon group or a group formed by partially substituting the hydrocarbon group with a halogen atom, and at least either of them is an aromatic hydrocarbon group or a group formed by partially substituting the aromatic hydrocarbon group with a halogen atom.

Specific examples of the hydrocarbon group include: straight-chain and branched alkyl groups having from 1 to 30 carbon atoms, and preferably from 1 to 20 carbon atoms, such as a methyl group, an ethyl group, a n-propyl group, an isopropyl group, a n-butyl group, an isobutyl group, a sec-butyl group, a t-butyl group, a neopentyl group, and a n-hexyl group; straight-chain or branched alkenyl groups having from 2 to 30 carbon atoms, and preferably from 2 to 20 carbon atoms, such as a vinyl group, an allyl group, and an isopropenyl group; straight-chain or branched alkynyl groups having from 2 to 30 carbon atoms, and preferably from 2 to 20 carbon atoms, such as an ethynyl group, and a propargyl group; cyclic saturated hydrocarbon groups having from 3 to 30 carbon atoms, and preferably from 3 to 20 carbon atoms, such as a cyclopropyl group, a cyclobutyl group, a cyclopentyl group, a cyclohexyl group, and an adamantyl group; cyclic unsaturated hydrocarbon groups having from 5 to 30 carbon atoms such as cyclopentadienyl group, an indenyl group, and a fluorenyl group; aryl groups having from 6 to 30 carbon atoms, and preferably from 6 to 20 carbon atoms, such as a phenyl group, a naphthyl group, a biphenyl group, a terphenyl group, a phenanthryl group, and an anthracenyl group; and alkyl-substituted aryl groups such as a tolyl group, an isopropylphenyl group, a t-butylphenyl group, a dimethylphenyl group, and a di-t-butylphenyl group.

Further, the hydrocarbon groups are optionally substituted with other hydrocarbon groups, and examples of such substituted groups include aryl-substituted alkyl groups such as a benzyl group and a cumyl group.

In the above mentioned hydrocarbon groups, a hydrogen atom(s) is/are optionally substituted with halogen, and examples of such substituted groups include halogenated hydrocarbon groups having from 1 to 30 carbon atoms, and preferably from 1 to 20 carbon atoms, such as a trifluoromethyl group, a pentafluorophenyl group and a chlorophenyl

group.

Specific examples of the aromatic hydrocarbon group include: aryl groups having from 6 to 30 carbon atoms and preferably from 6 to 20 carbon atoms, such as a phenyl group, a naphthyl group, a biphenyl group, a terphenyl group, a phenanthryl group, and an anthracenyl group; and alkyl-substituted aryl groups such as a tolyl group, an isopropylphenyl group, a t-butylphenyl group, a dimethylphenyl group, and a di-t-butylphenyl group.

The aromatic hydrocarbon group may be substituted with another hydrocarbon group, or a hydrogen atom(s) may be substituted with halogen.

At least one of $R^6$ to $R^8$ is an aromatic hydrocarbon group or a halogenated aromatic hydrocarbon group. Accordingly, as a polymerization catalyst including the transition metal compound [B] has favorable activity even under high temperature polymerization conditions, it is suitable for production of the resin (B). Therefore, the composition of the present invention having favorable capacity can be easily obtained by using the resin (B) obtained with a polymerization catalyst including the transition metal compound [B].

In cases where m is two or more, two of the groups represented by $R^2$ to $R^8$ are optionally bound to each other between structural units of the formula [B] . Further, in cases where m is two or more, $R^1$s, $R^2$s, $R^3$s, $R^4$s, $R^5$s $R^6$s, $R^7$s, and $R^8$s may each be the same as or different from each other.

In cases where n is an integer of 2 or more, a plurality of groups represented by X may be the same as or different from each other; and the plurality of groups represented by X are optionally bound together to form a ring.

Such a transition metal compound [B] represented by the formula [B] may be used singly or two or more kinds thereof may be used.

<Step (C)>

The olefin polymerization catalyst used in the step (C) may be the same as or different from the olefin polymerization catalyst used in the step (A). When the olefin polymerization catalyst is the same one used in the step (A), it is preferable in that the catalyst used in the step (A) can also be used in the step (C) .

The transition metal compound [C] is the generic concept of the transition metal compound [A].

The transition metal compound [C] is preferably a transition metal compound of a transition metal of Group 4 in the periodic table, the compound comprising a ligand having a cyclopentadienyl skeleton. The cyclopentadienyl skeleton is recognized as the generic concept of the indenyl or fluorenyl skeleton.

When a catalyst other than the olefin polymerization catalyst used in the step (A) is used as the olefin polymerization catalyst in the step (C), the step (C) is preferably a step of copolymerizing polypropylene having terminal unsaturation produced in the step (A) and/or polyethylene having terminal unsaturation produced in the step (B), ethylene, and at least one $\alpha$-olefin selected from $\alpha$-olefins having from 3 to 20 carbon atoms in the presence of an olefin polymerization catalyst comprising a bridged metallocene compound [C] represented by the following formula [C].

[Chem 3]

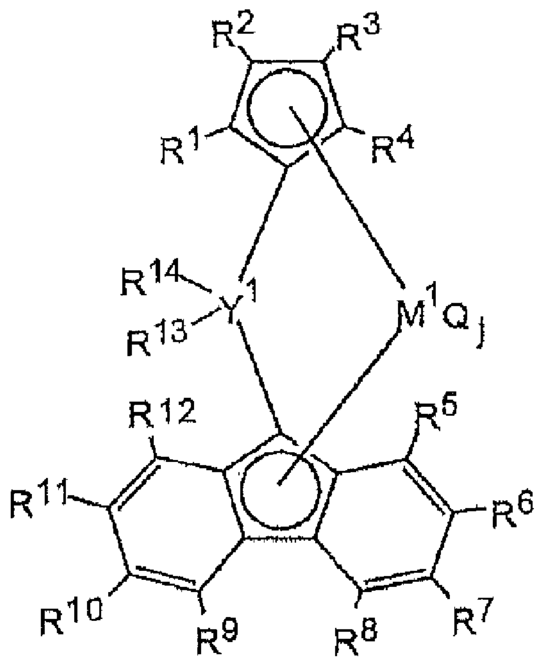

・・・[C]

In the formula [C], $R^1$, $R^2$, $R^3$, $R^4$, $R^5$, $R^8$, $R^9$ and $R^{12}$ each independently represents a hydrogen atom, a hydrocarbon group, a silicon-containing group, or a hetero atom-containing group other than silicon-containing groups, and two adjacent groups of the groups represented by $R^1$ to $R^4$ are optionally bound together to form a ring.

$R^6$ and $R^{11}$ are the same atom or the same group selected from hydrogen atom, hydrocarbon groups, silicon-containing groups, and hetero atom-containing groups other than the silicon-containing groups; $R^7$ and $R^{10}$ are the same atom or the same group selected from hydrogen atom, hydrocarbon groups, silicon-containing groups, and hetero atom-containing groups other than the silicon-containing groups; $R^6$ and $R^7$ are optionally bound together to form a ring; and $R^{10}$ and $R^{11}$ are optionally bound together to form a ring; with the proviso that all of $R^6$, $R^7$, $R^{10}$ and $R^{11}$ are not hydrogen atoms.

$R^{13}$ and $R^{14}$ each independently represents an aryl group.

$M^1$ represents a zirconium atom or a hafnium atom.

$Y^1$ represents a carbon atom or a silicon atom.

Q represents a halogen atom, a hydrocarbon group, a halogenated hydrocarbon group, a neutral conjugated or non-conjugated diene having from 4 to 10 carbon atoms, an anionic ligand or a neutral ligand capable of being coordinated with a lone pair of electrons; j represents an integer of from 1 to 4; and in cases where j is an integer of two or more, a plurality of Qs may be the same as or different from each other).

In the step (C), it is preferable to select a catalyst which exhibits a sufficient activity at a high temperature and is capable of achieving high copolymerizability and a high molecular weight. Polypropylene having a terminal vinyl group (polypropylene having the terminal structure (I)) has a methyl branch at position 4 and has a sterically bulky structure. Therefore, it is difficult to polymerize such polypropylene as compared with a straight-chain vinyl monomer. In addition, polypropylene having a terminal vinyl group is unlikely to be copolymerized under low temperature conditions that allow precipitation of polymers. Therefore, the catalyst is required to have a capability to exhibit a sufficient activity at a polymerization temperature of preferably 90°C or more, and to make the molecular weight of the main chain to a desired level.

In view of the above, in order to obtain the resin (B) containing the grafted polymer [GP] having the side chain (SP) composed of a high-content propylene polymer, the bridged metallocene compound [C] is preferably used in the step (C).

The bridged metallocene compound [C] may be used singly or two or more kinds thereof may be used.

The bridged metallocene compound [C] functions, in combination with the compound [D] to be described later, as an olefin polymerization catalyst for copolymerizing polypropylene having terminal unsaturation produced in the step (A) and/or polyethylene having terminal unsaturation produced in the step (B), ethylene, and at least one $\alpha$-olefin selected from $\alpha$-olefins having from 3 to 20 carbon atoms.

The bridged metallocene compound [C] has the following structural characteristics [m1] and [m2].

[m1] One of two ligands is a cyclopentadienyl group optionally containing a substituent, and the other is a fluorenyl group containing a substituent (hereinafter also referred to as a "substituted fluorenyl group").

[m2] The two ligands are bound by an aryl group-containing covalent bond cross-linking site (hereinafter also referred to as "cross-linking site") composed of a carbon atom or a silicon atom having the aryl group.

• Cyclopentadienyl group optionally containing substituent

In the formula [C], $R^1$, $R^2$, $R^3$ and $R^4$ each independently represents a hydrogen atom, a hydrocarbon group, a silicon-containing group, or a hetero atom-containing group other than silicon-containing groups. As a structure for efficiently incorporating terminal vinyl polypropylene or terminal vinyl polyethylene, particularly preferred is a structure in which all of $R^1$, $R^2$, $R^3$, and $R^4$ are hydrogen atoms, or any one or more of $R^1$, $R^2$, $R^3$ and $R^4$ are each a methyl group.

• Substituted fluorenyl group

In the formula [C], $R^5$, $R^8$, $R^9$ and $R^{12}$ each independently represents a hydrogen atom, a hydrocarbon group, a silicon-containing group, or a hetero atom-containing group other than silicon-containing groups; and preferred is a hydrogen atom, a hydrocarbon group, or a silicon-containing group.

$R^6$ and $R^{11}$ are the same atom or the same group selected from a hydrogen atom, hydrocarbon groups, silicon-containing groups, and hetero atom-containing groups other than the silicon-containing groups, and preferred is a hydrogen atom, a hydrocarbon group, or a silicon-containing group; $R^7$ and $R^{10}$ are the same atom or the same group selected from a hydrogen atom, hydrocarbon groups, silicon-containing groups, and hetero atom-containing groups other than the silicon-containing groups, and preferred is a hydrogen atom, a hydrocarbon group, or a silicon-containing group; $R^6$ and $R^7$ are optionally bound together to form a ring, and $R^{10}$ and $R^{11}$ are optionally bound together to form a ring.

Note that all of $R^6$, $R^7$, $R^{10}$ and $R^{11}$ are not hydrogen atoms at the same time.

From the viewpoint of the polymerization activity, preferably, neither $R^6$ nor $R^{11}$ is a hydrogen atom; more preferably, none of $R^6$, $R^7$, $R^{10}$, and $R^{11}$ is a hydrogen atom; and particularly preferably, $R^6$ and $R^{11}$ are the same group selected from hydrocarbon groups and silicon-containing groups, and $R^7$ and $R^{10}$ are the same group selected from hydrocarbon groups and silicon-containing groups. Further, it is also preferred that $R^6$ and $R^7$ be bound together to form an alicyclic or an aromatic ring, and that $R^{10}$ and $R^{11}$ be bound together to form an alicyclic or an aromatic ring.

Examples of hydrocarbon groups and preferred groups for $R^5$ to $R^{12}$ include: hydrocarbon groups (preferably hydrocarbon groups having from 1 to 20 carbon atoms, hereinafter sometimes referred to as "hydrocarbon groups (f1)"); and silicon-containing groups (preferably silicon-containing groups having from 1 to 20 carbon atoms, hereinafter sometimes referred to as "silicon-containing groups (f2)").

Examples of hetero atom-containing groups other than the silicon-containing group include halogenated hydrocarbon groups, oxygen-containing groups, and nitrogen-containing groups.

Specific examples of the hydrocarbon groups (f1) include straight-chain hydrocarbon groups such as a methyl group, an ethyl group, a n-propyl group, a n-butyl group, a n-pentyl group, a n-hexyl group, a n-heptyl group, a n-octyl group, a n-nonyl group, a n-decanyl group, and an allyl group; branched hydrocarbon groups such as an isopropyl group, an isobutyl group, a sec-butyl group, a t-butyl group, an amyl group, a 3-methylpentyl group, a neopentyl group, a 1,1-diethylpropyl group, a 1,1-dimethylbutyl group, a 1-methyl-1-propylbutyl group, a 1,1-propylbutyl group, a 1,1-dimethyl-2-methylpropyl group, and a 1-methyl-1-isopropyl-2-methylpropyl group; cyclic saturated hydrocarbon groups such as a cyclopentyl group, a cyclohexyl group, a cycloheptyl group, a cyclooctyl group, a norbornyl group, and an adamantyl group; cyclic unsaturated hydrocarbon groups such as a phenyl group, a naphthyl group, a biphenyl group, a phenanthryl group, and an anthracenyl group, and nucleus alkyl-substituted forms of these groups; and hydrocarbon groups in which at least one hydrogen atom is substituted with an aryl group, such as a benzyl group and a cumyl group.

Preferred silicon-containing groups (f2) in $R^5$ to $R^{12}$ are silicon-containing groups having from 1 to 20 carbon atoms, and examples thereof include groups in which a silicon atom is covalently bound directly to a ring carbon of a cyclopentadienyl group. Specific examples thereof include alkylsilyl groups (such as a trimethylsilyl group), and arylsilyl groups (such as a triphenylsilyl group).

Specific examples of the hetero atom-containing groups include a methoxy group, an ethoxy group, a phenoxy group, a N-methylamino group, a trifluoromethyl group, a tribromomethyl group, a pentafluoroethyl group, and a pentafluorophenyl group.

Among the hydrocarbon groups (f1), straight-chain or branched aliphatic hydrocarbon groups having from 1 to 20 carbon atoms are preferred. Specific preferred examples thereof include a methyl group, an ethyl group, a n-propyl group, an isopropyl group, a n-butyl group, an isobutyl group, a sec-butyl group, a t-butyl group, a neopentyl group and a n-hexyl group.

Preferred examples of the substituted fluorenyl group in the case where $R^6$ and $R^7$ ($R^{10}$ and $R^{11}$) are bound

together to from an alicyclic or an aromatic ring, include groups derived from the compounds represented by the formulae [II] to [VI] to be described later.

• Cross-linking site

In the formula [C], $R^{13}$ and $R^{14}$ each independently represents an aryl group, and $Y^1$ represents a carbon atom or a silicon atom. One characteristic of the bridged metallocene compound [C] is the fact that the bridging atom $Y^1$ in the cross-linking site has $R^{13}$ and $R^{14}$, which are aryl groups which may be the same as or different from each other. In terms of ease of production of the compound [C], $R^{13}$ and $R^{14}$ are preferably the same.
Examples of the aryl groups include a phenyl group, a naphthyl group, an anthracenyl group, and these groups in which one or more aromatic hydrogen atoms (sp2-type hydrogen atoms) contained therein are substituted with a substituent.
Examples of the substituent include the above mentioned hydrocarbon groups (f1), the silicon-containing groups (f2), halogen atoms, halogenated hydrocarbon groups, and hetero atom-containing groups.
Specific examples of the aryl group include: unsubstituted aryl groups having from 6 to 14 carbon atoms, and preferably from 6 to 10 carbon atoms, such as a phenyl group, a naphthyl group, an anthracenyl group, and a biphenyl group; alkyl-substituted aryl groups such as a tolyl group, an isopropylphenyl group, a n-butylphenyl group, a t-butylphenyl group, and a dimethylphenyl group; cycloalkyl-substituted aryl groups such as a cyclohexylphenyl group; halogenated aryl groups such as a chlorophenyl group, a bromophenyl group, a dichlorophenyl group, and a dibromophenyl group; and halogenated alkyl-substituted aryl groups such as a (trifluoromethyl)phenyl group and a bis(trifluoromethyl)phenyl group. The substituent is preferably at the meta and/or the para position. Among the above mentioned groups, preferred are substituted phenyl groups having substituent(s) at the meta and/or the para position(s).

(Other characteristics of bridged metallocene compound [C])

In the formula [C], Q represents a halogen atom, a hydrocarbon group, a halogenated hydrocarbon group, a neutral conjugated or non-conjugated diene having from 4 to 10 carbon atoms, an anionic ligand or a neutral ligand capable of being coordinated with a lone pair of electrons; j represents an integer of from 1 to 4; and in cases where j is an integer of two or more, a plurality of Qs may be the same as or different from each other) .
Examples of the hydrocarbon group for Q include straight-chain or branched aliphatic hydrocarbon groups having from 1 to 10 carbon atoms, and alicyclic hydrocarbon groups having from 3 to 10 carbon atoms. Examples of the aliphatic hydrocarbon group include a methyl group, an ethyl group, a n-propyl group, an isopropyl group, a 2-methylpropyl group, a 1,1-dimethylpropyl group, a 2,2-dimethylpropyl group, a 1,1-diethylpropyl group, a 1-ethyl-1-methylpropyl group, a 1,1,2,2-tetramethylpropyl group, a sec-butyl group, a tert-butyl group, a 1,1-dimethylbutyl group, a 1,1,3-trimethylbutyl group, and a neopentyl group. Examples of the alicyclic hydrocarbon group include a cyclohexyl group, a cyclohexylmethyl group, and a 1-methyl-1-cyclohexyl group.
Examples of the halogenated hydrocarbon group for Q include the above mentioned hydrocarbon groups for Q in which at least one hydrogen atom is substituted with a halogen atom.
In the formula [C], $M^1$ represents a zirconium atom or a hafnium atom. Preferred is a hafnium atom, since it allows for copolymerizing polypropylene having terminal unsaturation or polyethylene having terminal unsaturation at a high efficiency, and controlling the obtained resin (B) to have a high molecular weight. The use of a catalyst capable of copolymerizing polypropylene having terminal unsaturation or polyethylene having terminal unsaturation at a high efficiency, and controlling the obtained resin (B) to have a high molecular weight is preferable in terms of, for example, securing high productivity of the resin (B). This is because, although it is desirable to carry out the reaction under high-temperature conditions in order to secure a high productivity, the molecular weight of the resulting resin tends to decrease under high-temperature conditions.

• Examples of preferred bridged metallocene compound [C]

Specific examples of the bridged metallocene compound [C] will be given below.
Examples of preferred bridged metallocene compound [C] include compounds exemplified in, for example, WO 2001/27124 A, WO 2004/029062 A, WO 2015/122414 A, and WO 2015/122415 A.
Examples of the bridged metallocene compound [C] include:

diphenylmethylene(cyclopentadienyl)(2,7-di-tert-butylfl uorenyl)hafnium dichloride,
diphenylmethylene(cyclopentadienyl)(3,6-di-tert-butylfluoreny 1) hafnium dichloride,
diphenylmethylene(cyclopentadienyl)(octamethyloctahydrodibenz ofluorenyl)hafnium dichloride,
diphenylmethylene(cyclopentadienyl)(octamethyltetrahydrodicyc lopentafluorenyl)hafnium dichloride,

diphenylmethylene(cyclopentadienyl)(dibenzofluorenyl) hafnium dichloride,
diphenylmethylene(cyclopentadienyl)(1,1',3,6,8,8'-hexamethyl-2,7-dihydrodicyclopentafluorenyl)hafnium dichloride,
diphenylmethylene(cyclopentadienyl)(1,3,3',6,6',8-hexamethyl-2,7-dihydrodicyclopentafluorenyl)hafnium dichloride,
diphenylmethylene(cyclopentadienyl)(2,7-diphenyl -3,6-di-tert-butylfluorenyl)hafnium dichloride,
diphenylmethylene(cyclopentadienyl)(2,7-dimethyl-3,6-di-tert-butylfluorenyl)hafnium dichloride,
diphenylmethylene(cyclopentadienyl)(2,7-(trimethylphenyl)-3,6 -di-tert-butylfluorenyl)hafnium dichloride,
diphenylmethylene(cyclopentadienyl)(2,7-(dimethylphenyl)-3,6-di-tert-butylfluorenyl)hafnium dichloride,
diphenylmethylene(cyclopentadienyl)(2,3,6,7-tetra-tert-butylf luorenyl)hafnium dichloride,
di(p-tolyl)methylene(cyclopentadienyl)(2,7-di-tert-butylfluor enyl)hafnium dichloride,
di(p-tolyl)methylene(cyclopentadienyl)(3,6-di-tert-butylfluor enyl)hafnium dichloride,
di(p-tolyl)methylene(cyclopentadienyl)(octamethyloctahydrodib enzofluorenyl)hafnium dichloride,
di(p-tolyl)methylene(cyclopentadienyl)(octamethyltetrahydrodi cyclopentafluorenyl)hafnium dichloride,
di(p-tolyl)methylene(cyclopentadienyl)(dibenzofluorenyl)hafni um dichloride,
di(p-tolyl)methylene(cyclopentadienyl)(1,1',3,6,8,8'-hexameth yl-2,7-dihydrodicyclopentafluorenyl)hafnium dichloride,
di(p-tolyl)methylene(cyclopentadienyl)(1,3,3',6,6',8-hexameth yl-2,7-dihydrodicyclopentafluorenyl)hafnium dichloride,
di(p-tolyl)methylene(cyclopentadienyl)(2,7-diphenyl -3,6-di-tert-butylfluorenyl)hafnium dichloride,
di(p-tolyl)methylene(cyclopentadienyl)(2,7-dimethyl-3,6-di-te rt-butylfluorenyl)hafnium dichloride,
di(p-tolyl)methylene(cyclopentadienyl)(2,7-(trimethylphenyl)-3,6-di-tert-butylfluorenyl)hafnium dichloride,
di(p-tolyl)methylene(cyclopentadienyl)(2,7-(dimethylphenyl)-3 ,6-di-tert-butylfluorenyl)hafnium dichloride,
di(p-tolyl)methylene(cyclopentadienyl)(2,3,6,7-tetramethylflu orenyl)hafnium dichloride,
di(p-tolyl)methylene(cyclopentadienyl)(2,3,6,7-tetra-tert-but ylfluorenyl)hafnium dichloride,

di(p-chlorophenyl)methylene(cyclopentadienyl)(2,7-di-te rt-butylfluorenyl)hafnium dichloride,
di(p-chlorophenyl)methylene(cyclopentadienyl)(3,6-di-tert-but ylfluorenyl)hafnium dichloride,
di(p-chlorophenyl)methylene(cyclopentadienyl)(octamethyloctah ydrodibenzofluorenyl)hafnium dichloride,
di(p-chlorophenyl)methylene(cyclopentadienyl)(octamethyltetra hydrodicyclopentafluorenyl)hafnium dichloride,
di(p-chlorophenyl)methylene(cyclopentadienyl)(dibenzofluoreny l) hafnium dichloride,
di(p-chlorophenyl)methylene(cyclopentadienyl) (1,1',3,6,8,8'-h examethyl-2,7-dihydrodicyclopentafluorenyl)hafnium dichloride,
di(p-chlorophenyl)methylene(cyclopentadienyl) (1,3,3',6,6',8-h examethyl-2,7-dihydrodicyclopentafluorenyl)hafnium dichloride,
di(p-chlorophenyl)methylene(cyclopentadienyl)(2,7-diphenyl -3,6-di-tert-butylfluorenyl)hafnium dichloride,
di(p-chlorophenyl)methylene(cyclopentadienyl)(2,7-dimethyl-3, 6-di-tert-butylfluorenyl)hafnium dichloride,
di(p-chlorophenyl)methylene(cyclopentadienyl)(2,7-(trimethylp henyl)-3,6-di-tert-butylfluorenyl)hafnium dichloride,
di(p-chlorophenyl)methylene(cyclopentadienyl)(2,7-(dimethylph enyl)-3,6-di-tert-butylfluorenyl)hafnium dichloride,
di(p-chlorophenyl)methylene(cyclopentadienyl)(2,3,6,7-tetra-t ert-butylfluorenyl)hafnium dichloride,
di(m-chlorophenyl)methylene(cyclopentadienyl)(2,7-di-te rt-butylfluorenyl)hafnium dichloride,
di(m-chlorophenyl)methylene(cyclopentadienyl)(3,6-di-tert-but ylfluorenyl)hafnium dichloride,
di(m-chlorophenyl)methylene(cyclopentadienyl)(octamethyloctah ydrodibenzofluorenyl)hafnium dichloride,
di(m-chlorophenyl)methylene(cyclopentadienyl)(octamethyltetra hydrodicyclopentafluorenyl)hafnium dichloride,
di(m-chlorophenyl)methylene(cyclopentadienyl)(dibenzofluoreny l) hafnium dichloride,
di(m-chlorophenyl)methylene(cyclopentadienyl) (1,1',3,6,8,8'-h examethyl-2,7-dihydrodicyclopentafluorenyl)hafnium dichloride,
di(m-chlorophenyl)methylene(cyclopentadienyl) (1,3,3',6,6',8-h examethyl-2,7-dihydrodicyclopentafluorenyl)hafnium dichloride,
di(m-chlorophenyl)methylene(cyclopentadienyl)(2,7-diphenyl -3,6-di-tert-butylfluorenyl)hafnium dichloride,
di(m-chlorophenyl)methylene(cyclopentadienyl)(2,7-dimethyl-3, 6-di-tert-butylfluorenyl)hafnium dichloride,
di(m-chlorophenyl)methylene(cyclopentadienyl)(2,7-(trimethylp henyl)-3,6-di-tert-butylfluorenyl)hafnium dichloride,
di(m-chlorophenyl)methylene(cyclopentadienyl)(2,7-(dimethylph enyl)-3,6-di-tert-butylfluorenyl)hafnium dichloride,
di(m-chlorophenyl)methylene(cyclopentadienyl)(2,3,6,7-tetra-t ert-butylfluorenyl)hafnium dichloride,

di(p-bromophenyl)methylene(cyclopentadienyl)(2,7-di-ter t-butylfluorenyl)hafnium dichloride,
di(p-bromophenyl)methylene(cyclopentadienyl)(3,6-di-tert-buty lfluorenyl)hafnium dichloride,
di(p-bromophenyl)methylene(cyclopentadienyl)(octamethyloctahy drodibenzofluorenyl)hafnium dichloride,

di(p-bromophenyl)methylene(cyclopentadienyl)(octamethyltetrah ydrodicyclopentafluorenyl)hafnium dichloride,
di(p-bromophenyl)methylene(cyclopentadienyl)(dibenzofluorenyl )hafnium dichloride,
di(p-bromophenyl)methylene(cyclopentadienyl) (1,1',3,6,8,8'-he xamethyl-2,7-dihydrodicyclopentafluorenyl)hafnium dichloride,
di(p-bromophenyl)methylene(cyclopentadienyl) (1,3,3',6,6',8-he xamethyl-2,7-dihydrodicyclopentafluorenyl)hafnium dichloride,
di(p-bromophenyl)methylene(cyclopentadienyl)(2,7-diphenyl-3,6 -di-tert-butylfluorenyl)hafnium dichloride,
di(p-bromophenyl)methylene(cyclopentadienyl)(2,7-dimethyl-3,6 -di-tert-butylfluorenyl)hafnium dichloride,
di(p-bromophenyl)methylene(cyclopentadienyl)(2,7-(trimethylph enyl)-3,6-di-tert-butylfluorenyl)hafnium dichloride,
di(p-bromophenyl)methylene(cyclopentadienyl)(2,7-(dimethylphe nyl)-3,6-di-tert-butylfluorenyl)hafnium dichloride,
di(p-bromophenyl)methylene(cyclopentadienyl)(2,3,6,7-tetra-te rt-butylfluorenyl)hafnium dichloride,

di(m-trifluoromethyl-phenyl)methylene(cyclopentadienyl) (2,7-di-tert-butylfluorenyl)hafnium dichloride,
di(m-trifluoromethyl-phenyl)methylene(cyclopentadienyl) (3,6-d i-tert-butylfluorenyl)hafnium dichloride,
di(m-trifluoromethyl-phenyl)methylene(cyclopentadienyl) (octam ethyloctahydrodibenzofluorenyl)hafnium dichloride,
di(m-trifluoromethyl-phenyl)methylene(cyclopentadienyl) (octam ethyltetrahydrodicyclopentafluorenyl)hafnium dichloride,
di(m-trifluoromethyl-phenyl)methylene(cyclopentadienyl) (diben zofluorenyl)hafnium dichloride,
di(m-trifluoromethyl-phenyl)methylene(cyclopentadienyl) (1,1', 3,6,8,8'-hexamethyl-2,7-dihydrodicyclopentafluorenyl)hafnium dichloride,
di(m-trifluoromethyl-phenyl)methylene(cyclopentadienyl) (1,3,3 ',6,6',8-hexamethyl-2,7-dihydrodicyclopentafluorenyl)hafnium dichloride,
di(m-trifluoromethyl-phenyl)methylene(cyclopentadienyl) (2,7-d iphenyl -3,6-di-tert-butylfluorenyl)hafnium dichloride,
di(m-trifluoromethyl-phenyl)methylene(cyclopentadienyl) (2,7-d imethyl-3,6-di-tert-butylfluorenyl)hafnium dichloride,
di(m-trifluoromethyl-phenyl)methylene(cyclopentadienyl) (2,7-( trimethylphenyl)-3,6-di-tert-butylfluorenyl)hafnium dichloride,
di(m-trifluoromethyl-phenyl)methylene(cyclopentadienyl) (2,7-( dimethylphenyl)-3,6-di-tert-butylfluorenyl)hafnium dichloride,
di(m-trifluoromethyl-phenyl)methylene(cyclopentadienyl) (2,3,6 ,7-tetra-tert-butylfluorenyl)hafnium dichloride,

di(p-trifluoromethyl-phenyl)methylene(cyclopentadienyl) (2,7-di-tert-butylfluorenyl)hafnium dichloride,
di(p-trifluoromethyl-phenyl)methylene(cyclopentadienyl) (3,6-d i-tert-butylfluorenyl)hafnium dichloride,
di(p-trifluoromethyl-phenyl)methylene(cyclopentadienyl) (octam ethyloctahydrodibenzofluorenyl)hafnium dichloride,
di(p-trifluoromethyl-phenyl)methylene(cyclopentadienyl) (octam ethyltetrahydrodicyclopentafluorenyl)hafnium dichloride,
di(p-trifluoromethyl-phenyl)methylene(cyclopentadienyl) (diben zofluorenyl)hafnium dichloride,
di(p-trifluoromethyl-phenyl)methylene(cyclopentadienyl) (1,1', 3,6,8,8'-hexamethyl-2,7-dihydrodicyclopentafluorenyl)hafnium dichloride,
di(p-trifluoromethyl-phenyl)methylene(cyclopentadienyl) (1,3,3 ',6,6',8-hexamethyl-2,7-dihydrodicyclopentafluorenyl)hafnium dichloride,
di(p-trifluoromethyl-phenyl)methylene(cyclopentadienyl) (2,7-d iphenyl -3,6-di-tert-butylfluorenyl)hafnium dichloride,
di(p-trifluoromethyl-phenyl)methylene(cyclopentadienyl) (2,7-d imethyl-3,6-di-tert-butylfluorenyl)hafnium dichloride,
di(p-trifluoromethyl-phenyl)methylene(cyclopentadienyl) (2,7-( trimethylphenyl)-3,6-di-tert-butylfluorenyl)hafnium dichloride,
di(p-trifluoromethyl-phenyl)methylene(cyclopentadienyl) (2,7-( dimethylphenyl)-3,6-di-tert-butylfluorenyl)hafnium dichloride,
di(p-trifluoromethyl-phenyl)methylene(cyclopentadienyl)(2,3,6 ,7-tetra-tert-butylfluorenyl)hafnium dichloride,

di(p-tert-butyl-phenyl)methylene(cyclopentadienyl)(2,7-di-tert-butylfluorenyl)hafnium dichloride,
di(p-tert-butyl-phenyl)methylene(cyclopentadienyl)(3,6-di-ter t-butylfluorenyl)hafnium dichloride,
di(p-tert-butyl-phenyl)methylene(cyclopentadienyl) (octamethyl octahydrodibenzofluorenyl)hafnium dichloride,
di(p-tert-butyl-phenyl)methylene(cyclopentadienyl)(octamethyl tetrahydrodicyclopentafluorenyl)hafnium dichloride,
di(p-tert-butyl-phenyl)methylene(cyclopentadienyl)(dibenzoflu orenyl)hafnium dichloride,

di(p-tert-butyl-phenyl)methylene(cyclopentadienyl) (1,1',3,6,8 ,8'-hexamethyl-2,7-dihydrodicyclopentafluorenyl)hafnium dichloride,
di(p-tert-butyl-phenyl)methylene(cyclopentadienyl) (1,3,3',6,6 ',8-hexamethyl-2,7-dihydrodicyclopentafluorenyl)hafnium dichloride,
di(p-tert-butyl-phenyl)methylene(cyclopentadienyl)(2,7-diphen yl-3,6-di-tert-butylfluorenyl)hafnium dichloride,
di(p-tert-butyl-phenyl)methylene(cyclopentadienyl)(2,7-dimeth yl-3,6-di-tert-butylfluorenyl)hafnium dichloride,
di(p-tert-butyl-phenyl)methylene(cyclopentadienyl)(2,7-(trime thylphenyl)-3,6-di-tert-butylfluorenyl)hafnium dichloride,
di(p-tert-butyl-phenyl)methylene(cyclopentadienyl)(2,7-(dimet hylphenyl)-3,6-di-tert-butylfluorenyl)hafnium dichloride,
di(p-tert-butyl-phenyl)methylene(cyclopentadienyl)(2,3,6,7-te tra-tert-butylfluorenyl)hafnium dichloride,

di(p-n-butyl-phenyl)methylene(cyclopentadienyl)(2,7-di-tert-butylfluorenyl)hafnium dichloride,
di(p-n-butyl-phenyl)methylene(cyclopentadienyl)(3,6-di-tert-b utylfluorenyl)hafnium dichloride,
di(p-n-butyl-phenyl)methylene(cyclopentadienyl)(octamethyloct ahydrodibenzofluorenyl)hafnium dichloride,
di(p-n-butyl-phenyl)methylene(cyclopentadienyl)(octamethyltet rahydrodicyclopentafluorenyl)hafnium dichloride,
di(p-n-butyl-phenyl)methylene(cyclopentadienyl)(dibenzofluore nyl)hafnium dichloride,
di(p-n-butyl-phenyl)methylene(cyclopentadienyl) (1,1',3,6,8,8' -hexamethyl-2,7-dihydrodicyclopentafluorenyl)hafnium dichloride,
di(p-n-butyl-phenyl)methylene(cyclopentadienyl) (1,3,3',6,6',8 -hexamethyl-2,7-dihydrodicyclopentafluorenyl)hafnium dichloride,
di(p-n-butyl-phenyl)methylene(cyclopentadienyl)(2,7-diphenyl -3,6-di-tert-butylfluorenyl)hafnium dichloride,
di(p-n-butyl-phenyl)methylene(cyclopentadienyl)(2,7-dimethyl-3,6-di-tert-butylfluorenyl)hafnium dichloride,
di(p-n-butyl-phenyl)methylene(cyclopentadienyl)(2,7-(trimethy lphenyl)-3,6-di-tert-butylfluorenyl)hafnium dichloride,
di(p-n-butyl-phenyl)methylene(cyclopentadienyl)(2,7-(dimethyl phenyl)-3,6-di-tert-butylfluorenyl)hafnium dichloride,
di(p-n-butyl-phenyl)methylene(cyclopentadienyl)(2,3,6,7-tetra -tert-butylfluorenyl)hafnium dichloride,

di(p-biphenyl)methylene(cyclopentadienyl)(2,7-di-tert-b utylfluorenyl)hafnium dichloride,
di(p-biphenyl)methylene(cyclopentadienyl)(3,6-di-tert-butylfl uorenyl)hafnium dichloride,
di(p-biphenyl)methylene(cyclopentadienyl)(octamethyloctahydro dibenzofluorenyl)hafnium dichloride,
di(p-biphenyl)methylene(cyclopentadienyl)(octamethyltetrahydr odicyclopentafluorenyl)hafnium dichloride,
di(p-biphenyl)methylene(cyclopentadienyl)(dibenzofluorenyl)ha fnium dichloride,
di(p-biphenyl)methylene(cyclopentadienyl) (1,1',3,6,8,8'-hexam ethyl-2,7-dihydrodicyclopentafluorenyl)hafnium dichloride,
di(p-biphenyl)methylene(cyclopentadienyl) (1,3,3',6,6',8-hexam ethyl-2,7-dihydrodicyclopentafluorenyl)hafnium dichloride,
di(p-biphenyl)methylene(cyclopentadienyl)(2,7-diphenyl -3,6-di-tert-butylfluorenyl)hafnium dichloride,
di(p-biphenyl)methylene(cyclopentadienyl)(2,7-dimethyl-3,6-di -tert-butylfluorenyl)hafnium dichloride,
di(p-biphenyl)methylene(cyclopentadienyl)(2,7-(trimethylpheny 1)-3,6-di-tert-butylfluorenyl)hafnium dichloride,
di(p-biphenyl)methylene(cyclopentadienyl)(2,7-(dimethylphenyl )-3,6-di-tert-butylfluorenyl)hafnium dichloride,
di(p-biphenyl)methylene(cyclopentadienyl)(2,3,6,7-tetra-tert-butylfluorenyl)hafnium dichloride,

di(1-naphthyl)methylene(cyclopentadienyl) (2,7-di-tert-b utylfluorenyl)hafnium dichloride,
di(1-naphthyl)methylene(cyclopentadienyl)(3,6-di-tert-butylfl uorenyl)hafnium dichloride,
di(1-naphthyl)methylene(cyclopentadienyl)(octamethyloctahydro dibenzofluorenyl)hafnium dichloride,
di(1-naphthyl)methylene(cyclopentadienyl)(octamethyltetrahydr odicyclopentafluorenyl)hafnium dichloride,
di(1-naphthyl)methylene(cyclopentadienyl)(dibenzofluorenyl)ha fnium dichloride,
di(1-naphthyl)methylene(cyclopentadienyl)(1,1',3,6,8,8'-hexam ethyl-2,7-dihydrodicyclopentafluorenyl)hafnium dichloride,
di(1-naphthyl)methylene(cyclopentadienyl)(1,3,3',6,6',8-hexam ethyl-2,7-dihydrodicyclopentafluorenyl)hafnium dichloride,
di(1-naphthyl)methylene(cyclopentadienyl)(2,7-diphenyl -3,6-di-tert-butylfluorenyl)hafnium dichloride,
di(1-naphthyl)methylene(cyclopentadienyl)(2,7-dimethyl-3,6-di -tert-butylfluorenyl)hafnium dichloride,
di(1-naphthyl)methylene(cyclopentadienyl)(2,7-(trimethylpheny 1)-3,6-di-tert-butylfluorenyl)hafnium dichloride,
di(1-naphthyl)methylene(cyclopentadienyl)(2,7-(dimethylphenyl )-3,6-di-tert-butylfluorenyl)hafnium dichloride,
di(1-naphthyl)methylene(cyclopentadienyl)(2,3,6,7-tetra-tert-butylfluorenyl)hafnium dichloride,

di(2-naphthyl)methylene(cyclopentadienyl) (2,7-di-tert-b utylfluorenyl)hafnium dichloride,
di(2-naphthyl)methylene(cyclopentadienyl) (3,6-di-tert-butylfl uorenyl)hafnium dichloride,
di(2-naphthyl)methylene(cyclopentadienyl)(octamethyloctahydro dibenzofluorenyl)hafnium dichloride,
di(2-naphthyl)methylene(cyclopentadienyl)(octamethyltetrahydr odicyclopentafluorenyl)hafnium dichloride,
di(2-naphthyl)methylene(cyclopentadienyl)(dibenzofluorenyl)ha fnium dichloride,
di(2-naphthyl)methylene(cyclopentadienyl)(1,1',3,6,8,8'-hexam ethyl-2,7-dihydrodicyclopentafluorenyl)hafnium dichloride,
di(2-naphthyl)methylene(cyclopentadienyl)(1,3,3',6,6',8-hexam ethyl-2,7-dihydrodicyclopentafluorenyl)hafnium dichloride,
di(2-naphthyl)methylene(cyclopentadienyl)(2,7-diphenyl -3,6-di-tert-butylfluorenyl)hafnium dichloride,
di(2-naphthyl)methylene(cyclopentadienyl)(2,7-dimethyl-3,6-di -tert-butylfluorenyl)hafnium dichloride,
di(2-naphthyl)methylene(cyclopentadienyl)(2,7-(trimethylpheny l)-3,6-di-tert-butylfluorenyl)hafnium dichloride,
di(2-naphthyl)methylene(cyclopentadienyl)(2,7-(dimethylphenyl )-3,6-di-tert-butylfluorenyl)hafnium dichloride,
di(2-naphthyl)methylene(cyclopentadienyl) (2,3,6,7-tetra-tert-butylfluorenyl)hafnium dichloride,

di(m-tolyl)methylene(cyclopentadienyl)(2,7-di-tert-buty lfluorenyl)hafnium dichloride,
di(m-tolyl)methylene(cyclopentadienyl)(2,7-dimethylfluorenyl) hafnium dichloride,
di(m-tolyl)methylene(cyclopentadienyl)(3,6-di-tert-butylfluor enyl)hafnium dichloride,

di(p-isopropylphenyl)methylene(cyclopentadienyl)(octame thyloctahydrodibenzofluorenyl)hafnium dichloride,
di(p-isopropylphenyl)methylene(cyclopentadienyl)(octamethyloc tahydrodibenzofluorenyl)hafnium dichloride,
di(p-isopropylphenyl)methylene(cyclopentadienyl)(2,7-di-tert-butylfluorenyl)hafnium dichloride,
di(p-isopropylphenyl)methylene(cyclopentadienyl)(3,6-di-tert-butylfluorenyl)hafnium dichloride,

diphenylsilylene(cyclopentadienyl)(2,7-di-tert-butylflu orenyl)hafnium dichloride,
diphenylsilylene(cyclopentadienyl)(3,6-di-tert-butylfluorenyl )hafnium dichloride,
diphenylsilylene(cyclopentadienyl)(octamethyloctahydrodibenzo fluorenyl)hafnium dichloride,
diphenylsilylene(cyclopentadienyl)(octamethyltetrahydrodicycl opentafluorenyl)hafnium dichloride,
diphenylsilylene(cyclopentadienyl)(dibenzofluorenyl) hafnium dichloride,
diphenylsilylene(cyclopentadienyl)(1,1',3,6,8,8'-hexamethyl-2 ,7-dihydrodicyclopentafluorenyl)hafnium dichloride,
diphenylsilylene(cyclopentadienyl)(1,3,3',6,6',8-hexamethyl-2 ,7-dihydrodicyclopentafluorenyl)hafnium dichloride,
diphenylsilylene(cyclopentadienyl)(2,7-diphenyl -3,6-di-tert-butylfluorenyl)hafnium dichloride,
diphenylsilylene(cyclopentadienyl)(2,7-dimethyl-3,6-di-tert-b utylfluorenyl)hafnium dichloride,
diphenylsilylene(cyclopentadienyl)(2,7-(trimethylphenyl)-3,6-di-tert-butylfluorenyl)hafnium dichloride,
diphenylsilylene(cyclopentadienyl)(2,7-(dimethylphenyl)-3,6-d i-tert-butylfluorenyl)hafnium dichloride, and
diphenylsilylene(cyclopentadienyl)(2,3,6,7-tetra-tert-butylfl uorenyl)hafnium dichloride.

Examples of the bridged metallocene compound [C] also include : compounds obtained by replacing "dichloride" in the above mentioned compounds with, for example, "difluoride", "dibromide", "diiodide", "dimethyl" or "methylethyl"; and compounds obtained by replacing "cyclopentadienyl" in the above mentioned compounds with, for example, "3-tert-butyl-5-methyl-cyclopentadienyl", "3,5-dimethyl-cyclopentadienyl", "3-tert-butyl-cyclopentadienyl" or "3-methyl-cyclopentadienyl".

The bridged metallocene compound [C] as described above can be produced by a known method, and the production method thereof is not particularly limited. Examples of a conventionally known method include methods described in, for example, WO 2001/27124 A, WO 2004/029062 A, WO 2015/122414 A, and WO 2015/122415 A.

The step (C) can be carried out by solution (melt) polymerization, and the polymerization conditions are not particularly limited as long as a solution polymerization process for producing an olefin polymer is employed. However, the step (C) preferably includes the following step of obtaining a polymerization reaction solution.

The step of obtaining a polymerization reaction solution is a step of obtaining a polymerization reaction solution of a copolymer of ethylene, $\alpha$-olefin having from 3 to 20 carbon atoms, polypropylene having terminal unsaturation produced in the step (A) and/or the polyethylene having terminal unsaturation produced in the step (B) using an aliphatic hydrocarbon and/or an aromatic hydrocarbon as a polymerization solvent in the presence of the bridged metallocene compound [C], preferably, in the presence of the bridged metallocene compound [C], in the formula [C], wherein $R^{13}$ and $R^{14}$ bound to $Y^1$ are each a phenyl group or a substituted phenyl group substituted with an alkyl group, a halogen group, or an alkoxy group, wherein $R^6$ and $R^7$ are bound to each other and form an alicyclic group having an alkyl substituent, and $R^{10}$ and $R^{11}$ are bound to each other and form an alicyclic group having an alkyl substituent.

Examples of the polymerization solvent to be used in the step (C) include aliphatic hydrocarbons and aromatic hydrocarbons. Specific examples thereof include aliphatic hydrocarbons such as propane, butane, pentane, hexane,

heptane, octane, decane, dodecane, and kerosene; alicyclic hydrocarbons such as cyclopentane, cyclohexane and methylcyclopentane; aromatic hydrocarbons such as benzene, toluene and xylene; and halogenated hydrocarbons such as ethylene chloride, chlorobenzene, and dichloromethane. These may be used singly or two or more kinds thereof may be used.

The polymerization solvent used in the step (C) may be the same as or different from the polymerization solvent used in the step (A). Among these, aliphatic hydrocarbons such as hexane and heptane are preferred from the industrial point of view. Hexane is more preferred in terms of, for example, the separation or purification of the resin (B).

The polymerization temperature in the step (C) is preferably from 90°C to 200°C and more preferably from 100°C to 200°C. The temperature within the above mentioned range is preferred because the temperature at which the polypropylene having terminal unsaturation or polyethylene having terminal unsaturation is well dissolved in an aliphatic hydrocarbon such as hexane or heptane, which is preferably used as a polymerization solvent in industrial settings, is 90°C or more. The polymerization temperature is preferably a higher temperature, in order to increase the amount of side chains introduced. Further, a higher temperature is more preferred, also from the view point of improving the productivity.

The polymerization in the step (C) is carried out usually at a polymerization pressure of from normal pressure to 10 MPa gauge pressure, preferably from normal pressure to 5 MPa gauge pressure, and the polymerization reaction can be carried out using any of a batch method, a semi-continuous method, and a continuous method. It is also possible to carry out the polymerization in two or more stages varying in reaction conditions. Among the above mentioned methods, it is preferable to employ a method in which monomers are continuously supplied to a reactor to carry out the copolymerization.

The reaction time (average residence time, in cases where the copolymerization is performed by a continuous method) in the step (C) varies depending on the conditions such as catalyst concentration and polymerization temperature, but it is usually from 0.5 minutes to 5 hours, and preferably from 5 minutes to 3 hours.

The polymer concentration in a reaction system in the step (C) is usually from 5 to 50 wt%, and preferably from 10 to 40 wt%, during the steady state operation. The polymer concentration is preferably from 15 to 35 wt%, in terms of, for example, the viscosity limitation corresponding to the polymerization capability, load in the post-treatment (solvent removal) process such as the step (D), and productivity.

The molecular weight of the resulting copolymer can be adjusted by allowing hydrogen to exist in the polymerization system, or by changing the polymerization temperature. It is also possible to adjust the molecular weight by controlling the amount used of the compound [D1] to be described later. Specific examples of the compound [D1] include triisobutylaluminum, methylaluminoxane and diethylzinc. In the case of adding hydrogen, an adequate amount to be added is about 0.001 to 100 NL per 1 kg of olefin.

[Compound [D]]

In the method for producing the resin (B), it is preferable to use the compound [D], along with the transition metal compound [A], the transition metal compound [B], or the transition metal compound [C] used as the olefin polymerization catalysts in the above mentioned steps (A), (B), and (C).

The compound [D] is a compound which reacts with the transition metal compound [A], the transition metal compound [B], or the transition metal compound [C] to serve as an olefin polymerization catalyst. Specifically, the compound [C] is a compound selected from an organometallic compound [D1], an organoaluminum oxy-compound [D2], and a compound [D3] which reacts with a transition metal compound [A], a transition metal compound [B], or a transition metal compound [C] to form an ion pair.

• [D1] Organometallic compound

Specific examples of the organometallic compound [D1] include: an organoaluminum compound, represented by the following formula (D1-a); an alkylated complex compound of a metal of Group 1 in the periodic table and aluminum, represented by the formula (D1-b) ; and a dialkyl compound of a metal of Group 2 or Group 12 in the periodic table, represented by the formula (D1-c). Note that the organometallic compound [D1] does not include the organoaluminum oxy-compound [D2] to be described later.

$$R^a{}_pAl(OR^b)_qH_rY_s \quad (D1\text{-}a)$$

In the formula (D1-a) above, $R^a$ and $R^b$, which may be the same or different, each represents a hydrocarbon group having from 1 to 15 carbon atoms, and preferably from 1 to 4 carbon atoms; Y represents a halogen atom; and p, q r, and s are numbers which satisfy the following relations: $0 < p \leq 3$, $0 \leq q < 3$, $0 \leq r < 3$, $0 \leq s < 3$, and $p + q + r + s = 3$.

$M^3AlR^c_4$ (D1-b)

In the formula (D1-b) above, $M^3$ represents Li, Na or K; and $R^c$ represents a hydrocarbon group having from 1 to 15 carbon atoms, and preferably from 1 to 4 carbon atoms.

$R^dR^eM^4$ (D1-c)

In the formula (D1-c) above, $R^d$ and $R^e$, which may be the same or different, each represents a hydrocarbon group or halogenated hydrocarbon group having from 1 to 15 carbon atoms, and preferably from 1 to 4 carbon atoms; and $M^4$ represents Mg, Zn or Cd.

Examples of the organoaluminum compound represented by the formula (D1-a) include compounds represented by the following formulae (D1-a-1) to (D1-a-4).

$R^a_pAl(OR^b)_{3-p}$ (D1-a-1)

(wherein, $R^a$ and $R^b$, which may be the same or different, each represents a hydrocarbon group having from 1 to 15 carbon atoms, and preferably from 1 to 4 carbon atoms, and p is preferably a number satisfying $1.5 \le p \le 3$)

$R^a_pAlY_{3-p}$ (D1-a-2)

(wherein, $R^a$ represents a hydrocarbon group having from 1 to 15 carbon atoms, and preferably from 1 to 4 carbon atoms; Y represents a halogen atom; and p is preferably a number satisfying $0 < p < 3$)

$R^a_pAlH_{3-p}$ (D1-a-3)

(wherein, $R^a$ represents a hydrocarbon group having from 1 to 15 carbon atoms, and preferably from 1 to 4 carbon atoms: and p is preferably a number satisfying $2 \le p < 3$)

$R^a_pAl(OR^b)_qY_s$ (D1-a-4)

(wherein, $R^a$ and $R^b$ may be the same or different and each represents a hydrocarbon group having from 1 to 15 carbon atoms, and preferably from 1 to 4 carbon atoms; Y represents a halogen atom; and p, q, and s are numbers which satisfy the following relations: $0 < p \le 3$, $0 \le q < 3$, $0 \le s < 3$, and $p + q + s = 3$)

Specific examples of the organoaluminum compound represented by the formula (D1-a) include: tri-n-alkylaluminums such as trimethylaluminum, triethylaluminum, tri-n-butylaluminum, tripropylaluminum, tripentylaluminum, trihexylaluminum, trioctylaluminum, and tridecyl aluminum;
tri-branched alkylaluminums such as triisopropylaluminum, triisobutylaluminum, tri-sec-butylaluminum, tri-tert-butylaluminum, tri-2-methylbutylaluminum, tri-3-methylbutylaluminum, tri-2-methylpentylaluminum, tri-3-methylpentylaluminum, tri-4-methylpentylaluminum, tri-2-methylhexylaluminum, tri-3-methylhexylaluminum, and tri-2-ethylhexylaluminum;
tricycloalkylaluminums such as tricyclohexylaluminum, and tricyclooctylaluminum;
triarylaluminums such as triphenylaluminum, and tritolylaluminum;
dialkylaluminum hydrides such as diisobutylaluminum hydride;
trialkenylaluminums such as triisoprenylaluminum represented by $(i\text{-}C_4H_9)_xAl_y(C_5H_{10})_z$ (wherein, x, y, and z are positive numbers, and $z \ge 2x$);
alkylaluminum alkoxides such as isobutylaluminum methoxide, isobutylaluminum ethoxide, and isobutylaluminum isopropoxide;
dialkylaluminum alkoxides such as dimethylaluminum methoxide, diethylaluminum ethoxide, and dibutylaluminum butoxide;
alkylaluminum sesquialkoxides such as ethylaluminum sesquiethoxide, and butylaluminum sesquibutoxide;
partially alkoxylated alkylaluminums having an average composition represented by $R^a_{2.5}Al(OR^b)_{0.5}$ (wherein, $R^a$ and $R^b$ may be the same or different and each represents a hydrocarbon group having from 1 to 15 carbon atoms, and preferably from 1 to 4 carbon atoms);
dialkylaluminum aryloxides such as diethylaluminum phenoxide, diethylaluminum(2,6-di-t-butyl-4-methylphenoxide), ethylaluminumbis(2,6-di-t-butyl-4-methylphenoxide), diisobutylaluminum(2,6-di-t-butyl-4-methylphenoxide), and isobutylaluminumbis(2,6-di-t-butyl-4-methylphenoxide);
dialkylaluminum halides such as dimethylaluminum chloride, diethylaluminum chloride, dibutylaluminum chloride, diethylaluminum bromide, and diisobutylaluminum chloride;
alkylaluminum sesquihalides such as ethylaluminum sesquichloride, butylaluminum sesquichloride, and ethylaluminum

sesquibromide;
partially halogenated alkylaluminums such as alkylaluminum dihalides, for example, ethylaluminum dichloride, propylaluminum dichloride, and butylaluminum dibromide;
dialkylaluminum hydrides such as diethylaluminum hydride, and dibutylaluminum hydride;
other partially hydrogenated alkylaluminums such as alkylaluminum dihydrides, for example, ethylaluminum dihydride, and propylaluminum dihydride; and
partially alkoxylated and halogenated alkylaluminums such as ethylaluminum ethoxychloride, butylaluminum butoxychloride, and ethylaluminum ethoxybromide.

Further, a compound similar to the compound represented by the formula (D1-a) can also be used, and examples of such a compound include an organoaluminum compound in which two or more aluminum compounds are bound via a nitrogen atom. Specific examples thereof include $(C_2H_5)_2AlN(C_2H_5)Al(C_2H_5)_2$.

Examples of the compound represented by the formula (D1-b) include $LiAl(C_2H_5)_4$ and $LiAl(C_7H_{15})_4$.

Examples of the compound represented by the formula (D1-c) include dimethylmagnesium, diethylmagnesium, dibutylmagnesium, butylethylmagnesium, dimethylzinc, diethylzinc, diphenylzinc, di-n-propylzinc, diisopropylzinc, di-n-butylzinc, diisobutylzinc, bis(pentafluorophenyl)zinc, and dimethylcadmium, diethylcadmium.

Further, other examples of the organometallic compound (D1) which can be used include methyllithium, ethyllithium, propyllithium, butyllithium, methylmagnesium bromide, methylmagnesium chloride, ethylmagnesium bromide, ethylmagnesium chloride, propylmagnesium bromide, propylmagnesium chloride, butylmagnesium bromide, and butylmagnesium chloride.

Still further, it is also possible to use, as the organometallic compound [D1], a combination of compounds capable of forming the above mentioned organoaluminum compound in the polymerization system, for example, a combination of a halogenated aluminum and an alkyllithium, or a combination of a halogenated aluminum and an alkylmagnesium.

Such an organometallic compound [D1] may be used singly or two or more kinds thereof may be used.

• [D2] Organoaluminum oxy-compound

The organoaluminum oxy-compound [D2] may be a conventionally known aluminoxane, or a benzene-insoluble organoaluminum oxy-compound such as one exemplified in JP H2-78687 A.

The organoaluminum oxy-compound [D2] may be used singly or two or more kinds thereof may be used.

Specific examples of the organoaluminum oxy-compound [D2] include methylaluminoxane, ethylaluminoxane, and isobutylaluminoxane.

A conventionally known aluminoxane can be produced, for example, by any of the following methods, and it is usually obtained as a solution of hydrocarbon solvent.

(1) A method in which an organoaluminum compound such as a trialkylaluminum is added to a hydrocarbon medium suspension containing a compound containing adsorbed water or a salt containing water of crystallization, for example, magnesium chloride hydrate, copper sulfate hydrate, aluminum sulfate hydrate, nickel sulfate hydrate or cerous chloride hydrate, to allow the adsorbed water or the water of crystallization to react with the organoaluminum compound.
(2) A method in which water, ice or water vapor is allowed to directly act on an organoaluminum compound such as a trialkylaluminum in a medium such as benzene, toluene, ethyl ether, or tetrahydrofuran.
(3) A method in which an organoaluminum compound such as a trialkylaluminum is reacted with an organic tin oxide such as dimethyltin oxide or dibutyltin oxide in a medium such as decane, benzene, or toluene.

The above mentioned aluminoxane may contain a small amount of an organometallic component. Further, after removing the solvent or unreacted organoaluminum compound from the recovered solution of the aluminoxane by distillation, the resulting aluminoxane may be redissolved in a solvent, or suspended in a poor solvent for aluminoxane.

Specific examples of the organoaluminum compound to be used in the production of aluminoxane include the same compounds as those exemplified as the organoaluminum compounds represented by the formula (D1-a).

Among these, preferred is a trialkylaluminum or a tricycloalkylaluminum, and particularly preferred is trimethylaluminum.

Such an organoaluminum compound may be used singly or two or more kinds thereof may be used.

Examples of the solvent to be used in the production of aluminoxane include hydrocarbon solvents including: aromatic hydrocarbons such as benzene, toluene, xylene, cumene, and cymene; aliphatic hydrocarbons such as pentane, hexane, heptane, octane, decane, dodecane, hexadecane, and octadecane; alicyclic hydrocarbons such as cyclopentane, cyclohexane, cyclooctane, and methylcyclopentane; petroleum fractions such as gasoline, kerosene, and gas oil; and halides, particularly, chlorides and bromides, of the above mentioned aromatic hydrocarbons, aliphatic hydrocarbons,

and alicyclic hydrocarbons. In addition, ethers such as ethyl ether and tetrahydrofuran can also be used. Of these solvents, particularly preferred is an aromatic hydrocarbon or an aliphatic hydrocarbon.

It is preferred that the benzene-insoluble organoaluminum oxy-compound contain an Al component soluble in benzene at 60°C in an amount of usually 10% or less, preferably 5% or less, and particularly preferably 2% or less, in terms of Al atom. In other words, the benzene-insoluble organoaluminum oxy-compound is preferably insoluble or poorly soluble in benzene.

Examples of the organoaluminum oxy-compound [D2] include an organoaluminum oxy-compound containing boron represented by the following formula [III].

[Chem 4]

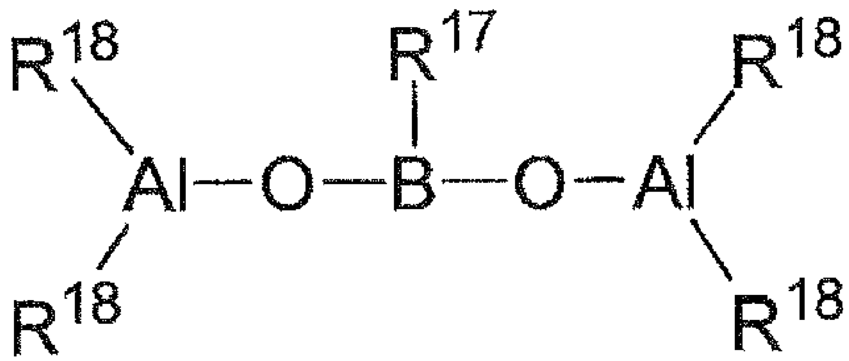

(III)

(wherein in the formula (III), $R^{17}$ represents a hydrocarbon group or a halogenated hydrocarbon group having from 1 to 10 carbon atoms; and four $R^{18}$s, which may be the same or different, each represents a hydrogen atom, a halogen atom, or a hydrocarbon group having from 1 to 10 carbon atoms.)

The organoaluminum oxy-compound containing boron represented by the formula (III) above can be produced by reacting a boronic acid represented by the following formula (IV) with an organoaluminum compound at a temperature of -80°C to room temperature for one minute to 24 hours in an inert solvent under an inert gas atmosphere:

[Chem 5]

$$R^{19}-B(OH)_2 \quad (IV)$$

(wherein in the formula (IV), $R^{19}$ represents the same group as defined for $R^{17}$ in the formula (III)).

Specific examples of the boronic acid represented by the formula (IV) include methylboronic acid, ethylboronic acid, isopropylboronic acid, n-propylboronic acid, n-butylboronic acid, isobutylboronic acid, n-hexylboronic acid, cyclohexylboronic acid, phenylboronic acid, 3,5-difluorophenylboronic acid, pentafluorophenylboronic acid, and 3,5-bis(trifluoromethyl)phenylboronic acid. Among these, preferred are methylboronic acid, n-butylboronic acid, isobutylboronic acid, 3,5-difluorophenylboronic acid, and pentafluorophenylboronic acid. These may be used singly or two or more kinds thereof may be used.

Specific examples of the organoaluminum compound to be reacted with the boronic acid as described above include the same as those exemplified as the organoaluminum compounds represented by the formula (D1-a) above.

The organoaluminum compound is preferably a trialkylaluminum or a tricycloalkylaluminum, and particularly preferably, trimethylaluminum, triethylaluminum, or triisobutylaluminum. These may be used singly or two or more kinds thereof may be used.

• Compound [D3] which reacts with transition metal compound [A], transition metal compound [B], or transition metal compound [C] to form ion pair

Examples of the compound [D3] (hereinafter also referred to as "ionized ionic compound") which reacts with the transition metal compound [A], the transition metal compound [B], or the transition metal compound [C] to form an ion pair include Lewis acids, ionic compounds, borane compounds, and carborane compounds described in, for example, JP H1-501950 A, JP H1-502036 A, JP H3-179005 A, JP H3-179006 A, JP H3-207703 A, JP H3-207704 A, and US 5321106 B. Further, the compound [D3] may also be a heteropoly compound or an isopoly compound.

Specific examples of the Lewis acid include compounds represented by $BR_3$ (wherein R represents a phenyl group which optionally contains a substituent such as fluorine atom, a methyl group, or a trifluoromethyl group; or fluorine atom), such as trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron, and tris(3,5-dimethylphenyl)boron.

Examples of the ionized ionic compound include compounds represented by the following formula (V):

[Chem 6]

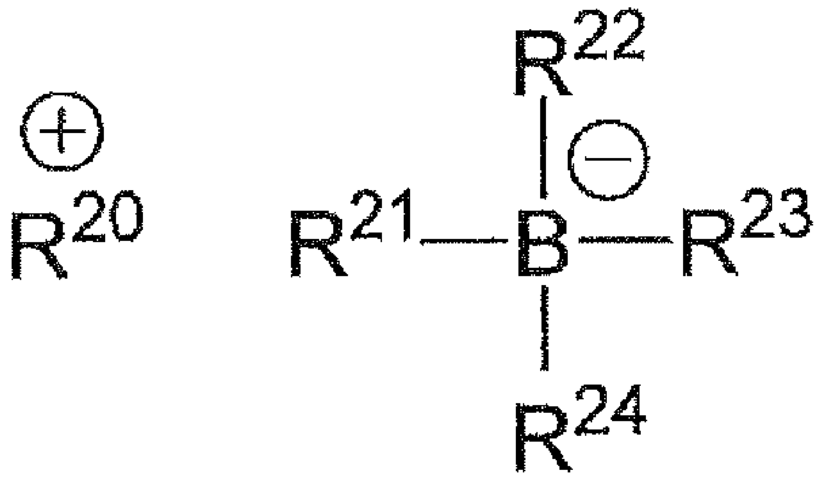

(V)

(wherein in the formula (V), $R^{20}$ is H+, a carbonium cation, an oxonium cation, an ammonium cation, a phosphonium cation, a cycloheptyltrienyl cation, or a ferrocenium cation including a transition metal; and $R^{21}$ to $R^{24}$, which may be the same or different, each represents an organic group, preferably an aryl group or a substituted aryl group.)

Specific examples of the carbonium cation include tri-substituted carbonium cations such as triphenylcarbonium cation, tri(methylphenyl)carbonium cation, and tri(dimethylphenyl)carbonium cation.

Specific examples of the ammonium cation include trialkylammonium cations such as trimethylammonium cation, triethylammonium cation, tripropylammonium cation, tri(tert-butyl)ammonium cation, and tri(n-butyl)ammonium cation; N,N-dialkylanilinium cations such as N,N-dimethylanilinium cation, N,N-diethylanilinium cation, and N,N-2,4,6-pentamethylanilinium cation; and dialkylammonium cations such as di(isopropyl)ammonium cation, and dicyclohexylammonium cation.

Specific examples of the phosphonium cation include triarylphosphonium cations such as triphenylphosphonium cation, tri(methylphenyl)phosphonium cation, and tri(dimethylphenyl)phosphonium cation.

$R^{20}$ is preferably a carbonium cation or an ammonium cation, and particularly preferably, triphenylcarbonium cation, N,N-dimethylanilinium cation, or N,N-diethylanilinium cation.

Examples of the ionized ionic compound include trialkyl-substituted ammonium salts, N,N-dialkylanilinium salts, dialkylammonium salts, and triarylphosphonium salts.

Specific examples of the trialkyl-substituted ammonium salt include triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tri(n-butyl)ammonium tetra(pentafluorophenyl)boron, tripropylammonium tetra(o,p-dimethylphenyl)boron, tri(n-butyl)ammonium tetra(m,m-dimethylphenyl)boron, tri(n-butyl)ammonium tetra(p-trifluoromethylphenyl)boron, tri(n-butyl)ammonium tetra(3,5-ditrifluoromethylphenyl)boron, and tri(n-butyl)ammonium tetra(o-tolyl)boron.

Specific examples of the N,N-dialkylanilinium salt include N,N-dimethylanilinium tetra(phenyl)boron, N,N-diethylanilinium tetra(phenyl)boron, and N,N,2,4,6-pentamethylanilinium tetra(phenyl)boron.

Specific examples of the dialkylammonium salt include di(1-propyl)ammonium tetra(pentafluorophenyl)boron, and dicyclohexylammonium tetra(phenyl)boron.

Further, examples of the ionized ionic compound include triphenylcarbenium tetrakis(pentafluorophenyl)borate, N,N-dimethylanilinium tetrakis(pentafluorophenyl)borate, ferrocenium tetra(pentafluorophenyl)borate, triphenylcarbeniumpentaphenylcyclopentadienyl complex, N,N-diethylaniliniumpentaphenylcyclopentadienyl complex, and boron compounds represented by the following formulae (VI) and (VII).

[Chem 7]

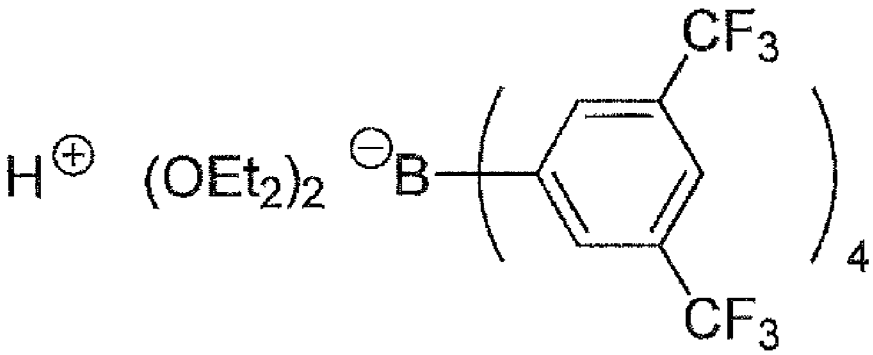

(VI)

(wherein in the formula (VI), Et represents an ethyl group.)

[Chem 8]

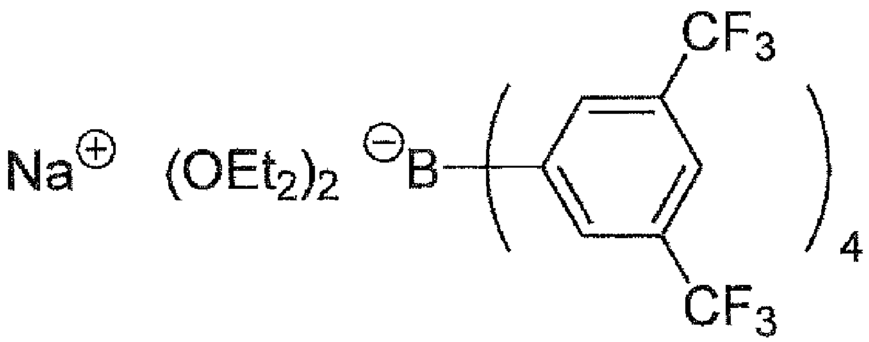

(VII)

(wherein in the formula (VII), Et represents an ethyl group.)

Specific examples of the borane compound as an example of the ionized ionic compound include: decaborane; salts of anions such as bis[tri(n-butyl)ammonium]nonaborate, bis[tri(n-butyl)ammonium]decaborate, bis[tri(n-butyl)ammonium]undecaborate, bis[tri(n-butyl)ammonium]dodecaborate, bis[tri(n-butyl)ammonium]decachlorodecaborate, and bis[tri(n-butyl)ammonium]dodecachlorododecaborate; and

salts of metal borane anions such as tri(n-butyl)ammoniumbis(dodecahydride dodecaborate)cobaltate (III), and bis[tri(n-butyl)ammonium]bis(dodecahydride dodecaborate)nickelate (III).

Specific examples of the carborane compound as an example of the ionized ionic compound include: salts of anions such as 4-carbanonaborane, 1,3-dicarbanonaborane, 6,9-dicarbadecaborane, dodecahydride-1-phenyl-1,3-dicarbanonaborane, dodecahydride-1-methyl-1,3-dicarbanonaborane, undecahydride-1,3-dimethyl-1,3-dicarbanonaborane, 7,8-dicarbaundecaborane, 2,7-dicarbaundecaborane, undecahydride-7,8-dimethyl-7,8-dicarbaundecaborane, dodecahydride-11-methyl-2,7-dicarbaundecaborane, tri(n-butyl)ammonium 1-carbadecaborate, tri(n-butyl)ammonium 1-carbaundecaborate, tri(n-butyl)ammonium 1-carbadodecaborate, tri(n-butyl)ammonium 1-trimethylsilyl-1-carbadecaborate, tri(n-butyl)ammoniumbromo-1-carbadodecaborate, tri(n-butyl)ammonium 6-carbadecaborate, tri(n-butyl)ammonium 6-carbaundecaborate, tri(n-butyl)ammonium 7-carbaundecaborate, tri(n-butyl)ammonium 7,8-dicarbaundecaborate, tri(n-butyl)ammonium 2,9-dicarbaundecaborate, tri(n-butyl)ammoniumdodecahydride-8-methyl-7,9-dicarbaundecab orate, tri(n-butyl)ammoniumundecahydride-8-ethyl-7,9-dicarbaundecabo rate, tri(n-butyl)ammoniumundecahydride-8-butyl-7,9-dicarbaundecabo rate, tri(n-butyl)ammoniumundecahydride-8-allyl-7,9-dicarbaundecabo rate, tri(n-butyl)ammoniumundecahydride-9-trimethylsilyl-7,8-dicarb aundecaborate, and tri(n-butyl)ammoniumundecahydride-4,6-dibromo-7-carbaundecabo rate; and

salts of metal carborane anions such as tri(n-butyl)ammoniumbis(nonahydride-1,3-dicarbanonaborate)cob altate (III), tri(n-butyl)ammoniumbis(undecahydride-7,8-dicarbaundecaborate )ferrate (III), tri(n-butyl)ammoniumbis(undecahydride-7,8-dicarbaundecaborate )cobaltate (III), tri(n-butyl)ammoniumbis(undecahydride-7,8-dicarbaundecaborate )nickelate (III), tri(n-butyl)ammoniumbis(undecahydride-7,8-dicarbaundecaborate )cuprate (III), tri(n-butyl)ammoniumbis(undecahydride-7,8-dicarbaundecaborate )aurate (III), tri(n-butyl)ammoniumbis(nonahydride-7,8-dimethyl-7,8-dicarbau ndecaborate)ferrate (III), tri(n-butyl)ammoniumbis(nonahydride-7,8-dimethyl-7,8-dicarbau ndecaborate)chromate (III), tri(n-butyl)ammoniumbis(tribromooctahydride-7,8-dicarbaundeca borate)cobaltate (III), tris[tri(n-butyl)ammonium]bis(undecahydride-7-carbaundecabora te)chromate (III), bis[tri(n-butyl)ammonium]bis(undecahydride-7-carbaundecaborat e)manganate (IV), bis[tri(n-butyl)ammonium]bis(undecahydride-7-carbaundecaborat e)cobaltate (III), and bis[tri(n-butyl)ammonium]bis(undecahydride-7-carbaundecaborat e)nickelate (IV).

The heteropoly compound as an example of the ionized ionic compound is a compound including an atom selected from silicon, phosphorus, titanium, germanium, arsenic and tin, and one or more than two kinds of atoms selected from vanadium, niobium, molybdenum and tungsten. Specific examples thereof include phosphovanadic acid, germanovanadic acid, arsenovanadic acid, phosphoniobic acid, germanoniobic acid, siliconomolybdic acid, phosphomolybdic acid, titanomolybdic acid, germanomolybdic acid, arsenomolybdic acid, stannomolybdic acid, phosphotungstic acid, germanotungstic acid, stannotungstic acid, phosphomolybdovanadic acid, phosphotungstovanadic acid, germanotaungstovanadic acid, phosphomolybdotungstovanadic acid, germanomolybdotungstovanadic acid, phosphomolybdotungstic acid, and phosphomolybdoniobic acid; and salts of these acids, but not limited thereto. Further, the above mentioned salts may be, for example, a salt of the above mentioned acid with, for example, a metal of Group 1 or 2 in the periodic table, specifically, a salt with lithium, sodium, potassium, rubidium, cesium, beryllium, magnesium, calcium, strontium, or barium; or an organic salt such as triphenylethyl salt.

The isopoly compound as an example of the ionized ionic compound is a compound comprising ions of one type of metal atom selected from vanadium, niobium, molybdenum and tungsten, and it can be considered as a molecular ion species of a metal oxide. Specific examples thereof include vanadic acid, niobic acid molybdic acid, tungstic acid, and salts of these acids, but not limited thereto. Further, the above mentioned salts may be, for example, a salt of the above mentioned acid with, for example, a metal of Group 1 or 2 in the periodic table, specifically, a salt with lithium, sodium, potassium, rubidium, cesium, beryllium, magnesium, calcium, strontium, or barium; or an organic salt such as triphenylethyl salt.

Such an ionized ionic compound may be used singly or two or more kinds thereof may be used.

When the organoaluminum oxy-compound [D2], such as methylaluminoxane as a co-catalyst component, is used in combination, along with the transition metal compound [A], the transition metal compound [B], or the transition metal compound [C], a very high polymerization activity for an olefin compound will be exhibited.

The organometallic compound [D1] is used in such an amount that the molar ratio (D1/M) of the organometallic compound [D1] to the transition metal atoms (M) in the transition metal compound [A], in the step (A) ; the molar ratio (D1/M) of the organometallic compound [D1] to the transition metal atoms (M) in the transition metal compound [B], in the step (B); and the molar ratio (D1/M) of the organometallic compound [D1] to the transition metal atoms (M) in the transition metal compound [C] in the step (C) are each usually from 0.01 to 100000, and preferably from 0.05 to 50000.

The organoaluminum oxy-compound [D2] is used in such an amount that the molar ratio (D2/M) of aluminum atoms in the organoaluminum oxy-compound [D2] to the transition metal atoms (M) in the transition metal compound [A], in the step (A); the molar ratio (D2/M) of aluminum atoms in the organoaluminum oxy-compound [D2] to the transition metal atoms (M) in the transition metal compound [B], in the step (B) ; and the molar ratio (D2/M) of aluminum atoms in the organoaluminum oxy-compound [D2] to the transition metal atoms (M) in the transition metal compound [C] in the step (C) are each usually from 10 to 500000, and preferably from 20 to 100000.

The ionized ionic compound (compound [D3]) is used in such an amount that the molar ratio (D3/M) of the ionized ionic compound to the transition metal atoms (M) in the transition metal compound [A], in the step (A) ; the molar ratio (D3/M) of the ionized ionic compound to the transition metal atoms (M) in the transition metal compound [B], in the step (B); and the molar ratio (D3/M) of the ionized ionic compound to the transition metal atoms (M) in the transition metal compound [C] in the step (C) are each usually from 1 to 10, and preferably from 1 to 5.

<Step (D)>

The method for producing the resin (B) may include, as required, a step (D) of recovering the polymer produced in each step after the step (A), (B), or (C). The step (D) is a step of separating the organic solvents used in the step (A), (B) or (C) to recover the resulting polymer and shaping the recovered polymer into a product form. The step (D) is not particularly limited as long as it is an existing process of producing a polyolefin resin, including, for example, concentration of solvents, extrusion degassing, or pelletizing.

[Other components]

The resin (B) can include, for example, other resins, rubbers, and/or fillers to the extent that the object of the present invention is not impaired. The resin (B) can also include additives such as a weathering stabilizer, a heat stabilizer, an antistatic agent, an anti-slip agent, an anti-blocking agent, an antifogging agent, a lubricant, a pigment, a dye, a plasticizer, an anti-aging agent, a hydrochloric acid absorbent, an antioxidant, and/or a crystal nucleating agent. The added amounts of additives such as other resins, other rubbers, fillers, and additives are not particularly limited as long as the object of the present invention is not impaired. In an exemplary embodiment, for example, an additive is included in an amount of 50% by weight or less, preferably 30% by weight or less, and more preferably 10% by weight or less of the resin (B).

[Ethylene/α-olefin copolymer (C)]

The ethylene/α-olefin (having 3 or more carbon atoms) copolymer (C) is a copolymer obtained by copolymerizing ethylene and α-olefin, which is preferably a polymer having rubber elasticity at room temperature. As the composition of the present invention comprises, as required, a given amount of the copolymer (C), the impact resistance and elongation at break at low temperatures are improved.

Examples of α-olefins having 3 or more carbon atoms and serving as raw materials of the copolymer (C) include propylene, 1-butene, 1-pentene, 1-hexene, 1-octene, 1-decene, 2-methyl-1-propene, 3-methyl-1-pentene, 4-methyl-1-pentene, and 5-methyl-1-hexene. Among these α-olefins, α-olefins having from 3 to 20 carbon atoms such as propylene, 1-butene, 1-pentene, 1-hexene, 1-octene, 1-decene, 2-methyl-1-propene, 3-methyl-1-pentene, 4-methyl-1-pentene, and 5-methyl-1-hexene are preferred, and α-olefins having from 3 to 8 carbon atoms such as propylene, 1-butene, 1-pentene, 1-hexene, 1-octene, 2-methyl-1-propene, 3-methyl-1-pentene, 4-methyl-1-pentene, and 5-methyl-1-hexene are more preferred. These α-olefins may be used singly or two or more kinds thereof may be used.

The content of structural units derived from ethylene in the copolymer (C) is preferably from 30 to 95 mol% and more preferably from 50 to 90 mol%, and the content of structural units derived from α-olefin having 3 or more carbon atoms is preferably from 5 to 70 mol% and more preferably from 10 to 50 mol%. Note that the sum of the content of structural units derived from ethylene and the content of structural units derived form α-olefin is determined to be 100 mol%.

Although MFR of the copolymer (C) measured at 190°C (ASTM D1238E, load of 2.16 kg) is not limited to a particular value as long as it achieves the effects of the present invention, it is preferably from 0.01 to 50 g/10 min, more preferably from 0.05 to 45 g/10 min, and still more preferably 0.1 to 40 g/10 min.

The composition of the present invention which has better liquidity and impact resistance can be obtained by using the copolymer (C) having MFR within the above mentioned range, which is preferable. When a copolymer having MFR of less than 0.01 g/10 min, it might become difficult to mold the obtained composition. When the MFR exceeds 50 g/10 min, the molecular weight of the polymer (C) might be decreased. Therefore, the use of such a copolymer might cause a significant decrease in the impact resistance of the resulting composition.

Regarding the copolymer (C), the melting point (Tm) as measured by DSC is usually less than 100°C or substantially no melting point peak is observed by DSC. Preferably, the melting point (Tm) is preferably 95°C or less or substantially no melting point peak is observed by DSC. More preferably, substantially no melting point peak is observed by DSC.

DSC can be measured by, for example, the method described above. In addition, when substantially no melting point peak is observed by DSC, it means that the heat of fusion ΔH (unit: J/g) as measured by DSC is not observed substantially. Specifically, for example, the crystal melting peak with a heat of fusion of 1 J/g or more is not observed within the range of from -150°C to 200°C.

Examples of the copolymer (C) include an ethylene/1-butene copolymer, an ethylene/1-hexene copolymer, and an ethylene/1-octene copolymer. When an ethylene/1-butene copolymer and an ethylene/1-octene copolymer are used, the composition of the present invention having particularly excellent impact resistance and elongation at break at low temperatures can be obtained, which is more preferable.

The copolymer (C) may be used singly or in combination of two or more kinds thereof.

[Other components]

In addition to the resin (A), the resin (B), and the copolymer (C), a variety of additives may be appropriately blended in the composition of the present invention, as required, to an extent that the effects of the present invention are not impaired.

Examples of the additives include a softener (D), and a filler (E). In addition, examples of the additives include known additives used in the field of polyolefin, such as: rubbers other than the resin (B) and the copolymer (C) (for example, polyisobutylenes, butyl rubbers, propylene elastomers such as propylene·ethylene copolymer rubber, propylene·butene copolymer rubber, and propylene·butene·ethylene copolymer rubber, ethylene elastomers such as ethylene/propylene copolymer rubber, styrene elastomers such as styrene·butadiene·styrene block polymer, styrene·isoprene·styrene block polymer, styrene·isobutylene·styrene block polymer, and hydrogenated thereof); thermosetting resins and resins other than a polymer (A), such as thermoplastic resins such as polyolefin; heat stabilizers; anti-aging agents; light stabilizers, weathering stabilizers; antistatic agents; metal soaps; aliphatic amides; and lubricants such as wax.

These additives may be used singly or two or more kinds thereof may be used.

In addition, the blending amounts of additives other than the additives particularly mentioned herein are not limited to particular values as long as the effects of the present invention are achieved, and are each in the order of usually 0.0001 to 10 parts by weight, preferably 0.01 to 5 parts by weight, relative to 100 parts by weight of the resin (A), the resin (B), and the copolymer (C).

• Softener (D)

As the softener (D), softeners usually used for rubber can be used.

Examples of softeners (D) include petroleum softeners such as process oil, lubricating oil, paraffin oil, liquid paraffin, petroleum asphalt, and Vaseline; coal tar softeners such as coal tar and coal tar pitch; fatty oil softeners such as castor oil, linseed oil, rapeseed oil, soybean oil, and coconut oil; tall oil; substitute (factice); wax such as beeswax, carnauba wax, and lanolin; fatty acids or fatty acid salts such as ricinoleic acid, palmitic acid, stearic acid, barium stearate, calcium stearate, and zinc laurate; naphthenic acid; pine oil, rosin and derivatives thereof; synthetic polymer materials such as terpene resins, petroleum resins, atactic polypropylene, and coumarone indene resins; ester softeners such as dioctyl phthalate, dioctyl adipate, and dioctyl sebacate; microcrystalline wax, liquid polybutadiene, modified liquid polybutadiene, liquid thiokol, and hydrocarbon synthetic lubricating oil.

The amounts of these softeners (D) to be used are usually from 1 to 100 parts by weight and preferably from 1.5 to 80 parts by weight, relative to 100 parts by weight in total of the resin (A), the resin (B), and the copolymer (C), but are not particularly limited thereto as long as the effects of the present invention are achieved. When the softener (D) is used in such an amount, the composition of the present invention has more excellent fluidity during the manufacturing and molding thereof, does not allow the mechanical properties of the obtained molded article to be easily lowered, and also results in the obtained molded article having an excellent heat resistance and heat aging resistance.

• Filler (E)

Examples of fillers (E) include carbon black, calcium carbonate, calcium silicate, clay, kaolin, talc, silica, diatomaceous earth, mica powder, asbestos, alumina, barium sulfate, aluminum sulfate, calcium sulfate, basic magnesium carbonate, molybdenum disulfide, graphite, glass fiber, glass sphere, shirasu balloon, basic magnesium sulfate whisker, calcium titanate whisker, and aluminum borate whisker. Among these, carbon black, calcium carbonate, clay, and kaolin are preferable, and above all, carbon black is particularly preferable.

The amounts of these fillers (E) to be used are usually not more than 5 parts by weight, preferably from 0.1 to 5 parts by weight, and more preferably from 1 to 3 parts by weight, relative to 100 parts by weight in total of the resin (A), the resin (B), and the copolymer (C), but are not particularly limited thereto as long as the effects of the present invention are achieved.

For the purpose of obtaining the composition of the present invention having better low temperature properties, a styrene-based rubber (e.g., SEBS) may be blended in the composition of the present invention.

In order to achieve low temperature properties, the use of a styrene rubber is effective. However, since such a styrene rubber is expensive, by replacing the styrene rubber by the resin (B) to decrease the amount of the styrene rubber to be blended, it is possible to easily obtain a composition having low temperature properties comparable or superior to those of the conventional compositions.

When a rubber other than the resin (B) and the copolymer (C) is used, the rubber is used in an amount of usually 1 to 200 parts by weight and preferably 3 to 150 parts by weight, relative to 100 parts by weight in total of the polymer (A), the resin (B), and the copolymer (C).

[Method for producing thermoplastic elastomer composition]

The composition of the present invention is obtained by mixing the resin (A), the resin (B), the copolymer (C), and as required, an additive to be blended to form a mixture, for which the weight ratio of the resin (A)/(the resin (B) + the copolymer (C)) is 70/30 to 30/70, in the absence of a cross-linking agent and preferably dynamically heat-treating the mixture in the absence of a cross-linking agent. The expression "dynamically heat-treating" used herein refers to kneading the mixture in the molten state.

Dynamic heat treatment is preferably carried out in a closed type device, and preferably carried out in an inert gas atmosphere such as nitrogen and carbon dioxide. The thermal treatment temperature is in the range of usually the melting point of the resin (A) to 300°C, preferably 150 to 280°C, more preferably 170 to 270°C. The kneading time is usually 0.25 to 20 minutes, preferably 0.5 to 10 minutes. In addition, the added shearing force is in the range of usually 10 to 100000 $sec^{-1}$, preferably 100 to 50000 $sec^{-1}$, preferably 1000 to 10000 $sec^{-1}$, further preferably 2000 to 7000 $sec^{-1}$, as the highest shear rate.

Examples of kneading devices in kneading include mixing rolls, intensive mixers (for example, Banbury mixers, kneaders), uniaxial extruders, and biaxial extruders. As these kneading devices, closed type devices are preferable.

<<Molded article and application>>

The composition of the present invention and a molded article obtained from the composition are excellent in impact resistance and elongation at break at low temperatures.

Accordingly, the composition of the present invention and a molded article obtained from the composition can be suitably used for, for example, sealing materials used at low temperatures such as packing for refrigerators, automobile parts, industrial machinery parts, electronic/electric device parts, or building materials. The composition of the present invention and a molded article obtained from the composition can be suitably used particularly for applications of automobile parts that are required to have impact resistance and elongation at break at low temperatures, including automobile interior parts such as automobile interior skin materials and automobile airbag covers, and automobile exterior parts such as mud guards, spoiler lips, fender liners.

[Automobile interior skin material]

Specific examples of an automobile interior skin material according to one embodiment of the present invention include the following materials i) to iii).

i) For example instrument panel skin, door skin, ceiling skin, and console skin, which are processed by vacuum molding or stamping molding of a sheet-like molded article obtained by extrusion molding or calendar molding of the composition of the present invention

ii) For example instrument panel skin, door skin, ceiling skin, and console skin, which are processed by powder slush molding of a powder with a particle size of 1.0 mm or less obtained by pulverizing the composition of the present invention

iii) A variety of skins such as handle skin, console skin, armrest skin, shift knob skin, parking lever grip skin, assist grip skin, and seat adjustment grip skin, which are molded or processed by injection molding of the composition of the present invention. In this case, it is also possible to integrally mold a substrate such as an olefin resin and the skin by sequential injection molding or simultaneous injection molding of an olefin resin such as polypropylene and the skin.

[Airbag cover]

An airbag cover in one embodiment of the present invention is a shatterproof cover resistant to abnormal destruction within a wide range of temperatures ranging from low temperatures to high temperatures.

The airbag cover is molded by a known molding method such as injection molding or, as required, a variety of molding methods such as gas injection molding, extrusion compression molding, and short-shot foaming molding.

In addition, it is also possible to produce the airbag cover by integrally molding the composition of the present invention and a substrate layer such as an instrument panel by, for example, two color molding or insert molding. According to such a method, a substrate layer and the composition of the present invention are bonded to each other by thermal fusion upon integral molding without the use of an adhesive. Molding is carried out at a temperature of, for example, from 170°C to 260°C.

The airbag cover is used for, for example, a driver seat airbag cover, a passenger seat airbag cover, a side airbag cover, a knee airbag cover, or a rear window airbag cover.

Examples

The present invention will be described below in more detail with reference to Examples, but the present invention is not to be limited to these Examples.

<Method for measuring physical properties of resins obtained in Production Examples 1 to 6>

(1) Measurement of melting temperature (Tm) and heat of fusion ΔH

Melting temperatures (Tm) and heats of fusion ΔH were obtained by carrying out a DSC measurement under the following conditions.

Using a differential scanning calorimeter [RDC 220 manufactured by Seiko Instruments Inc.], about 10 mg of a sample was heated from 30°C to 200°C at a temperature rise rate of 50°C/min under a nitrogen atmosphere, and maintained at the temperature for 10 minutes. Then the sample was cooled to 30 °C at a temperature decrease rate of 10°C/min, and maintained at the temperature for 5 minutes, followed by heating to 200°C at a temperature rise rate of 10°C/min. An endothermic peak observed within the range of 60°C or more at the second temperature elevation was designated as the melting peak and the temperature thereof (60°C or more) was obtained as the melting temperature (Tm).

The heat of fusion ΔH was obtained by calculating the area of the above mentioned melting peak. When multiple melting peaks were observed, the heat of fusion ΔH was obtained by calculating the entire area of the melting peaks.

(2) Measurement of glass transition temperature (Tg)

The glass transition temperature (Tg) was measured by DSC under the following conditions.

Using a differential scanning calorimeter [RDC 220 manufactured by Seiko Instruments Inc.], about 10 mg of a sample was heated from 30°C to 200°C at a temperature rise rate of 50°C/min under a nitrogen atmosphere, and maintained at the temperature for 10 minutes. Then the sample was cooled to -100°C at a temperature decrease rate of 10°C/min, and maintained at the temperature for 5 minutes, followed by heating to 200°C at a temperature rise rate of 10°C/min. The DSC curve is bent due to changes in specific heat at the second temperature elevation. A temperature observed at the intersection between the tangent line of the baseline on the lower temperature side of the bend and the tangent line at a point having a maximum inclination in the bent portion was defined as the glass transition temperature (Tg).

(3) Measurement of orthodichlorobenzene-soluble component

The percentage (E value) (wt%) of an orthodichlorobenzene-soluble component at 20°C or lower was obtained by performing CFC measurement under the following conditions.

Apparatus: cross-fractionation chromatograph, CFC2 (Polymer ChAR), Detector (built-in) : infrared spectrophotometer $IR^4$ (Polymer ChAR), Detection wavelength: 3.42 μm (2,920 $cm^{-1}$), fixed, Sample concentration: 120 mg/30 mL, Injection volume: 0.5 mL, Temperature decrease time: 1.0°C/min, Elution segment: 4.0°C interval (-20°C to 140°C), GPC column: Shodex HT-806M × 3 columns (Showa Denko Co., Ltd.), GPC column temperature: 140°C, GPC column calibration: monodisperse polystyrene (Tosoh Corporation), Molecular weight calibration method: universal calibration method (in terms of polystyrene), Mobile phase: orthodichlorobenzene (dibutylhydroxytoluene (BHT) added), and Flow rate: 1.0 mL/min.

(4) Elastic modulus measurement (tensile test)

The elastic modulus was measured in accordance with ASTM D638 using a test specimen obtained by press-molding each obtained resin at 200°C for 5 minutes.

(5) $^{13}C$-NMR measurement

The $^{13}C$-NMR measurement was carried out under the following conditions, for the purpose of analyzing the composition of the main chain (requirement (i)) and confirming the number of methyl branches and the number of grafts of the side chain (macromonomer) (requirement (v)).

Note that the number of methyl branches is the number of methyl branches per 1000 carbon atoms in the side-chain polymer molecular chain, and the number of grafts is the number of side chains per 1000 carbon atoms in the main-chain polymer molecular chain.

Apparatus: AVANCE III 500 CryoProbe Prodigy type nuclear magnetic resonance apparatus manufactured by

Bruker Biospin GmbH, Nucleus measured: $^{13}C$ (125 MHz), Measurement mode: single pulse proton broadband decoupling, Pulse width: 45° (5.00 μ sec), Number of points: 64 k, Measurement range: 250 ppm (-55 to 195 ppm), Repetition time: 5.5 sec, Number of scans: 512 times, Solvent for measurement: o-dichlorobenzene / benzene-$d_6$ (4/1 v/v), Sample concentration: ca. 60 mg/0.6 mL, Measurement temperature: 120°C, Window function: exponential (BF: 1.0 Hz), and Chemical shift reference: benzene-$d_6$ (128.0 ppm).

(6) GPC analysis

The GPC analysis was carried out for the purpose of analyzing the molecular weight of the polymer (Mw, Mn) and estimating the amount of the remaining macromonomer under the following conditions.

Apparatus: Alliance GPC model 2000 manufactured by Waters Corporation, Column: 2 columns of TSKgel GMH6-HT and 2 columns of TSKgel GMH6-HTL (inner diameter: 7.5 mm; length: 30 cm; both manufactured by Tosoh Corporation), Column temperature: 140°C, Mobile phase: o-dichlorobenzene (containing 0.025% BHT), Detector: differential refractometer, Flow rate: 1.0 mL/min, Sample concentration: 0.15% (w/v), Injection volume: 0.5 mL, Sampling time interval: 1 sec, and Column calibration: monodisperse polystyrene (manufactured by Tosoh Corporation).

(7) Measurement of intrinsic viscosity ([η][dl/g])

The intrinsic viscosity was measured using a decalin solvent at 135°C.

(8) Melt flow rate (MFR [g/10 min])

The melt flow rate was measured with a load of 2.16 kg in accordance with ASTM D1238E. The measurement temperature was set to 190°C.

(9) Amount of grafted polymer [GP] in resin (wt%)

The amount of the grafted polymer [GP] (wt%) in the resin obtained in each Production Example was estimated, provided that a value obtained by subtracting the weight ratio (wt%) of the macromonomer remaining in the resin calculated by GPC analysis and the weight ratio (wt%) of the ethylene/α-olefin copolymer having no or substantially no side chain estimated based on the ratio of the orthodichlorobenzene-soluble component at 20°C or less from a total amount of 100 wt% was determined to be the minimum value.

(10) A Value

The A value was calculated by the following relational equation (Eq-1), provided that the melt flow rate (MFR) of the resin obtained in each Production Example, which was determined at 190°C with a load of 2.16 kg in accordance with ASTM D1238E, was M (g/10 min), and the intrinsic viscosity [η] determined in decalin at 135°C was H(dl/g).

$$A = M/\exp(-3.3H) \quad \text{(Eq-1)}$$

[Production Example 1] Production of olefin resin (B-1)

A compound (1) represented by the following formula (1) and a compound (2) represented by the following formula (2), used as catalysts, were synthesized by a known method.

A stainless-steel polymerization vessel with an inner volume of 100 L (number of stirring revolutions per minute = 250 rpm; inner temperature: 110°C; polymerization pressure: 1.0 MPa·G) equipped with a stirring blade was continuously supplied with dehydrated and purified hexane at a rate of 23 L/hr, the compound (2) at a rate of 0.0095 mmol/hr, the compound (1) at a rate of 0.0029 mmol/hr, triphenylcarbenium tetrakis (pentafluorophenyl) borate at a rate of 0.049 mmol/hr, and triisobutylaluminum at a rate of 5.0 mmol/hr. Further, the polymerization vessel was continuously supplied with butene, ethylene, and hydrogen such that the ratio of butene/ethylene was 0.33 (molar ratio) and the ratio of hydrogen/ethylene was 0.040 (molar ratio) in the gas composition in the gas phase in the polymerization vessel. The generated polymerization solution was continuously discharged via an outlet provided on the side wall portion of the polymerization vessel while the degree of liquid level control valve opening was controlled to maintain an inner volume of the solution in the polymerization vessel at 28 L. The obtained polymerization solution was introduced into a heater and heated to 180°C, methanol was added as a catalyst deactivating agent at a rate of 80 mL per hour to terminate

polymerization, and the polymerization solution was continuously transferred to a step of removing volatile elements under reduced pressure for drying, thereby obtaining an olefin resin (B-1) at a production rate of 4.1 kg/hr.

The analysis results of the obtained olefin resin (B-1) are shown in Table 1.

[Chem 9]

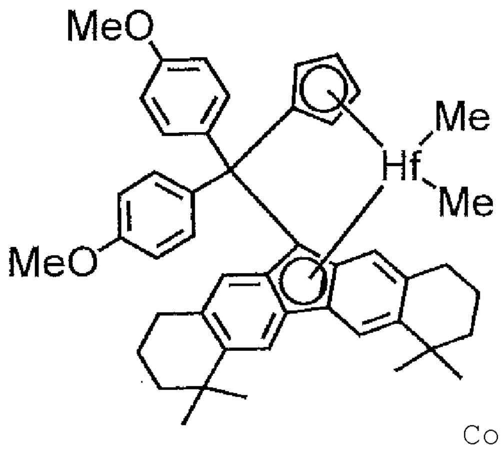

Compound (1)

[Chem 10]

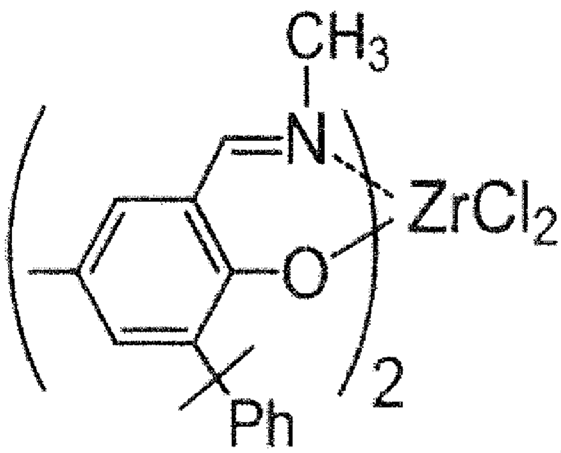

Compound (2)

[Production Example 2] Production of olefin resin (B-2)

A stainless-steel polymerization vessel with an inner volume of 100 L (number of stirring revolutions per minute = 250 rpm; inner temperature: 110°C; polymerization pressure: 0.6 MPa·G) equipped with a stirring blade was continuously supplied with dehydrated and purified hexane at a rate of 24 L/hr, the compound (2) at a rate of 0.040 mmol/hr, the compound (1) at a rate of 0.0080 mmol/hr, triphenylcarbenium tetrakis (pentafluorophenyl) borate at a rate of 0.192 mmol/hr, and triisobutylaluminum at a rate of 5.0 mmol/hr. Further, the polymerization vessel was continuously supplied with butene, ethylene, and hydrogen such that the ratio of butene/ethylene was 0.47 (molar ratio) and the ratio of hydrogen/ethylene was 0.067 (molar ratio) in the gas composition in the gas phase in the polymerization vessel. The generated polymerization solution was continuously discharged via an outlet provided on the side wall portion of the polymerization vessel while the degree of liquid level control valve opening was controlled to maintain an inner volume of the solution in the polymerization vessel at 28 L. The obtained polymerization solution was introduced into a heater and heated to 180°C, methanol was added as a catalyst deactivating agent at a rate of 80 mL per hour to terminate polymerization, and the polymerization solution was continuously transferred to a step of removing volatile elements under reduced pressure for drying, thereby obtaining an olefin resin (B-2) at a production rate of 4.2 kg/hr.

The analysis results of the obtained olefin resin (B-2) are shown in Table 1.

[Production Example 3] Production Example of olefin polymer (C-1)

A stainless-steel polymerization vessel with an inner volume of 100 L (number of stirring revolutions per minute = 250 rpm; inner temperature: 110°C; polymerization pressure: 1.0 MPa·G) equipped with a stirring blade was continuously supplied with dehydrated and purified hexane at a rate of 23 L/hr, the compound (1) at a rate of 0.0078 mmol/hr, triphenylcarbenium tetrakis (pentafluorophenyl) borate at a rate of 0.031 mmol/hr, and triisobutylaluminum at a rate of 2.3 mmol/hr. Further, the polymerization vessel was continuously supplied with butene, ethylene, and hydrogen such that the ratio of butene/ethylene was 0.23 (molar ratio) and the ratio of hydrogen/ethylene was 0.040 (molar ratio) in the gas composition in the gas phase in the polymerization vessel. The generated polymerization solution was continuously discharged via an outlet provided on the side wall portion of the polymerization vessel while the degree of liquid level control valve opening was controlled to maintain an inner volume of the solution in the polymerization vessel at 28 L. The obtained polymerization solution was introduced into a heater and heated to 180°C, methanol was added as a catalyst deactivating agent at a rate of 80 mL per hour to terminate polymerization, and the polymerization solution was continuously transferred to a step of removing volatile elements under reduced pressure for drying, thereby obtaining an olefin polymer (C-1) at a production rate of 3.1 kg/hr.
The analysis results of the obtained olefin polymer (C-1) are shown in Table 1.

[Production Example 4] Production of olefin polymer (C-2)

A stainless-steel polymerization vessel with an inner volume of 100 L (number of stirring revolutions per minute = 250 rpm; inner temperature: 110°C; polymerization pressure: 1.0 MPa·G) equipped with a stirring blade was continuously supplied with dehydrated and purified hexane at a rate of 23 L/hr, the compound (1) at a rate of 0.0078 mmol/hr, triphenylcarbenium tetrakis (pentafluorophenyl) borate at a rate of 0.031 mmol/hr, and triisobutylaluminum at a rate of 2.3 mmol/hr. Further, the polymerization vessel was continuously supplied with butene, ethylene, and hydrogen such that the ratio of butene/ethylene was 0.18 (molar ratio) and the ratio of hydrogen/ethylene was 0.070 (molar ratio) in the gas composition in the gas phase in the polymerization vessel. The generated polymerization solution was continuously discharged via an outlet provided on the side wall portion of the polymerization vessel while the degree of liquid level control valve opening was controlled to maintain an inner volume of the solution in the polymerization vessel at 28 L. The obtained polymerization solution was introduced into a heater and heated to 180°C, methanol was added as a catalyst deactivating agent at a rate of 80 mL per hour to terminate polymerization, and the polymerization solution was continuously transferred to a step of removing volatile elements under reduced pressure for drying, thereby obtaining an olefin polymer (C-2) at a production rate of 3.1 kg/hr.
The analysis results of the obtained olefin polymer (C-2) are shown in Table 1.

[Production Example 5] Production of olefin polymer (C-3)

A stainless-steel polymerization vessel with an inner volume of 100 L (number of stirring revolutions per minute = 250 rpm; inner temperature: 110°C; polymerization pressure: 1.0 MPa·G) equipped with a stirring blade was continuously supplied with dehydrated and purified hexane at a rate of 23 L/hr, the compound (1) at a rate of 0.0053 mmol/hr, triphenylcarbenium tetrakis (pentafluorophenyl) borate at a rate of 0.021 mmol/hr, and triisobutylaluminum at a rate of 2.2 mmol/hr. Further, the polymerization vessel was continuously supplied with butene, ethylene, and hydrogen such that the ratio of butene/ethylene was 0.23 (molar ratio) and the ratio of hydrogen/ethylene was 0.017 (molar ratio) in the gas composition in the gas phase in the polymerization vessel. The generated polymerization solution was continuously discharged via an outlet provided on the side wall portion of the polymerization vessel while the degree of liquid level control valve opening was controlled to maintain an inner volume of the solution in the polymerization vessel at 28 L. The obtained polymerization solution was introduced into a heater and heated to 180°C, methanol was added as a catalyst deactivating agent at a rate of 80 mL per hour to terminate polymerization, and the polymerization solution was continuously transferred to a step of removing volatile elements under reduced pressure for drying, thereby obtaining an olefin polymer (C-3) at a production rate of 2.1 kg/hr.
The analysis results of the obtained olefin polymer (C-3) are shown in Table 1.

[Production Example 6] Production of olefin polymer (C-4)

A stainless-steel polymerization vessel with an inner volume of 100 L (number of stirring revolutions per minute = 250 rpm; inner temperature: 110°C; polymerization pressure: 1.0 MPa·G) equipped with a stirring blade was continuously supplied with dehydrated and purified hexane at a rate of 23 L/hr, the compound (1) at a rate of 0.0068 mmol/hr, triphenylcarbenium tetrakis (pentafluorophenyl) borate at a rate of 0.027 mmol/hr, and triisobutylaluminum at a rate of 2.3 mmol/hr. Further, the polymerization vessel was continuously supplied with butene, ethylene, and hydrogen such

that the ratio of butene/ethylene was 0.23 (molar ratio) and the ratio of hydrogen/ethylene was 0.027 (molar ratio) in the gas composition in the gas phase in the polymerization vessel. The generated polymerization solution was continuously discharged via an outlet provided on the side wall portion of the polymerization vessel while the degree of liquid level control valve opening was controlled to maintain an inner volume of the solution in the polymerization vessel at 28 L. The obtained polymerization solution was introduced into a heater and heated to 180°C, methanol was added as a catalyst deactivating agent at a rate of 80 mL per hour to terminate polymerization, and the polymerization solution was continuously transferred to a step of removing volatile elements under reduced pressure for drying, thereby obtaining an olefin polymer (C-4) at a production rate of 2.7 kg/hr.

The analysis results of the obtained olefin polymer (C-4) are shown in Table 1.

[Table 1]

| | Production Example 1 | Production Example 2 | Production Example 3 | Production Example 4 | Production Example 5 | Production Example 6 |
|---|---|---|---|---|---|---|
| Symbol for olefin resin | B-1 | B-2 | C-1 | C-2 | C-3 | C-4 |
| Temperature of appearing melting peak at 60°C or more Tm (°C) | 114.7 | 111.7 | - | - | - | - |
| Heat of fusion ΔH (J/g) | 33.2 | 32.4 | 0.0 | 0.0 | 0.0 | 0.0 |
| Ratio E of orthodichlorobenzene-soluble component at 20°C or less (wt%) | 12.4 | 30 | 82 | 70 | 81 | 82 |
| Glass transition temperature Tg (°C) | -69.8 | -71.7 | -65.3 | -60.2 | -65.2 | -65.1 |
| Intrinsic viscosity [η] (dl/g) | 1.62 | 1.29 | 1.9 | 2.0 | 2.6 | 2.2 |
| MFR (g/10 min) | 0.36 | 2.0 | 1.0 | 1.0 | 0.2 | 0.5 |
| A value | 78 | 145 | 549 | 765 | 1122 | 849 |
| Elastic modulus (MPa) | 23.7 | 11.7 | n.d. | n.d. | n.d. | n.d. |

(continued)

| | | | Production Example 1 | Production Example 2 | Production Example 3 | Production Example 4 | Production Example 5 | Production Example 6 |
|---|---|---|---|---|---|---|---|---|
| Structure of grafted polymer [GP] | Main chain: ethylene/ α-olefin copolymer unit | α-olefin type | 1-butene | 1-butene | 1-butene | 1-butene | 1-butene | 1-butene |
| | | α-olefin composition (mol%) | 24 | 30 | 19 | 15 | 19 | 19 |
| | | Weight average molecular weight | 90000 | 70000 | 90000 | 100000 | 150000 | 120000 |
| | Side chain: ethylene polymer unit | Weight average molecular weight | 2800 | 2800 | - | - | - | - |
| | | Number of grafts (/ 1000C) | 1.3 | 1.8 | - | - | - | - |
| | | Number of methyl branches (/ 1000C) | <0.05 | <0.05 | - | - | - | - |
| Weight ratio of remaining macromonomer (wt%) | | | 12 | 7.6 | - | - | - | - |
| Weight ratio of olefin polymer [GP] (wt%) | | | >75 | >62 | 0 | 0 | 0 | 0 |

<Crystalline olefin resin (A)>

The following resin (A-1) was used as the crystalline olefin resin (A).

(A-1) block polypropylene (melting point: 164°C, MFR (ISO1133, 230°C, load of 2.16 kg) :64 g/10 min), density :0.90 g/$cm^3$)

<Olefin resin (B)>

The copolymer obtained in Production Example 1 or 2 was used as the olefin resin (B).
Note that the copolymer obtained in Production Example 3 or 4 or DOWLEX (trademark) 2035 (manufactured by The Dow Chemical Company) was used in the Comparative Examples. DOWLEX 2035 is an oligomer having a molecular weight corresponding to an ethylene polymer unit that is a side chain of the olefin resin (B).

<Ethylene/α-olefin copolymer (C)>

The copolymer obtained in Production Examples 5 or 6 was used as the ethylene/α-olefin copolymer (C).

<Method for preparing sample (composition)>

[Examples 1 and 2 and Comparative Examples 1 to 3]

The resins listed in Table 2 were sufficiently mixed at ratios described in Table 2 by a Henschel mixer, and each mixture was kneaded by an extruder (product no. KTX-46, manufactured by Kobe Steel, Ltd.) at a processing rate of 100 kg at 200°C per hour, thereby obtaining pellets of thermoplastic elastomer compositions. The results of measurement of physical properties of the obtained thermoplastic elastomer compositions are shown in Table 2.
As required, Samples for measurement of physical properties were molded using the pellets of the thermoplastic elastomer compositions using an injection molding apparatus (manufactured by Nissei Plastic Industrial Co., Ltd., NEX140), and physical properties were evaluated by the method described below.

<Method for measuring physical properties>

(1) MFR(g/10 min)

MFR was measured at 230°C with a load of 2.16 kg in accordance with ASTM D1238E (unit: g/10 min).

(2) 100% tensile stress, tensile strength at break, tensile elongation at break

Test specimens (JIS 3 dumbbell; thickness: 2 mm) were prepared by injection molding in accordance with JIS K6251, and tensile stress (unit: MPa) upon 100% elongation was measured, and tensile strength at break (tensile strength (unit: MPa)) and tensile elongation at break (unit: %) were measured in an atmosphere at 23°C, -35°C, and -40°C at a tensile rate of 500 mm/min.

(3) Initial flexural modulus

The initial flexural modulus (flexural modulus) was obtained by conducting a bending test under the following conditions in accordance with ASTM D-790.
Test specimen; 3.1 mm (thickness) × 12.5 mm (width)
Span interval: 48 mm; bending rate: 5 mm/min

Measurement temperature: 23°C

(4) Low temperature impact strength (Izod impact strength)

Test specimens (3.2 mm in thickness) each having a notch for Izod impact strength were prepared by injection molding in accordance with ASTM D256, and the state of breakage of each test specimen (NB: non-break; PB: partial break; HB: hinged break; CB: complete break) and impact strength (unit: J/m) were determined at -35°C, -40°C, and -45°C. Note that the value in each pair of parentheses in the column of "Low temperature impact strength" in Table 2 is

a value of impact strength.

(5) Hardness (Shore D)

Hardness was measured using a layered sheet 6 mm in thickness (prepared by layering two injection-molded square plate 3 mm in thickness) by a shore D hardness meter in accordance with JIS K6253. Regarding shore D hardness, the value determined 5 seconds after measurement was obtained.

(6) Molding shrinkage rate

The molding shrinkage rate of the machine direction (MD) and the transverse direction (TD) of the square plate obtained by injection molding was determined in the manner described below, thereby obtaining the absolute value of molding shrinkage difference (LR).

A square plate 3 mm in thickness having scribe lines at 10 mm intervals in the machine direction x 10 mm intervals in the traverse direction were injection-molded. The interval between scribe lines on the square plate maintained at room temperature for 48 hours after molding was measured, thereby obtaining the shrinkage rate.

(7) Moldability of automobile interior skin material and airbag cover

When an automobile interior skin material and an airbag cover were each molded using the compositions obtained in Examples 1 and 2 by a conventional method, they could be easily molded.

[Table 2]

| Blending | Unit | Test conditions | Example 1 | Example 2 | Comparative Example 1 | Comparative Example 2 | Comparative Example 3 |
|---|---|---|---|---|---|---|---|
| A-1 | | | 55 | 55 | 55 | 55 | 55 |
| B-1 | | | 20 | | | | |
| B-2 | | | | 20 | | | |
| C-1 | | | | | | 16 | |
| C-2 | | | | | | | 16 |
| Dowlex 2035 | | | | | 4 | 4 | 4 |
| C-3 | | | 15 | 15 | 15 | 15 | 15 |
| C-4 | | | 10 | 10 | 26 | 10 | 10 |
| | | | | | | | |
| Physical properties | | | | | | | |
| MFR | g/10 min | 230°C, load of 2.16 | 12.5 | 14.1 | 13.2 | 16 | 14.5 |
| 100% tensile stress | MPa | | 12.5 | 12.0 | 12.6 | 12.5 | 12.9 |
| Tensile strength at break (23°C) | MPa | K6251 | 13.0 | 12.5 | 13.4 | 13.4 | 13.7 |
| Tensile elongation at break (23°C) | % | JIS 3 dumbbell | 361 | 390 | 389 | 381 | 338 |
| Tensile strength at break (-35°C) | MPa | K6251 | 26.6 | 25.4 | 28.1 | 28.3 | 28.9 |

(continued)

| Blending | Unit | Test conditions | Example 1 | Example 2 | Comparative Example 1 | Comparative Example 2 | Comparative Example 3 |
|---|---|---|---|---|---|---|---|
| Tensile elongation at break (-35°C) | % | JIS 3 dumbbell | 75 | 74 | 58 | 58 | 52 |
| Tensile strength at break (-40°C) | MPa | K6251 | 28.7 | 27.4 | 30.7 | 30.8 | 31.5 |
| Tensile elongation at break (-40°C) | % | JIS 3 dumbbell | 56 | 76 | 46 | 36 | 47 |
| Initial flexural modulus | MPa | D790 t = 3 mm | 420 | 393 | 433 | 436 | 452 |
| Low temperature impact strength | J/m | Notched -35°C | PB (1110) | PB (1064) | PB (1073) | PB (1038) | PB (1017) |
| | | -40°C | PB (1081) | PB (1076) | PB (1009) | PB (963) | PB (939) |
| | | -45°C | PB (1015) | PB (1035) | CB (182) | CB (219) | CB (151) |
| Hardness shore D | | 5 sec later | 43 | 41 | 44 | 44 | 45 |
| Molding shrinkage rate | % | t = 3 mm MD | 0.76 | 0.62 | 0.50 | 0.57 | 0.57 |
| | | TD | 0.89 | 0.76 | 0.64 | 0.71 | 0.72 |

Table 2 shows that the thermoplastic elastomer compositions of Examples 1 and 2, in which the olefin resin (B) was blended, were excellent in elongation at low temperatures (-35°C and -40°C) and also excellent in impact resistance at low temperatures (especially -45°C) .

It is assumed that these compositions are excellent in the low temperature properties because of the following reason. In other words, it is considered that a fine structure in which the resin (B) and the copolymer (C) are dispersed in the resin (A) is formed in the compositions of Examples 1 and 2, during which the resin (B) acts, for example, as a compatibilizing agentso as to realize a fine dispersion structure or has an effect of reinforcing the interface of each component.

## Claims

**1.** A thermoplastic elastomer composition comprising:

a crystalline olefin resin (A) having a melting point of 100°C or more;
an olefin resin (B) satisfying requirements (B-1) to (B-3); and
an ethylene/α-olefin copolymer (C),
wherein a weight ratio of the resin (B)/the copolymer (C) is from 100/0 to 1/99, and
a weight ratio of the resin (A)/(the resin (B) + the copolymer (C)) is from 70/30 to 30/70:

(B-1) the resin (B) comprises a grafted polymer [GP] having a main chain (MC) composed of an ethylene copolymer and a side chain (SC) composed of an olefin polymer and satisfying requirements (i) and (ii):

(i) the ethylene copolymer constituting the main chain (MC) comprises repeating units derived from ethylene and repeating units derived from at least one α-olefin selected from α-olefins having from 3 to 20 carbon atoms, and the repeating units derived from the α-olefin are contained within a range of

from 10 to 50 mol% with respect to total repeating units contained in the main chain (MC), and
(ii) the side chain (SC) is at least one selected from a side chain (SE) composed of an ethylene polymer and a side chain (SP) composed of a propylene polymer;

(B-2) a melting point as measured by differential scanning calorimetry is within a range of from 60°C to 170°C; and
(B-3) a glass transition temperature as measured by differential scanning calorimetry is within a range of -80°C to -30°C.

**2.** The thermoplastic elastomer composition according to claim 1, which has a flexural modulus of 650 MPa or less as measured in accordance with ASTM D790.

**3.** The thermoplastic elastomer composition according to claim 1 or 2, which comprises 5 parts by weight or less of a filler (E) with respect to a total amount of 100 parts by weight of the crystalline olefin resin (A), the olefin resin (B), and the ethylene/$\alpha$-olefin copolymer (C).

**4.** The thermoplastic elastomer composition according to any one of claims 1 to 3, wherein the melt flow rate of the crystalline olefin resin (A) as measured at 230°C with a load of 2.16 kg in accordance with ISO1133 is from 0.1 to 500 g/10 min.

**5.** The thermoplastic elastomer composition according to any one of claims 1 to 4, wherein the side chain (SC) of the grafted polymer [GP] is the side chain (SE) composed with an ethylene polymer, the side chain (SE) comprises repeating units derived from ethylene and, as required, repeating units derived from at least one selected from $\alpha$-olefins having from 3 to 20 carbon atoms, and a content of the units derived from ethylene is within a range of 95 to 100 mol% with respect to the total repeating units contained in the side chain (SE).

**6.** The thermoplastic elastomer composition according to any one of claims 1 to 5, wherein the olefin resin (B) has a melting peak within a range of 60°C to 130°C as measured by differential scanning calorimetry and a heat of fusion $\Delta$H of 5 to 100 J/g at the melting peak.

**7.** The thermoplastic elastomer composition according to any one of claims 1 to 6, wherein the olefin resin (B) has an E value of 45 wt% or less which is a ratio of an orthodichlorobenzene-soluble component at 20°C or less as measured by cross fractionation chromatography.

**8.** The thermoplastic elastomer composition according to any one of claims 1 to 7, wherein the olefin resin (B) has an intrinsic viscosity of 0.1 to 12 dl/g as measured in decalin at 135°C.

**9.** The thermoplastic elastomer composition according to any one of claims 1 to 8, wherein the ethylene polymer constituting the side chain (SE) has a weight average molecular weight of 500 to 30000.

**10.** The thermoplastic elastomer composition according to any one of claims 1 to 9, wherein side chains of the grafted polymer [GP] exist at an average frequency of 0.5 to 20 side chains per 1000 carbon atoms in the polymer molecular chain of the main chain.

**11.** The thermoplastic elastomer composition according to any one of claims 1 to 10, wherein the olefin resin (B) satisfies requirement (B-7):
(B-7) when a melt flow rate of the olefin resin (B) as measured at 190°C with a load of 2.16 kg in accordance with ASTM D1238E is determined to be M (g/10 min) and an intrinsic viscosity of the olefin resin (B) as measured in decalin at 135°C is determined to be H (dl/g), a value A represented by relational equation (Eq-1) is within the range of 30 to 280:

$$A = M/\exp(-3.3H) \quad \text{(Eq-1)}.$$

**12.** The thermoplastic elastomer composition according to any one of claims 1 to 11, wherein a melt flow rate of the ethylene/$\alpha$-olefin copolymer (C) as measured at 190°C with a load of 2.16 kg in accordance with ASTM D1238E is from 0.01 to 50 g/10 min.

**13.** A method for producing the thermoplastic elastomer composition according to any one of claims 1 to 12, comprising dynamically heat-treating a mixture comprising the resin (A), the resin (B), and the copolymer (C) such that a weight ratio of the resin (A)/(the resin (B) + the copolymer (C)) is from 70/30 to 30/70 in the absence of a cross-linking agent.

**14.** A molded article, comprising the thermoplastic elastomer composition according to any one of claims 1 to 12.

**15.** An automobile part, comprising the thermoplastic elastomer composition according to any one of claims 1 to 12.

**16.** An automobile interior skin material, comprising the thermoplastic elastomer composition according to any one of claims 1 to 12.

**17.** An automobile airbag cover, comprising the thermoplastic elastomer composition according to any one of claims 1 to 12.

**18.** A thermoplastic elastomer composition, comprising:

a crystalline olefin resin (A) having a melting point of 100°C or more;
an olefin resin (B) having structural units derived from ethylene and structural units derived from at least one selected from α-olefins having from 3 to 20 carbon atoms, a glass transition temperature of -110°C to -20°C, and a melt flow rate as measured in accordance with ASTM D1238E at 190°C with a load of 2.16kg of 0.1 to 10 g/10 min; and
an ethylene/α-olefin copolymer (C),
wherein a weight ratio of the resin (B)/the copolymer (C) is from 100/0 to 1/99, and
a weight ratio of the resin (A)/(the resin (B) + the copolymer (C)) is from 70/30 to 30/70, and
wherein the thermoplastic elastomer composition has a flexural modulus as measured in accordance with ASTM D790 of 200 to 1000 MPa and a tensile elongation at break at -40°C as measured in accordance with JIS K6251 of 50% to 600%.

**19.** An automobile interior skin material or an automobile airbag cover, comprising the thermoplastic elastomer composition according to claim 18.

## INTERNATIONAL SEARCH REPORT

International application No.
PCT/JP2017/021302

A. CLASSIFICATION OF SUBJECT MATTER
*C08L23/00*(2006.01)i, *B60R21/215*(2011.01)i, *C08K3/00*(2006.01)i, *C08L23/08*(2006.01)i

According to International Patent Classification (IPC) or to both national classification and IPC

B. FIELDS SEARCHED

Minimum documentation searched (classification system followed by classification symbols)
C08L1/00-101/14, B60R21/00-21/38, C08K3/00-13/08, C08F255/00-255/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | WO 2015/147187 A1 (Mitsui Chemicals, Inc.), 01 October 2015 (01.10.2015), claims 1 to 12; paragraphs [0066], [0086] to [0087], [0207], [0217], [0223]; preparation examples 1 to 2; examples 1 to 19 & US 2017/0096514 A1 claims 1 to 12; paragraphs [0107], [0135] to [0136], [0429], [0442], [0450]; Production examples 1 to 2; examples 1 to 19 & EP 3124514 A1 | 1-4,6-19<br>5 |
| A | WO 2003/008497 A1 (Idemitsu Petrochemical Co., Ltd.), 30 January 2003 (30.01.2003), & US 2004/0176520 A1 & EP 1408080 A1 | 1-19 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 July 2017 (10.07.17) | 18 July 2017 (18.07.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/021302

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-249429 A (Idemitsu Kosan Co., Ltd.), 29 October 2009 (29.10.2009), (Family: none) | 1-19 |
| A | JP 2009-275104 A (Japan Polypropylene Corp.), 26 November 2009 (26.11.2009), (Family: none) | 1-19 |
| P,X | WO 2016/093266 A1 (Mitsui Chemicals, Inc.), 16 June 2016 (16.06.2016), claims 1 to 7; examples 1 to 6 & US 2017/0081509 A1 claims 1 to 8; examples 1 to 6 | 1-19 |
| P,X<br>P,A | JP 2017-66200 A (Mitsui Chemicals, Inc.), 06 April 2017 (06.04.2017), claims 1 to 14; examples 1 to 13 (Family: none) | 1-4,6-19<br>5 |
| P,X<br>P,A | JP 2017-57320 A (Mitsui Chemicals, Inc.), 23 March 2017 (23.03.2017), claims 1 to 7; example 1 (Family: none) | 1-4,6-19<br>5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H4314648 A
- JP H6156178 A
- JP H10279745 A
- JP 2004285237 A
- WO 201446139 A
- JP H6100579 A
- JP 2001525461 A
- JP 2005336091 A
- JP 2009299046 A
- JP H11130807 A
- JP 2008285443 A
- WO 200127124 A
- WO 2004029062 A
- WO 2015122414 A
- WO 2015122415 A
- JP H278687 A
- JP H1501950 A
- JP H1502036 A
- JP H3179005 A
- JP H3179006 A
- JP H3207703 A
- JP H3207704 A
- US 5321106 B


### Non-patent literature cited in the description


- *Macromolecular Rapid Communications,* 2000, 1103
- **RESCONI.** *L. JACS,* 1992, vol. 114, 1025-1032